# EUROPEAN PATENT SPECIFICATION

(11) **EP 1 397 408 B1**
(45) Date of publication and mention of the grant of the patent: **17.10.2007**
(21) Application number: 02737016.2
(22) Date of filing: 21.05.2002
(51) Int. Cl.: C08G 18/67, C08G 18/80, C08G 18/38, C09D 175/16, C03C 25/10, D06P 3/24, C08F 290/14

(54) **COLORED, RADIATION-CURABLE COMPOSITIONS**
FARBIGE STRAHLUNGSHÄRTBARE ZUSAMMENSETZUNGEN
COMPOSITIONS DE COULEUR, DURCISSABLES PAR RAYONNEMENTS

(30) Priority: 01.06.2001 US 870482; 14.02.2002 US 356160 P
(43) Date of publication of application: 17.03.2004
(73) Proprietor: Draka Comteq B.V., 1083 HJ Amsterdam (NL)
(72) Inventor: GREER, Robert, W., Lexington, NC 27295 (US); GANTT, Todd, Warren, Catawba, NC 28609 (US); PURVIS, Michael, B., Hickory, NC 28601 (US); OVERTON, Bob, J., Lenoir, NC 28645 (US)
(74) Representative: Dohmen, Johannes Maria Gerardus
(86) International application number: PCT/US2002/015950
(87) International publication number: WO 2002/098945

(56) References cited:
- EP-A- 0 348 024
- EP-A- 0 432 931
- EP-A- 0 614 099
- WO-A-96/11965
- WO-A-99/38043
- PATENT ABSTRACTS OF JAPAN vol. 016, no. 249 (C-0948), 8 June 1992 (1992-06-08) & JP 04 057817 A (JAPAN SYNTHETIC RUBBER CO LTD;OTHERS: 01), 25 February 1992 (1992-02-25)

## Description

### CROSS-REFERENCE TO RELATED APPLICATION

This application is a continuation-in-part of co-pending application Serial No.
09/870,482, which is a continuation-in-part of co-pending application Serial No. 09/360,951.

This application discloses and claims subject matter from the following applications:
1) Co-pending application Serial No. 09/870,482 filed June 1, 2001
2) Co-pending application Serial No. 09/360,951 filed July 27, 1999;
3) Co-pending PCT application No. PCT/US 01/05814 filed March 16,2001; and
4) Co-pending provisional application Serial No. 60/356,160 filed February 14, 2002.

### BACKGROUND OF THE INVENTION

### Field of the Invention

The present invention relates to colored, radiation-curable compositions for use in a wide variety of applications, including colored, radiation-curable coating compositions for telecommunications elements, such as optical fibers and optical fiber ribbons, and colored, radiation-curable ink compositions for other applications, such as textile, electronics, and printing applications. More particularly, the present invention relates to colored, radiation-curable compositions for producing a cured, colored coating on a substrate, such as a telecommunications element, the cured compositions having an identifying color provided by chromophore-containing compounds that are covalently bonded to other components within the cured composition.

### Description of Related Art

EP 0 432 931 discloses an article having a colour identification system, the article comprising e.g. an optical fibre and a colour identification system which has been applied to said optical fibre, said colour identification system comprising a cured coating composition and a colour identification system including a polymeric dye.

For many years now, optical fibers have been used as a reliable transmission medium in telecommunications cables. Typically, an optical fiber comprises a core, a cladding and one or more coatings applied over the cladding.

One purpose of the coatings is to protect the surface of the optical fiber from mechanical scratches and abrasions typically caused by subsequent handling and use. Another purpose of the coatings is to protect the glass from exposure to moisture. The coating or coatings may also have some influence over the fiber's optical characteristics because the coatings are physically responsive to external mechanical forces and temperature. The coating compositions applied to the optical fiber are typically liquid, radiation-curable compositions. Typically, the coating compositions are cured on the optical fiber by exposing the coating composition to ultraviolet radiation, electron beam radiation or ionizing radiation for a predetermined period of time deemed suitable for effective curing.

Telecommunications cables containing optical fibers come in a variety of configurations. In some cables, the optical fibers are held loosely inside a buffer tube. In other cables, the optical fibers are arranged in a planar array to form an optical fiber ribbon. The planar array is typically encapsulated by one or more radiation-curable matrix material layers. The radiation-curable matrix layers are cured by exposing the matrix material to ultraviolet radiation, electron beam radiation, ionizing radiation or infrared radiation for a predetermined period of time deemed suitable for effective curing.

In a telecommunications cable containing multiple optical fibers, the optical fibers may be distinguished from each other by the use of a color coating layer which has been applied over a coated optical fiber. Colors in the color coating layer are usually obtained by dispersing colored pigment particles in a suitable liquid carrier and applying the liquid carrier over the coating. Alternatively, the optical fibers may be distinguished from each other by the use of a so-called colored primary coating, which is a colored coating applied directly onto an optical fiber.

Unfortunately, the use of pigment particles to provide color in color coatings for optical fibers has presented manufacturing and performance problems. For example, the pigment particles and the liquid carrier tend to gradually separate into two distinct phases. As a result, pigmented color coatings have a relatively short shelf life.

In addition, the phase separation in a pigmented coloring system is further complicated by the concurrent agglomeration of pigment particles. Undesirably, the presence of pigment particle agglomerates in a color coating on a coated optical fiber can induce micro-bending which results in transmission losses.

Typically, a relatively high concentration of pigment material is required to achieve an opaque or translucent ultraviolet radiation-curable color coating. Unfortunately, the required high concentration inhibits the transmission of incident ultraviolet radiation which is necessary to cure the color coating material because the pigments refract, reflect and scatter the incident radiation. The inhibition of the ultraviolet radiation results in a reduction in processing speed of the optical fiber along a manufacturing line and thereby increases production costs. Also, the slow cure speed of pigmented color coatings causes the processing and the cure of these materials to be sensitive to minor changes in the thickness of the color coatings.

The use of dyes to provide color in color coatings has been considered as an alternative to pigment-based color coatings. Dyes have the advantage over pigments of faster curing because the dyes do not scatter the curing radiation, although some dyes may absorb light which could slow curing. Dyes, however, are generally not preferred because they diffuse (bleed) out into common cable filling compounds resulting in a color loss. In an effort to reduce the bleeding, U.S. Patent No. 5,074,643 teaches the use of a polymeric dye in a color coating. The polymeric dyes are macromolecular chromophore-containing molecules that become entrapped in the cross-linked coating network. While the entrapment results in a slowing of the bleeding process, the dyes nevertheless still bleed. Over time, even with the entrapped polymeric dyes, the color imparted to the fibers is likely to be lost and if the color is lost from the fibers, then identification of each of the fibers becomes extremely difficult and time-consuming in the field during fiber-splicing.

The color imparted to the fibers will be lost over time if the dyes themselves lack stability. In particular, the dyes should have sufficient thermal stability and light fastness to impart the desired color for an extended period of time.

If a telecommunications cable has many optical fiber ribbons, it is generally desirable to distinguish one optical fiber ribbon from another by coloring each of the optical fiber ribbons. Typically, color in a colored optical fiber ribbon is obtained in the same way as color is obtained in a color-coated optical fiber. The optical fiber ribbon matrix composition is either provided with pigments or a polymer dye is used. The same problems mentioned above with respect to colored optical fibers apply to colored optical fiber ribbons.

It is desirable to provide a composition that can provide a durable cured color coating that can be used for color coding a telecommunications element, such as an optical fiber, where the coating has the ability to withstand the conditions in a typical operational environment that such elements are typically found. It would also be desirable to provide a composition that can provide a durable cured ink, dye, coating, colorant, etc. that can be used for substrates in other fields, such as textiles, electronics, or printing, where the ink, dye, coating, colorant, etc. has the ability to withstand the conditions in a typical operational environment that such substrates are typically found. The present invention provides such a composition.

### SUMMARY OF THE INVENTION

In one aspect of the present invention, there is provided a chromophore-containing compound, wherein the chromophore-containing compound comprises one or more functional groups that are capable of being reacted to covalently bond the chromophore-containing compound with any another molecule or series of molecules in a radiation-curable composition, such that the chromophore-containing compound is incorporated via covalent bonding into the radiation-cured composition.

In one embodiment of the first aspect of the invention, the chromophore-containing compound includes, as one or more functional groups, one or more radiation-curable groups. The chromophore-containing compound comprising one or more radiation-curable groups becomes covalently bonded by one or more covalent bonds to other constituents of a radiation-curable composition during the curing step.

In a second embodiment of the first aspect of the invention, the chromophore-containing compound is a colored oligomer. For example, there may be provided a chromophore-containing compound comprising a chromophore covalently bonded to or within an oligomeric backbone, such that the chromophore of the chromophore-containing compound is attached to the remainder of the oligomer by one or more covalent bonds. The colored oligomer may include radiation-curable groups that become covalently bonded to other constituents of a radiation-curable composition during the curing step.

In another aspect of the present invention, there is provided a radiation-curable composition comprising a chromophore-containing compound, wherein the chromophore-containing compound comprises one or more functional groups that are capable of reacting to covalently bond the chromophore-containing compound with any another molecule or series of molecules in the radiation-curable composition. Upon being subjected to the appropriate level of radiation, the radiation-curable composition provides a radiation-cured composition having a chromophore-containing compound covalently bonded to other molecules or series of molecules within the radiation-cured composition.

In yet another aspect of the invention, there is provided a color concentrate, or masterbatch, comprising the chromophore-containing compound, wherein the color concentrate or masterbatch is a vehicle for the delivery of the chromophore-containing compound to the particularly desired application or embodiment. There is also provided a method for manufacturing such a color concentrate or masterbatch.

In a further aspect of the present invention, there is provided a telecommunication element having a color-identifying coating thereon, the telecommunication element comprising an elongated communication transmission medium and a coating having an identifying color applied on at least a portion of the transmission medium, wherein the coating comprises a radiation-cured, crosslinked polymeric network, and wherein the identifying color in the coating is provided by at least one chromophore molecule covalently bonded by at least one covalent bond to the polymeric network. The color of a telecommunication element prepared in this manner according to the invention does not bleed in the presence of cable-filling compounds. For example, the telecommunication element may be an optical fiber ribbon, and the ribbon has a colored matrix or a colored coating applied over an uncolored matrix, wherein the color of the colored matrix or colored coating does not bleed in the presence of cable-filling compounds.

It is a still further aspect of the present invention to provide: a method for producing a colored, radiation-curable composition having at least one chromophore-containing compound, wherein the chromophore-containing compound comprises one or more functional groups that are capable of being reacted to covalently bond the chromophore-containing compound with any another molecule or series of molecules in the radiation-curable composition; and a method of providing at least a portion of a substrate with a radiation-cured composition having at least one chromophore-containing compound, wherein the chromophore-containing compound is covalently bonded to other molecules or series of molecules within the radiation-cured composition.

The method may comprise the steps of: providing a substrate, such as, for example, a transmission medium; providing a colored, radiation-curable composition comprising a chromophore-containing compound; applying the radiation-curable composition to at least a portion of the substrate; and exposing the radiation-curable composition for a suitable period of time to radiation of a suitable wavelength and intensity to cause curing of the composition into a radiation-cured, crosslinked polymeric network, wherein the identifying color in the coating is provided by at least one chromophore molecule covalently bonded by at least one covalent bond to the polymeric network.

The invention will be more fully understood when reference is made to the following detailed description taken in conjunction with the accompanying drawings.

### BRIEF DESCRIPTION OF THE DRAWINGS

The drawings, not drawn to scale, include:
FIG. 1A, which is a cross-sectional view of an optical fiber coated with primary and secondary coatings;
FIG. 1B, which is a cross-sectional view of an optical fiber coated with primary, secondary and tertiary coatings; and
FIG. 2, which is a cross-sectional view of a splittable optical fiber ribbon containing at least one colored matrix.

### DETAILED DESCRIPTION OF THE PRESENT INVENTION

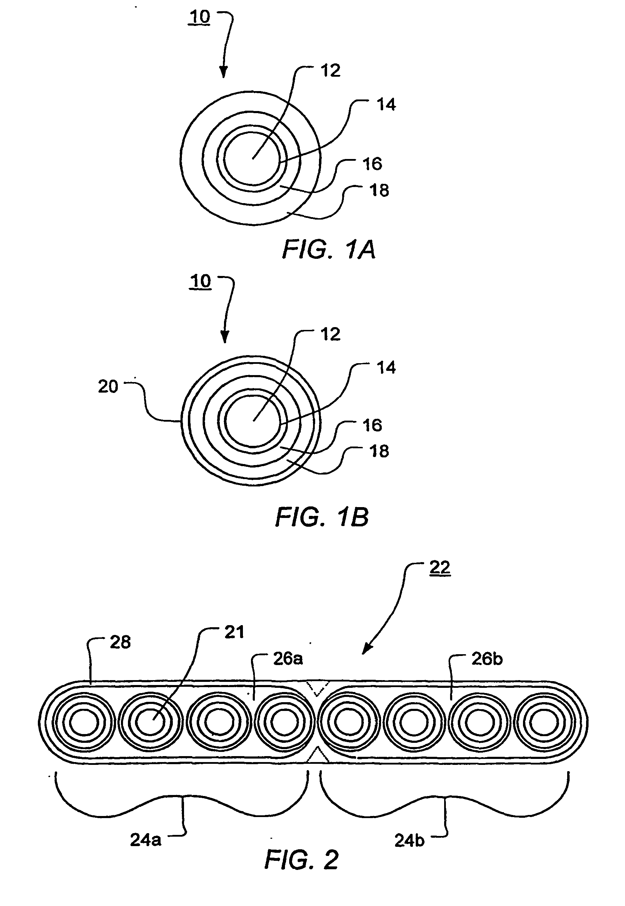

Typical telecommunications elements include an elongated transmission medium such as a metallic wire or an optical fiber. Referring to FIG. 1A, a typical optical fiber **10** transmission medium is shown. The typical optical fiber **10** is formed by a glass core **12** which is surrounded by a glass cladding **14.** The glass cladding **14** of the optical fiber **10** is usually surrounded by one or more protective polymeric coatings, e.g., primary and secondary polymeric coatings, or primary, secondary, and tertiary polymeric coatings.

For example, as shown in FIG. 1A, an inner protective polymeric coating **16** covers at least a portion of the cladding **14** and an outer protective polymeric coating **18** typically covers at least a portion of the inner coating **16.** The inner **16** and outer **18** protective coatings may be referred to as inner primary and outer primary coatings, or primary and secondary coatings. The inner coating **16** is usually obtained by applying a radiation-curable (polymerizable) composition capable of forming a polymeric coating upon curing over the cladding **14.**

The radiation-curable composition is normally applied by passing the optical fiber through a first die or a coating applicator using techniques well known in the art, and therefore, not described herein. Once the radiation-curable composition is applied over the cladding **14,** the composition may be cured by exposing it to radiation, such as ultraviolet radiation, electron beam radiation or ionizing radiation, to initiate curing (polymerization) thereof. Ultraviolet radiation is most commonly used.

The application and curing of the radiation-curable composition to form the inner coating **16** may be followed by the application and curing of another radiation-curable composition capable of forming a polymeric coating which forms the outer coating **18.** This sequence is known as a wet-on-dry application of the outer coating **18.** Alternatively, the application of the radiation-curable composition which forms the inner coating **16** may be directly followed by the application of a radiation-curable composition forming the outer coating **18** prior to exposure to the curing radiation. This is known in the art as a wet-on-wet application. Each application technique is well known in the art.

As used herein, the term "primary coating" is defined as that coating which directly contacts the glass portion of the optical fiber. The uncured primary coating should be liquid at room temperature. The uncured primary coating should have a viscosity suitable for high speed processing, and the uncured primary coating should have a high cure speed. The cured primary coating should exhibit good adhesion to glass to prevent premature delamination of the coating from the glass portion of the optical fiber. The cured primary coating should have a low modulus at lower temperatures to minimize the effects of microbend attenuation due to small stresses on the optical fiber itself.

As used herein, the term "secondary coating" is defined as the coating which covers the primary coating on the optical fiber. The cured secondary coating should have sufficient modulus to give impact resistance and to provide a protective barrier, and give tensile strength to the optical fiber. The cured secondary coating should exhibit little physical change over a wide temperature range and good resistance to water and solvent absorption. For cases where the secondary coating is a colored secondary coating, it should exhibit good color stability.

The uncured liquid primary or secondary coating composition should have a sufficiently low viscosity that the composition will be easily applied to form a continuous protective coating on the glass fibers. Examples of such viscosity of an order of magnitude from about 10³ cP at 45-50°C, e.g., from about 2 × 10³ to about 8 × 10³ cP at room temperature. There is no particular limitation on viscosity, however, and it can be adjusted to a given application by known methods. For example, viscosity can be adjusted depending on the type of optical fiber material being formulated and the method of application, including the processing temperature employed.

Generally, the thickness of the cured primary or secondary coating will be dependent on the intended use of the optical fiber, although thicknesses of about 20 to 35 microns and, in particular, thicknesses of about 25 to 30 microns are suitable.

When used as primary coatings, cured coatings in accordance with the present invention may have a glass transition temperature (T_{g}) of from about -60 °C to about 0 °C, for example, from about -50 °C to about -30 °C, and, *e.g.* about -40°C, and a low modulus of elasticity of from about 0.5 to about 3.0 MPa at room temperature (20 °C) and 50% relative humidity, for example, from about 1.0 to about 2.5 MPa.

When utilized as a secondary coating, cured coatings in accordance with the present invention may have a glass transition temperature (T_{g}) of from about 25 C to about 100 °C. The cured secondary coatings may have a T_{g} of from about 50 °C to about 80 °C, for example, about 75 °C. The cured secondary coatings may have a low modulus of elasticity of from about 5.0 to about 60 MPa at around 80 °C and 50% relative humidity, for example, from about 20 to about 40 MPa, and, e.g. about 30 MPa.

A typical radiation-curable composition capable of forming a polymeric coating for the inner **16** and outer **18** coatings usually includes an acrylated oligomer, *e.g.*, a urethane acrylate oligomer, which is a reaction product of (1) a polyol, such as a polyether diol, polyester diol or hydrocarbon diol; (2) a polyisocyanate, such as an aliphatic diisocyanate; and (3) an endcapping monomer, such as a hydroxyalkylacrylate or a hydroxyalkylmethacrylate. These oligomers typically have monofunctionality, difunctionality or trifunctionality. Other materials, such as photoinitiators, reactive diluents and adhesion promotors, such as organofunctional silane adhesion promoters, may be included in the radiation-curable composition to tailor the physical properties of the composition to meet specific end-use application requirements, such as to provide good thermal, oxidative and hydrolytic stability as well as a soft, compliant, low glass transition temperature-type coating. A discussion of radiation-curable primary and secondary coating compositions may be found in U.S. Patent No. 5,146,531.

While particular reference has been made to the case of a telecommunication element coated with primary and secondary coatings, it is readily understood by one skilled in the art that such elements may be coated with additional coatings, such as a tertiary coating, or with only one coating. A tertiary coating is generally thinner than a secondary coating, e.g., 10% as thick as a secondary coating. Thus, a tertiary coating may be applied to a thickness of from 2 to 5 microns.

According to the present invention, an uncolored, radiation-curable composition that is, for example, applied over the cladding and cured to form an inner coating **16** may be colored by adding to the composition a chromophore-containing compound comprising one or more functional groups that are capable of reacting to covalently bond the chromophore of the chromophore-containing compound to any another molecule or series of molecules in the radiation-curable composition.

The chromophore moiety of the chromophore-containing compound may be selected from, *e*.*g*., dye chemical families including the following, non-exhaustive chemistries: anthraquinone, methine, and azo. Whether the chromophore moiety of the chromophore-containing compound is anthraquinone-type, methine-type, azo-type, mixtures thereof, or some other type, the selected chromophore moiety of the chromophore-containing compound preferably exhibits good thermal stability and light fastness. Furthermore, the chromophore moiety of the chromophore-containing compound is not limited by molecular weight It may be a monomeric moiety comprising a chromophore, or it may be an oligomeric moiety comprising a chromophore within the backbone of an oligomeric chain or comprising a chromophore as an end or side group of an oligomeric chain.

In general, the functional group(s) of a chromophore-containing compound according to the invention is any group capable of reacting to covalently bond the chromophore of the chromophore-containing compound to any another compound or series of compounds within a radiation-curable composition, such that the chromophore molecule itself is incorporated into the radiation-curable composition. For example, the chromophore-containing compound may comprise a radiation-curable functional group, e.g., ethylenic unsaturation such as an acrylate group, which, when exposed to radiation, covalently bonds with other similar groups in a radiation-curable composition.

In a particular embodiment, the functional group(s) of a chromophore-containing compound according to the invention is capable of reacting with a radiation-curable-group-containing monomer or oligomer to form a radiation-curable monomer or oligomer comprising a chromophore covalently bonded by at least one covalent bond to the monomer or oligomer. The radiation-curable monomer or oligomer comprising the covalently bonded chromophore may itself become covalently bonded to any other compound or series of compounds, such as, for example, a non-chromophore-containing, radiation-curable monomer or oligomer, within a radiation-curable composition.

For example, a radiation-curable monomer or oligomer comprising a chromophore covalently bonded thereto may also have a radiation-curable end group(s) or side group(s). When exposed to radiation, this end group(s) or side group(s) covalently bonds with compounds containing similar groups in the radiation-curable composition. As a particular example, a radiation-curable composition may have compounds containing acrylate groups, vinyl groups or epoxy groups to which a radiation-curable monomer or oligomer comprising a chromophore molecule covalently bonded thereto can covalently bond.

As a more particular example of the embodiment wherein a functional group(s) of a chromophore-containing compound reacts with a radiation-curable-group-containing monomer or oligomer, there is provided a chromophore-containing polyol comprising both hydroxy functionality and a chromophore molecule covalently bonded thereto. The chromophore-containing polyol may have ester or carboxy functionality in addition to the hydroxy functionality. By reacting the polyol comprising a chromophore moiety covalently bonded thereto with, *e.g.*, an oligomer of a radiation-curable composition, the chromophore becomes incorporated not only into the radiation-curable oligomer by way of at least one covalent bond, but ultimately into the cured composition as well.

As a general example of forming a colored monomer or oligomer component of a colored, radiation-curable composition, a polyol comprising a chromophore molecule covalently bonded thereto and hydroxy end groups or side groups is provided, in addition to, or in place of, some or all of the typical polyol, e.g. hydrocarbon diol, that is reacted with an isocyanate, *e.g.*, an aliphatic diisocyanate, and a radiation-curable monomer(s) to form a typical acrylated oligomer reaction product used in a radiation-curable composition for, *e.g.,* optical fiber coatings. Examples of suitable polyols comprising a chromophore molecule covalently bonded thereto are dyes marketed under the trademark REACTINT™ by the Milliken Chemical Company. Those skilled in the art will now recognize that if a sufficient amount of a polyol comprising a chromophore molecule covalently bonded thereto is reacted with an isocyanate and radiation-curable monomer, then the resulting acrylated monomer or oligomer will be colored in accordance with the color of the chromophore molecule(s) (or blend of chromophore molecules for certain colors within the spectrum of colors) that has been covalently bonded to the monomer or oligomer.

A radiation-curable composition comprising a chromophore-containing compound according to the invention, e.g., a colored, acrylated monomer or oligomer, may be applied, e.g., directly to the cladding of the optical fiber as a colored, radiation-curable composition to form the inner coating **16** or it may be applied directly over a previously applied inner coating as the outer coating **18.** Those skilled in the art will recognize that the radiation-curable composition comprising a chromophore-containing compound according to the invention, *e*.*g*., a colored monomer or oligomer, may also be applied over a previously applied outer coating as a tertiary coating **20**, which is illustrated in FIG. 1B. Alternatively, the radiation-curable composition comprising a chromophore-containing compound according to the invention, *e.g.,* a colored, acrylated monomer or oligomer, may be applied onto or into a ribbon matrix, producing a colored optical fiber ribbon.

In a commercially advantageous alternative, chromophore-containing compounds according to the invention, e.g., colored, acrylated monomers or oligomers, are blended or diluted with non-chromophore-containing analogs that are present in a commercially available, uncolored, radiation-curable composition, such as those compositions typically formulated to provide a protective coating on an optical fiber, so that the combination of the chromophore-containing compounds according to the invention and the non-chromophore-containing analogs forms a colored, radiation-curable composition which can be applied, e.g., over the cladding **14,** the inner coating **16** or the outer coating **18** of the optical fiber (or onto or into a ribbon matrix). Such radiation-curable compositions may additionally include one or more uncolored acrylate oligomers, a reactive diluent, one or more photoinitiators, organofunctional silane adhesion promoters, pigments, *e.g.,* TiO₂, stabilizers, etc. In other words, the chromophore-containing compounds described herein may be added, in a quantity sufficient to impart color, to a commercially known, uncolored, radiation-curable composition, such as those used to provide a protective coating over an optical fiber.

After the radiation-curable composition containing the chromophore-containing compounds, *e*.*g*., the colored monomers and/or oligomers, is cured, *i*.*e*., polymerized, by exposure to radiation of a suitable wavelength and intensity for a suitable period of time, the resulting cured composition contains chromophore molecules which are covalently bonded thereto. Because the chromophore molecules are covalently bonded to other components within the cured composition, the risk of color loss due to bleeding is negligible. Thus, the manufacturing advantages that a dye provides over pigments, *e.g.* application and cure speed, can be obtained while avoiding the bleeding disadvantages that a dye which is not covalently bonded may have when used in an optical fiber environment, or in any other working environment.

According to one embodiment, a chromophore-containing compound is provided which may be suited, amongst other applications, for imparting color to a telecommunication element, such as a coated optical fiber or coated optical fiber ribbon. The chromophore-containing compound may be formed via, *e.g.,* isocyanate chemistry. For example, a chromophore-containing compound comprising an isocyanate-reactive functional group(s), *e.g.,* -OH, -NH₂ and -SH, may be reacted with an isocyanate comprising a radiation-curable group, *e.g.,* comprising ethylenic unsaturation. An example of an isocyanate comprising a radiation-curable group is meta-isopropenyl-α,α-dimethyl isocyanate, but any monoisocyanate or polyisocyanate, including a diisocyanate, may be employed, provided that it comprises a radiation-curable group.

According to another embodiment, a particular type of chromophore-containing compound, *i.e.,* a chromophore-containing oligomer, is provided which may be suited, amongst other applications, for imparting color to a communications element, such as a coated optical fiber. This chromophore-containing oligomer may be formed in several manners. For example, the chromophore moiety of the chromophore-containing oligomer may be bonded by one covalent bond to the remainder of the oligomer, such that the chromophore moiety is provided as an end group or side group of the oligomer. Alternatively, the chromophore moiety of the chromophore-containing oligomer may be bonded by a pair of covalent bonds to the remainder of the oligomer, such that the chromophore moiety is provided as part of the backbone of the oligomer.

An example for providing a chromophore-containing oligomer having the chromophore moiety as part of the backbone of the oligomer includes a step of forming an oligomer precursor having at least two terminal isocyanate groups. This oligomer precursor may be said to be end-capped with isocyanate groups.

The isocyanate-end-capped oligomer may be converted into an oligomer end-capped with radiation-curable groups. For example, the isocyanate-end-capped oligomer precursor may be reacted with a radiation-curable monomer including both (i) a reactive functionality which is reactive with the isocyanate groups of the isocyanate-end-capped oligomer precursor and (ii) a radiation-curable functionality, including ethylenic unsaturation. Groups which are reactive with isocyanate groups include -OH, -NH₂ and -SH. The reaction with the isocyanate groups generates covalent linkages. For example, the reaction of an -OH group with an isocyanate group creates a urethane linkage, and the reaction of an -NH₂ group with an isocyanate group creates a urea linkage.

The isocyanate-end-capped oligomer precursor is prepared by reacting at least one isocyanate, such as a polyisocyanate, *e.g.*, diisocyanate, with at least one polyfunctional compound having at least two isocyanate-reactive groups, such as -OH, -NH₂ and -SH. A particular polyfunctional compound of this type is a diol.

At least a portion of the polyfunctional compound, *e.g.*, diol, includes a chromophore, such as an anthraquinone, methine or azo chromophore. For example, suitable examples of anthraquinone chromophores are given in an article entitled "Dyes, Anthraquinone" at pages 212-279 of the Kirk-Othmer Encyclopedia of Chemical Technology. Third Edition, Volume 8, 1979.

A particular example of a polyfunctional compound including a chromophore is an anthraquinone dye having the following formula: 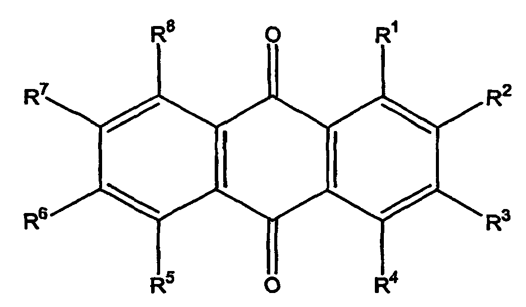 wherein the R groups R¹, R², R³, R⁴, R⁵, R⁶, R⁷ and R⁸, are each independently selected from the group consisting of hydrogen, amino, hydroxy, halogen, nitro, carboxylated alkali metal, sulfated alkali metal and a hydrocarbyl group optionally containing one or more heteroatoms, provided that at least two of groups R¹ through R⁸ have at least one isocyanate-reactive functionality selected from the group consisting of - OH, - NH₂ and - SH, and further wherein adjacent R groups from amongst R groups R¹ through R⁸ may form a ring.

An example of a compound wherein adjacent R groups from amongst R groups R¹ through R⁸ form a ring is a compound wherein R¹ and R² combine to form a benzene ring.

When an R group from amongst R groups R¹ through R⁸ is a hydrocarbyl group including a heteroatom, the heteroatom may appear anywhere in the group, for example, the heteroatom may appear (1) as a linking group attached directly to the anthraquinone core, (2) as a side group, or (3) as a linking group linking two or more hydrocarbyl groups together.

For example, from 1 to 3 ofR groups R¹ through R⁸ may have the following formula: 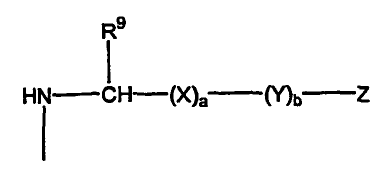 wherein R⁹ is hydrogen or an alkyl group having from 1 to about 12 carbon atoms, X is -CH₂-, a is an integer of from 1 to about 6, Y represents polymeric units of hydroxy alkylenes or alkylene oxide monomers selected from the group consisting of ethylene oxide, propylene oxide, butylene oxide, cyclohexane oxide, and glycidol, b is either 0 or 1, and Z is a reactive -OH, -NH₂, or -SH group.

Specific examples of such anthraquinone dyes are described in U.S. Patent No. 4,846,846 and may have the following formula: 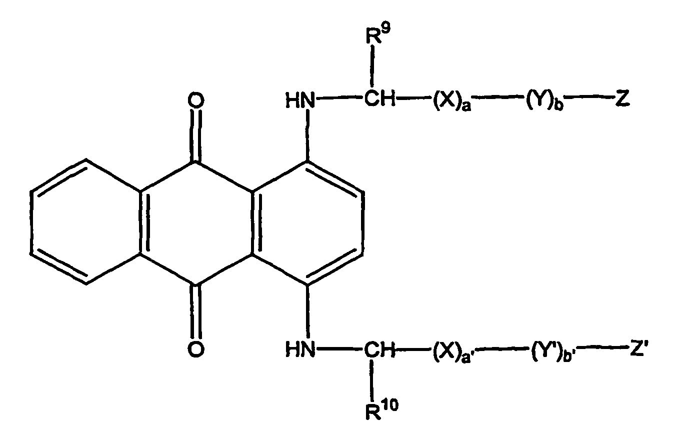 wherein R⁹ and R¹⁰ are independently selected from hydrogen or an alkyl group having from 1 to about 12 carbon atoms, X is -CH₂-, a and a' are independently selected from integers of from 1 to about 6, Y and Y' are independently selected from polymeric units of hydroxy alkylenes or alkylene oxide monomers selected from the group consisting of ethylene oxide, propylene oxide, butylene oxide, cyclohexane oxide, and glycidol, b and b' are independently either 0 or 1, and Z and Z' are independently selected from reactive -OH, -NH₂, or -SH groups.

As described in U.S. Patent No. 4,846,846, a particular subclass of such anthraquinone dyes may have the following formula: 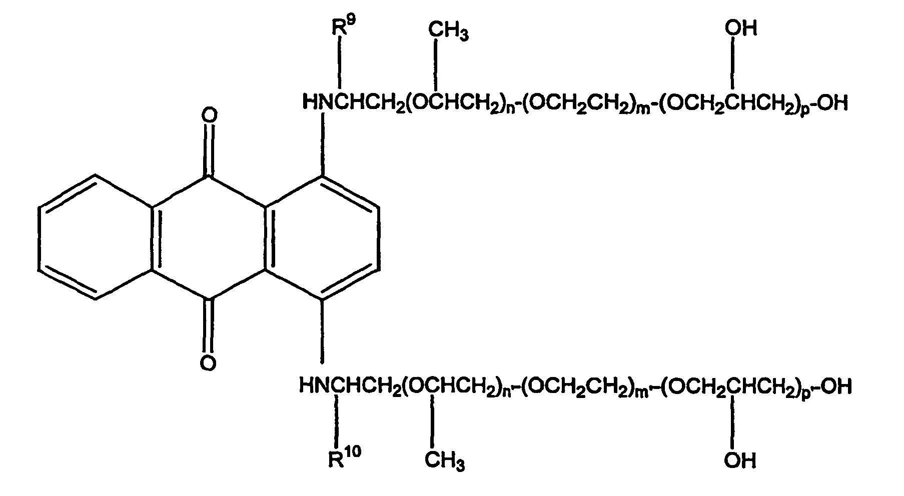 wherein n, n', m, m', p, and p' may independently have a value of from 0 to about 40.

A particular example of an anthraquinone dye described in U.S. Patent No. 4,846,846 has the following formula:

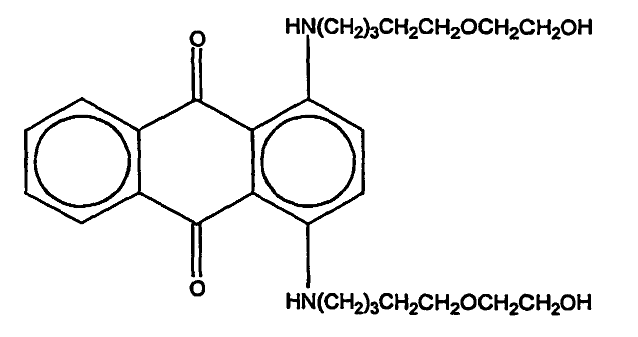

Other examples of anthraquinone dyes include 1,5 bis((3-hydroxy 2,2-dimethylpropyl)amino)-9,10-anthracenedione, which is a red dye; 2,2'-((9,10-dihydro-9,10-dioxo-1,5-anthracenediyl)bis(thio))bis-benzoic acid, 2-hydroxyethyl ester, which is a yellow dye; and 1,5 bis((2,2-dimethyl-3-hydroxypropyl)amino)-4,8-bis((4-methylphenyl)thio) anthraquinone, which is a blue dye. Other colors, such as pink, green, black, brown and violet, may be formed by blending these dyes or by blending oligomers containing the same.

There are still further types of chromophore-containing compounds comprising functional groups that may be used to covalently link chromophores to the polymeric matrix of coating compositions, inks, colorants, etc. For example, there may be provided a radiation-curable anthraquinone dye comprising an anthraquinone core group with at least one substituent comprising a radiation-curable group. The radiation-curable group may be an ethylenically-unsaturated group, such as a (meth)acrylic group, or an epoxy group.

A radiation-curable anthraquinone dye comprising an anthraquinone core group with at least one substituent comprising a radiation-curable group may have the following formula: 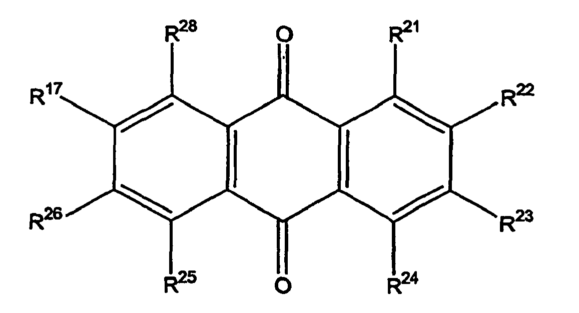 wherein the R groups R¹¹, R¹², R¹³, R¹⁴, R¹⁵, R¹⁶, R¹⁷ and R¹⁸ are each independently selected from the group consisting of hydrogen, amino, hydroxy, halogen, nitro, carboxylated alkali metal, sulfated alkali metal and a hydrocarbyl group optionally containing one or more heteroatoms, provided that at least one of groups R¹¹ through R¹⁸ have at least one ethylenically-unsaturated radiation-curable functionality.

For example, one or two of R groups R¹¹ through R¹⁸ may have a (meth)acrylic functionality and at least four of R groups R¹¹ through R¹⁸ may be hydrogen.

Radiation-curable anthraquinone dyes comprising an anthraquinone core group with at least one substituent comprising a radiation-curable group may be formed by esterification reactions of hydroxy functional anthraquinone dyes with acrylic acid-type monomers. For example, the above-mentioned dihydroxy functional anthraquinone dyes, *i*.*e*. 1,5-bis((3-hydroxy-2,2-dimethylpropyl)amino)-9,10-anthracenedione, 2,2'-((9,10-dihydro-9,10-dioxo-1,5-anthracenediyl)bis(thio))bis-benzoic acid, 2-hydroxyethyl ester, and 1,5 bis((2,2-dimethyl-3-hydroxypropyl)amino)-4,8-bis((4-methylphenyl)thio) anthraquinone, could undergo such esterification reactions to form the following compounds, respectively: 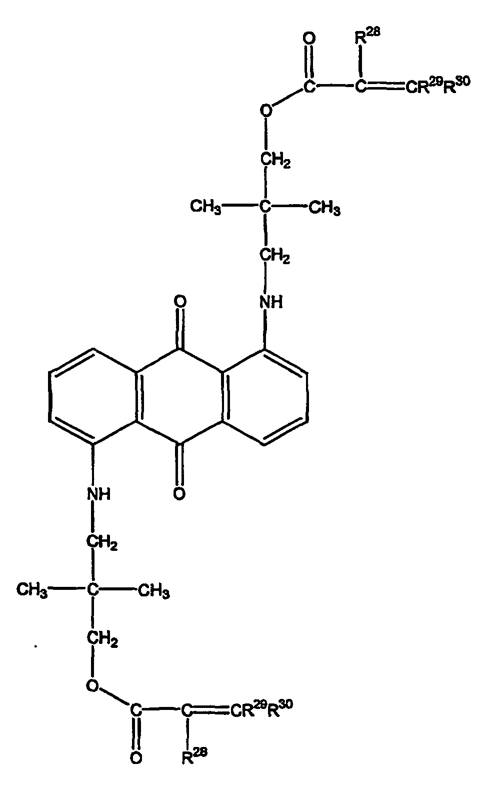 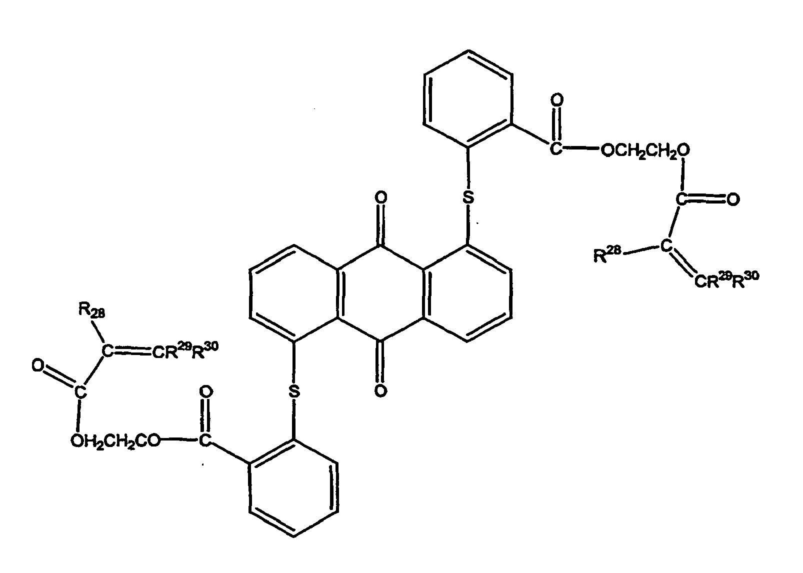 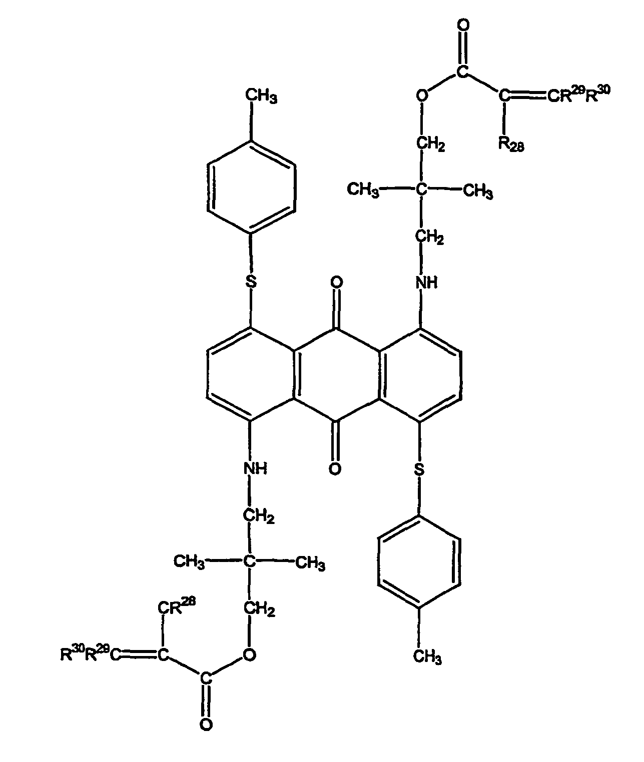 wherein R²⁹, R³⁰, R³¹, R³², R³³, and R³⁴ are the same or different and are independently hydrogen or a C₁ to C₆ alkyl optionally substituted with one or more substituents selected from the group consisting of -OH, NH₂, -SH, -NO₂, -CN and halogen.

A radiation-curable, chromophore-containing compound according to the invention, may be mixed with standard components of a radiation-curable composition, such as standard components of radiation-curable compositions for coating a communications element, e.g., an optical fiber, an optical fiber ribbon, or a plurality of optical fibers arranged in an array, or standard components of radiation-curable compositions for forming inks or colorant packages. Such components may include one or more of (1) at least one non-chromophore-containing, radiation-curable compound, (2) at least one photoinitiator, and (3) at least one reactive diluent.

A specific example of a non-chromophore-containing, radiation-curable compound is a non-chromophore-containing, radiation-curable oligomer, such as a (meth)acrylate end-capped urethane oligomer, which may be any one of the polyether-based, aliphatic urethane acrylate compounds commercially available from UCB Chemical Corp. They are sold under the name EBECRYL, and include EBECRYL 230. EBECRYL 230 is a difunctional aliphatic urethane acrylate oligomer with a polyether backbone.

Another example of a (meth)acrylate end-capped urethane oligomer is any one of the polyester-based, aliphatic urethane acrylate oligomers that are available from Sartomer. They are sold under the name CN966xxx, and include CN966J75, a difunctional aliphatic urethane acrylate oligomer with a polyester backbone. These oligomers are also available from Henkel Corp., which manufactures PHOTOMER products, including PHOTOMER 6010. A polyester polyol, which can be used to make a polyester-based urethane acrylate oligomer, is DESMOPHEN 2001KS, available from Bayer Corp. This product is an ethylene butylene adipate diol.

Alternatively, conventional urethane acrylate oligomers may be formed by reacting a polyol, for example a diol, with a multifunctional isocyanate, for example a diisocyanate, and then end-capping with a hydroxy-functional (meth)acrylate.

The polyol may be a polyol with a number average molecular weight of about 200-10,000, such as polyether polyol, polyester polyol, polycarbonate polyol, and hydrocarbon polyol.

Polyether polyols may be homopolymers or copolymers of alkylene oxides including C₂ to C₅ alkylene oxides such as, for example, ethylene oxide, propylene oxide, butylene oxide, tetrahydrofuran, and 3-methyltetrahydrofuran; homopolymers or copolymers of the above alkylene oxides obtained by using, as an initiator, C₁₄ to C₄₀ polyols, such as 12-hydroxystearyl alcohol and hydrogenated dimerdiol; and adducts of the above alkylene oxides with bisphenol-A or hydrogenated bisphenol-A. These polyether polyols may be used alone or in combination of two or more.

Polyester polyols may be, for example, addition reaction products of a diol component and a lactone, reaction products of the diol component and a polyvalent carboxylic acid, and addition reaction products of three components, including the diol component, a dibasic acid, and the lactone. The diol component may be C₂ to C₄₀ aliphatic diols with a low molecular weight such as ethylene glycol, propylene glycol, diethylene glycol, dipropylene glycol, 1,4-butanediol, 1,5-pentanediol, 3-methyl-1,5-pentanediol, 2,4-diethyl-1,5-pentanediol, 1,6-hexane glycol, neopentyl glycol, 1,9-nonanediol, 1,10-decanediol, 12-hydroxystearyl alcohol, and hydrogenated dimerdiol; and an alkylene oxide adduct of bisphenol-A. The lactone may be, for example, epsilon-caprolactone, delta-valerolactone, and beta-methyl-delta-valerolactone. The polyvalent carboxylic acid may be, for example, aliphatic dicarboxylic acids such as succinic acid, adipic acid, azelaic acid, sebacic acid, and dodecanedioic acid; and aromatic dicarboxylic acids such as hexahydrophthalic acid, tetrahydrophthalic acid, phthalic acid, isophthalic acid, and terephthalic acid.

Polycarbonate polyols may be, for example, polycarbonate diols which are obtainable by a reaction of a short chain dialkylcarbonate and a component selected from aforementioned polyether polyols, polyester polyols and diol components such as 2-methylpropanediol, dipropylene glycol, 1,4-butanediol, 1,6-hexanediol, 3-methyl-1,5-pentanediol, neopentyl glycol, 1,5-octanediol, and 1,4-bis-(hydroxymethyl)cyclohexane. The short chain dialkylcarbonate may be C₁-C₄ alkylcarbonates such as, for example, dimethylcarbonate and diethylcarbonate.

Polyols with a low molecular weight may be used. Examples of polyols with a low molecular weight include ethylene glycol, propylene glycol, tripropylene glycol, 1,3- or 1,4-butanediol, neopentyl glycol, 1,6-hexanediol, 1,9-nonanediol, 1,10-decanediol, higher fatty acid polyols and higher hydrocarbon polyols such as castor oil, coconut oil, monomyristins (1-monomyristin and 2-monomyristin), monopalmitins (1-monopaimitin and 2-monopalmitin), monostearins (1-monostearin and 2-monostearin), monooleins (1-monoolein and 2-monoolein), 9,10-dioxystearic acid, 12-hydroxyricinoleyl alcohol, 12-hydroxystearyl alcohol, 1,16-hexadecanediol (juniperic acid or a reduction product of thapcic acid), 1,21-henicosanediol, chimyl alcohol, batyl alcohol, selachyl alcohol, and dimeric acid diol.

As previously explained, any of the above-mentioned polyols, which may be used to prepare conventional (meth)acrylate end-capped oligomers, may be blended with polyols including chromophoric groups and reacted with isocyanates to form colored oligomers.

An isocyanate used to form a colored or uncolored monomer or oligomer, may be, for example, an aromatic polyisocyanate, an aromatic aliphatic polyisocyanate, an alicyclic polyisocyanate, or an aliphatic polyisocyanate. The particular isocyanate selected is not limited by molecular weight. It may be a so-called monomeric isocyanate, or it may be an oligomeric isocyanate.

Examples of the aromatic polyisocyanates include diisocyanates such as m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, and 4,4'-diphenyl ether diisocyanate; and polyisocyanates such as triphenylmethane-4,4',4"-triisocyanate, 1,3,5-triisocyanatebenzene, 2,4,6-triisocyanatetoluene, and 4,4'-diphenylmethane-2,2',5,5'-tetraisocyanate.

Examples of the aromatic aliphatic polyisocyanates include diisocyanates such as 1,3- or 1,4-xylene diisocyanate or mixtures thereof and 1,3- or 1,4-bis(1-isocyanate-1-methylethyl)benzene or mixtures thereof; and polyisocyanates such as 1,3,5-triisocyanatemethylbenzene.

Examples of the alicyclic polyisocyanates include diisocyanates such as 1,3-cyclopentene diisocyanate, 1,4-cyclohexane diisocyanate, 1,3-cyclohexane diisocyanate, 3-isocyanatemethyl-3,5,5-trimethylcyclohexyl isocyanate (isophorone diisocyanate or IPDI), 4,4'-methylenebis(cyclohexyl isocyanate) (H₁₂MDI or DESMODUR W, available from Bayer), methyl-2,4-cyclohexane diisocyanate, methyl-2,6-cyclohexane diisocyanate, and 1,3- or 1,4-bis (isocyanatemethyl)cyclohexane; and polyisocyanates such as 1,3,5-triisocyanatecyclohexane, 1,3,5-trimethylisocyanatecyclohexane, 2-(3-isocyanatepropyl)-2,5-di(isocyanatemethyl)-bicyclo(2.2.1)heptane, 2-(3-isocyanatepropyl)-2,6-di(isocyanatemethyl)-bicyclo(2.2.1)heptane, 3-(3-isocyanatepropyl)-2,5-di(isocyanatemethyl)-bicyclo(2.2.1)heptane, 5-(2-isocyanateethyl)-2-isocynatemethyl-3-(3-isocyanatepropyl)-bicyclo(2. 2.1)heptane, 6-(2-isocyanateethyl)-2-isocyanatemethyl-3-(3-isocyanatepropyl)-bicyclo(2. 2.1)heptane, 5-(2-isocyanateethyl)-2-isocyanatemethyl-2-(3-isocyanatepropyl)-bicyclo(2. 2.1)heptane, and 6-(2-isocyanateethyl)-2-isocyanatemethyl)-2-(3-isocyanatepropyl)-bicyclo(2.2.1)heptane.

Examples of the aliphatic polyisocyanates include diisocyanates such as trimethylene diisocyatnate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, and 2,6-diisocyanatemethylcaproate; and polyisocyanates such as lysine ester triisocyanate, 1,4,8-triisocyanateoctane, 1,6,11-triisocyanateundecane, 1,8-diisocyanate-4-isocyanatemethyloctane, 1,3,6-triisocyanatehexane, and 2,5,7-trimethyl-1,8-isocyanate-5-isocyanatemethyloctane.

Moreover, derivatives from the above polyisocyanates can be used. Examples of the derivatives include a dimer, a trimer, biuret, allophanate, carbodiimide, polymethylenepolyphenyl polyisocyanate (referred to as crude MDI or polymeric MDI), crude TDI, and an adduct of an isocyanate compound and a polyol with a low molecular weight.

While several polyisocyanates, including diisocyanates, have been disclosed, it must be noted that monoisocyanates may also be employed, provided that it contains a radiation-curable functional group. An example of a monoisocyanate comprising a radiation-curable group is meta-isopropenyl-α,α-dimethyl isocyanate.

"(Meth)acrylate" means acrylate, methacrylate, or a mixture thereof.

The reaction product of polyol and polyisocyanate may be reacted with one or more hydroxy-functional (meth)acrylates. Examples of the hydroxy-functional (meth)acrylates include 2-hydroxyethyl (meth)acrylate, 2-hydroxypropyl (meth)acrylate, 2-hydroxybutyl (meth)acrylate, 4-hydroxybutyl (meth)acrylate, pentanediol mono(meth)acrylate, 2-hydroxy-3-phenyloxypropyl (meth)acrylate, 2-hydroxyalkyl(meth)acryloyl phosphate, 4-hydroxycyclohexyl (meth)acrylate, cyclohexanedimethanol mono(meth)acrylate, neopentyl glycol mono(meth)acrylate, trimethylolpropane di(meth)acrylate, and pentaerythritol tri(meth)acrylate. Additional examples include compounds which are obtainable by an addition reaction of a glycidyl group-containing compound and a (meth)acrylic acid, such as alkyl glycidyl ether and glycidyl (meth)acrylate. The above hydroxyl group-containing (meth)acrylates may be used alone or in combination of two or more.

The molecular weight range of radiation-curable oligomers is not particularly limited, but preferably varies from 5,000 to 25,000 MW based upon the specific requirements for properties of the primary, secondary or tertiary coating in accordance with the present invention.

Any suitable free radical photoinitiator may be included in the radiation-curable composition. Suitable free radical-type photoinitiators include, for example, an acyl phosphine oxide photoinitiator, more specifically, a benzoyl diaryl phosphine oxide photoinitiator. An example of suitable benzoyl diaryl phosphine oxide photoinitiators include: 2,4,6-trimethylbenzoyldiphenyl-phosphine oxide (LUCERIN TPO available from BASF). Further examples of free radical-type photoinitiators include: hydroxycyclohexylphenylketone; hydroxymethylphenylpropanone; dimethoxyphenylacetophenone; 2-methyl-1 -[4-(methyl thio)-phenyl]-2-morpholinopropanone-1; 1-(4-isopropylphenyl)-2-hydroxy-2-methylpropan-1-one; 1-(4-dodecyl-phenyl)-2-hydroxy-2-methylpropan-1-one; 4-(2-hydroxyethoxy)phenyl-2(2-hydroxy-2-propyl)-ketone; diethoxyphenyl acetophenone; 2,4,6-trimethylbenzoyl diphenylphosphone; a mixture of (2,6-dimethoxy benzoyl)-2,4,4-trimethylpentylphosphineoxide and 2-hydroxy-2-methyl-1phenyl-propane-1-one; and mixtures of the foregoing. Many of these are sold under the names IRGACURE® and DAROCUR® and are available from Ciba Additives.

The free radical photoinitiator may be a mixture of phosphine oxide photoinitiators, an example of which is DAROCUR 4265 available from Ciba Additives. This particular photoiniator is a 50:50 weight percent mixture of diphenyl-2,4,6-trimethyl benzoly phosphine oxide and 2-hydroxy-2-methyl-1-phenylpropan-1-one. Another is IRGACURE 1700 (also from Ciba Additives), a blend of bis (2,6-dimethoxybenzoyl)-2,4,4-trimethylpentylphosphine oxide and 2-hydroxy-2-methyl-1-phenyl-propane-1-one.

The free radical-type photoinitiator may be used in an amount of 10% or less by weight, for example, about 0.25 to about 6% by weight, e.g., about 4% by weight based upon the total weight of the composition.

Adequate curing of the present compositions is promoted by the presence of one or more reactive diluents. The reactive diluent may also function as a solvent, such as, for example, a solvent for the urethane acrylate oligomer. The use of the reactive diluent(s) allows the formulator to adjust the viscosity and thereby improve processability. In other words, the reactive diluent prevents the viscosity of the composition from becoming too viscous or inflexible so as to ensure that the composition will remain suitable for its applications, including, for example, as a primary or secondary optical fiber coating.

The mono- or di-functional reactive diluent(s) may, for example, be a lower molecular weight, liquid (meth)acrylate-functional compound including the following di(meth)acrylates and monofunctional (meth)acrylates: tridecyl acrylate, 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly(butanediol) diacrylate, tetrathylene glycol dimethacrylate, 1,3-butylene glycol diacrylate, tetraethylene glycol diacrylate, triisopropylene glycol diacrylate, triisopropylene glycol diacrylate, ethoxylated bisphenol-A diacrylate, and tetrahydrofurfuryl acrylate (THFA). Another example of a reactive diluent is N-vinyl caprolactam. Further examples are the commercially available products from Sartomer, SR 489, a tridecyl acrylate and SR 506, an isobornyl acrylate.

The present radiation-curable compositions may be free of non-reactive diluents, such as water or organic solvents, which lack ethylenic unsaturation.

In the case where the radiation-curable composition is to be used as a primary coating composition for optical fibers, the radiation-curable composition may include an adhesion promoter. Examples of adhesion promoters include acid functional materials and organofunctional silanes. For example, the organofunctional silane may be an aminofunctional silane, an acrylamido-functional silane, a mercapto-fimctional silane, an allyl-functional silane, a vinyl-functional silane, a methylacrylate-functional silane, and an acrylate-functional silane. The organofunctional silane may be mercaptoalkyl trialkoxyl silane, a methacryloxylalkyl trialkoxy silane, an aminoalkyl trialkoxyl silane, a vinyl trialkoxyl silane, 3-aminopropyl triethoxy silane, 3-methacryloxy-propyltrimethoxy silane, gamma-mercaptopropyl trimethoxy silane, gama-mercaptopropyl (gamma-mercaptopropyl)triethoxy silane, beta-(3 ,4-epoxycyclohexyl) ethyl trimethoxy silane, gamma-glycidoxypropyl trimethoxy silane, 3-vinylthiopropyl trimethoxy silane, vinyl-tris-(beta-methoxyethoxy) silane, vinyl triacetoxy silane, and mixtures thereof. A particular trialkoxysilane adhesion promoter is UCT 7840KG from United Chemical Technologies. A further adhesion promoter is KBM 803, a 3-(trimethoxysilyl)propyl thiol from Shin-Etsu Chemical Co., Ltd.

The adhesion promoter, if used, may be present in the primary coating composition in an amount of from about 0.1 to about 10% by weight, for example, from about 0.1 to about 3% by weight, and, e.g., from about 1% by weight, based upon the total weight of the composition.

Other components that may be utilized in the radiation-curable composition include pigments, such as TiO₂, antioxidants, such as IONOL available from Aldrich, which is a 2,4,6-tri-tert-butyl-4-methylphenol; flow control agents such as BYK331, a polysiloxane available from BYK-Chemie USA; sensitizers such as thioxanthone or isopropylthioxanthone (ITX) and their derivatives; stabilizers and wetting agents. Suitable amounts are known to those of ordinary skill in the art.

In a preferred embodiment of the invention, a radiation-curable monomer or oligomer containing a chromophore moiety(ies) is produced by a method that comprises the step of preparing a dye concentrate, or masterbatch. The dye concentrate may comprise a solvent and a chromophore-containing compound according to the invention, *e.g.,* a radiation-curable monomer or oligomer containing a chromophore molecule according to the invention. In a particularly preferred embodiment, the solvent acts as both a solvent and reactive diluent. In a most preferred embodiment, the solvent that acts as both a solvent and a reactive diluent is tetrahydrofurfuryl acrylate (THFA).

Specifically, the chromophore-containing compounds comprising a radiation-curable functional group, or the chromophore-containing compounds comprising functional groups that react to form the radiation-curable monomers or oligomers containing chromophore moieties of the present invention, may be prepared as a liquid or powder. For example, a so-called "direct-acrylated" chromophore-containing compound may exist in liquid form. This type of compound may be used, without further manipulation, in conjunction with the other components, e.g., the monomers and oligomers that do not contain a chromophore, the photoinitiator, reactive diluent, etc., to provide the colored, radiation-curable coatings, colorants, inks or printing compositions of the present invention.

In the case where the chromophore-containing compound is in powder form, however, it must be dissolved into solution before it can be used to form a colored, radiation-curable composition according to the invention, regardless of whether the compound already contains, or has yet to be provided with, radiation-curable functionality. For example, before (or as) a powder of a chromophore-containing dye that is lacking radiation-curable functionality is reacted with, e.g., a polyisocyanate, and end-capped with one or more radiation-curable groups, e.g., groups containing ethylenic unsaturation, the compound must be dissolved into solution.

After extensive research, the present inventors have found that a powdered, chromophore-containing compound may be most suitably dissolved into solution by employing THFA as a combination solvent and reactive diluent The use of THFA in this regard provides several advantages. For example, THFA is photocurable. Therefore, THFA does not need to be removed from the solution before the solution can be added to the coating composition. When other solvents, such as tetrahydrofuran (THF), are used to dissolve the chromophore-containing compounds into solution, any excess solvent must be removed from the solution before the solution can be added to the coating composition. Otherwise, undesirable properties may result in the coating, such as the formation of bubbles. As another example of the advantage of using THFA, it is noted that chromophore-containing compounds demonstrated increased solubility in THFA in comparison to their solubility in other acrylate-containing compounds.

Accordingly, in one method for providing a dye concentrate, an isocyanate, e.g., a diisocyanate, is reacted in THFA with at least one compound having at least one isocyanate-reactive group, such as -OH, -NH₂ and -SH, wherein at least a portion of the compound includes a chromophore, such as an anthraquinone, methine or azo chromophore.

The chromophore-containing compound may be charged to a reactor containing an isocyanate, a catalyst, and THFA at a rate sufficient to prevent the saturation of the solution with the chromophore-containing compound. For example, the chromophore-containing compound may be charged to the reactor over a period of from about 30 to 75 minutes, preferably 60 minutes, for a reactor maintained at a temperature of from about 40 °C to about 60 °C, preferably about 50 °C. The isocyanate may be present in a stoichiometric amount, e.g., the isocyanate may be present in an amount of 2 equivalents of diisocyanate per equivalent of chromophore-containing compound. The catalyst may be any suitable catalyst, such as, for example, dibutyl tin dilaurate. Once the chromophore-containing compound has been charged to the reactor, the reaction is allowed to proceed for, for example, a period of from 120 to 240 minutes, preferably about 180 minutes, while the temperature is maintained at 50 °C.

The isocyanate-capped, chromophore-containing compound is provided with one or more radiation-curable groups by reducing the temperature to, and then maintaining the temperature at, from about 30 °C to about 50 °C, preferably about 40 °C, while a radiation-curable compound, including both (i) an isocyanate-reactive functionality and (ii) a radiation-curable functionality, such as ethylenic unsaturation, e.g., an acrylate monomer, is charged to the reactor. Preferably, an inhibitor is also added to the reaction solution. The reaction is monitored to completion by measuring the isocyanate peaks at 2270 cm⁻¹ by FTIR, a procedure that is well-known in the art.

After completion, there is provided a dye concentrate, or masterbatch, comprising the solvent and the radiation-curable, chromophore-containing monomers and/or oligomers. In a preferred embodiment, the radiation-curable, chromophore-containing monomers and/or oligomers are present in the dye concentrate in an amount that provides an amount of chromophore moiety that is greater than 5 wt%, preferably greater than 10 wt%, e.g., from about 10 wt% to about 35 wt%, wherein the particular wt% of the chromophore moiety is calculated by dividing the total weight of the total amount of chromophore moieties within the radiation-curable, chromophore-containing monomers and/or oligomers by the total weight of the dye concentrate (*i*.*e*., the amount of, *e.g.,* 15 wt%, chromophore moiety does not include the weight of, *e.g.,* any urethane or acrylate that may be present).

The preparation of a dye concentrate, or masterbatch, provides increased versatility that enables the radiation-curable, chromophore-containing monomers and/or oligomers contained in the dye concentrate to be more readily employed in a wide variety of applications.

For example, the various components of the present invention, including the dye concentrate or masterbatch, may be mixed or blended together, using any known equipment, to provide a colored, radiation-curable coating composition, and an optical fiber may be coated with the coating composition by any known optical fiber production technique. In one embodiment, a radiation-curable coating composition for providing a secondary coating on an optical fiber will comprise less than 20 wt%, for example, less than 15 wt%, preferably less than 10 wt%, more preferably less than 5 wt%, e.g., from 0.1 wt% to 10 wt%, of the dye concentrate, based on the entire weight of the radiation-curable composition. Of course, radiation-curable coating compositions may be prepared that will provide a primary, tertiary, or even single coating on an optical fiber, and the amount of dye concentrate may be specifically tailored to the particular end-use application. Likewise, a radiation-curable composition may be provided that will provide a coating on a plurality of optical fibers arranged in an array, or on an optical fiber ribbon, and again the amount of dye concentrate may be specifically tailored to the particular end-use application.

The techniques may involve a draw tower in which a preformed glass rod is heated to produce a thin fiber of glass. The fiber is pulled vertically through the draw tower and, along the way, the fiber passes through one or more coating stations at which various coatings are applied and cured in-line to the newly drawn fiber. The coating stations may each contain a die having an exit orifice that is sized to apply the particular coating to the fiber in a desired thickness. Monitoring and measuring devices may be provided near each station to ensure that the coating applied at that station is coated concentrically and to the desired diameter. Examples of optical fiber coating techniques include the methods disclosed in U.S. Patent Nos. 4,351,657, 4,512,281, 4,531,959, 4,539,219, 4,792,347, and 4,867,775.

Alternatively, compositions comprising the dye concentrate, or masterbatch, may be formulated to serve as a colored coating or colorant package for a wide variety of other substrates, including, for example, glass, plastic, ceramic, metal, textiles, electronics and wood. Compositions comprising the dye concentrate, or masterbatch, may be employed as a coating or colorant package in the printing and inking industries, when it is desired to replace traditional pigments with dye materials in a radiation-curable, e.g., uv-curable, vehicle. As seen in the optical fiber applications, other components of the inks or colorant packages may include other radiation-curable monomers or multifunctional radiation-curable materials, photoinitiator(s), stabilizer(s), surfactant(s), etc. in order to adjust viscosity and flow characteristics for the desired application.

The inks, coatings, or colorant packages may be applied to substrates other than optical fibers by a number of methods, including printing methods, such as gravure printing, ink jet printing, etc. In one embodiment, a radiation-curable ink or colorant package will comprise less than 60 wt%, preferably less than 40 wt%, *e*.*g*., from 0.1 wt% to 35 wt%, of the dye concentrate, based on the entire weight of the radiation-curable composition.

After the substrate is coated with the radiation-curable composition, the composition may be cured by exposure to a sufficient curing amount of UV irradiation. For example, the coated fiber may be exposed to UV irradiation at a rate of from about 5 to 1000 mJ/cm².

To provide a further detailed description of the invention, several examples are provided. Specifically, several synthesis examples for forming colored radiation-curable compounds suitable for use in a radiation-curable composition for coating optical fibers and for forming optical fiber ribbon matrices are provided hereinafter. Examples of radiation-curable compositions containing the colored compounds are also provided. Finally, example preparations of dye concentrates are provided, wherein the dye concentrates can then be applied to the wide variety of applications noted herein above.

### Example 1 - Yellow Oligomer

202.89 g of Milliken REACTINT™ dye yellow X15 was added dropwise to a mixture of 67.44 g isophorone diisocyanate (IPDI) and dibutyltin dilaurate that had been heated to 40 °C. Care was taken that the exothermic reaction did not heat above 45 °C by controlling the addition rate. The total time taken for addition was two hours. After the last addition of IPDI, 200 g of 1,6 hexanediol diacrylate (HDODA) was added as a reactive diluent to lower viscosity along with 4.4 g of inhibitor 2,6-Di-*tert*-butyl-4-methylphenol. This mixture was maintained at 40 °C for two hours before addition of 35.24 g 2-hydroxyethyl acrylate (HEA) dropwise with the temperature maintained below 50 °C by controlling the rate of addition of HEA. One hour after addition, there was no detectible isocyanate peak at 2270 cm⁻¹ as observed by FRIR. The resulting urethane acrylate oligomeric reaction product has a yellow color.

### Example 2 - Blue Oligomer

152.09g of Milliken REACTINT™ dye blue X3LV was added dropwise to a mixture of 101.13 g isophorone diisocyanate (IPDI) and 2.98 g dibutyltin dilaurate that had been heated to 40 °C. Care was taken that the exothermic reaction did not heat above 45 °C by controlling the addition rate. The total time taken for addition was two hours. After the last addition of IPDI, 200 g of 1,6 hexanediol diacrylate (HDODA) was added as a reactive diluent to lower viscosity along with 2.03 g of inhibitor 2,6-di-*tert*-butyl-4-methylphenol. This mixture was maintained at 40 °C for two hours before addition of 52.96 g 2-hydroxyethyl acrylate (HEA) dropwise with the temperature maintained below 50 °C by controlling the rate of addition of HEA. Two hours after addition, there was no detectible isocyanate peak at 2270 cm⁻¹ as observed by FTIR. The resulting urethane acrylate oligomer reaction product has a blue color.

### Example 3 - Black Oligomer

226.67 g of Milliken REACTINT™ dye black X95AB was added dropwise to a mixture of 93.30 g isophorone diisocyanate (IPDI) and 2.74 g dibutyltin dilaurate that had been heated to 40 °C. Care was taken that the exothermic reaction did not heat above 45 °C by controlling the addition rate. The total time taken for addition was about two hours. After the last addition of IPDI, 200 g of tetrahydrafuran (THF) solvent was added as a reactive diluent to lower viscosity along with 2.38 g of inhibitor 2,6-di-*tert*-butyl-4-methylphenol. This mixture was maintained at 40 °C for two hours before addition of 48.78 g 2-hydroxyethyl acrylate (HEA) dropwise with the temperature maintained below 50 °C by controlling the rate of addition of HEA. Two hours after addition, there was no detectible isocyanate peak at 2270 cm⁻¹ as observed by FTIR. The THF solvent was then removed via rotovap vacuum technique at room temperature over a 10 h period until a weight equal to the original inputs (minus the solvent) was reached. The resulting urethane acrylate oligomer reaction product has a black color.

Several liquid coating compositions employing the colored radiation-curable oligomers are described hereinafter.

### Example 4 - Yellow-Colored Optical Fiber Outer Coating Composition

A yellow ultraviolet radiation-curable coating composition for providing a colored outer coating was made by combining 60 weight percent EBECRYL™ 4827, which is an aromatic urethane diacrylate oligomer having a molecular weight of about 1500 sold by UCB Chemicals, 30 weight percent trimethylolpropane trimethacrylate (TMPTA) sold by UCB Chemicals, which is a reactive diluent, 6 weight percent of the yellow colored urethane acrylate oligomer reaction product of the synthesis described in Example 1 and about 4 weight percent of DAROCUR™ 4268 which is a photoinitiator. The coating composition was applied on an inner coating layer and cured by exposing the composition to ultraviolet radiation in a suitable wavelength range and intensity to form a yellow-colored outer protective polymeric coating.

### Example 5 - Blue-Colored Optical Fiber Inner Coating Composition

A blue ultraviolet radiation-curable coating composition for providing a colored inner coating was made by combining 60 weight percent EBECRYL™ 230, which is a high molecular weight aliphatic urethane diacrylate oligomer (bulk oligomer) sold by UCB Chemicals, 29 weight percent beta-carboxyethyl acrylate (13-CEA) sold by UCB Chemicals, which is a monofunctional reactive diluent, 6 weight percent of the blue colored urethane acrylate oligomer reaction product of the synthesis described in Example 2 and about 5 weight percent of DAROCUR™ 4265, which is a photoinitiator. The coating composition was applied on the cladding of an optical fiber and cured by exposure to ultraviolet radiation in a suitable wavelength range and intensity to form a blue-colored inner protective coating.

### Example 6 - Blue-Colored Optical Fiber Outer Coating Composition

A blue ultraviolet radiation-curable coating composition for providing a colored outer coating was made by combining 60 weight percent EBECRYL™ 4827 (bulk oligomer), 30 weight percent TMPTA (reactive diluent), 6 weight percent of the blue-colored urethane acrylate oligomer reaction product of the synthesis described in Example 2 and about 4 weight percent of DAROCUR™ 4268. The coating composition was applied to the inner coating of an optical fiber to form a blue-colored outer protective polymeric coating after curing by exposure to ultraviolet radiation in a suitable wavelength range.

### Example 7 - Blue-Colored Ink (Tertiary) Coating Composition

A blue ultraviolet radiation-curable coating composition for providing a colored tertiary coating was made by combining 25 weight percent EBECRYL™ 4866, which is an aliphatic urethane triacrylate diluted with 30 weight percent tripropylene glycol diacrylate (TRPGDA) sold by UCB Chemicals, 25 weight percent TMPTA (a reactive diluent), 35 weight percent of the blue-colored urethane acrylate oligomer reaction product of the synthesis described in Example 2, 10 weight percent hexanediol diacrylate (HDODA) (a reactive diluent) and about 5 weight percent of DAROCUR™ 4268. The coating composition was applied over the outer coating of an optical fiber and cured by exposure to ultraviolet radiation in a suitable wavelength range to form a blue-colored tertiary protective polymeric coating.

### Example 8 - Blue Urethane Acrylate

11.16 g of isophorone diisocyanate and 0.35 g of dibutyltin dilaurate was heated to 50 °C. 16.34 g of 1,5-bis ((2,2-dimethyl-3-hydroxypmpyl) amino)-4,8-bis((4-methyIphenyl)thio) anthraquinone was mixed with THF to get the anthracenedione into solution and added slowly to the reaction. The reaction temperature was maintained at 50 °C for three hours. The temperature was reduced to 40 °C and 0.25 g of 2,6-di-*tert*-butyl-4-methylphenol and 30 g of 1,6 hexanediol diacrylate was added to the reaction. 5.819 g of 2-hydroxyethyl acrylate was then added dropwise. The reaction was run to completion by measuring the isocyanate peak at 2270 cm⁻¹ by FTIR. The THF was evaporated off of the mixture. The resulting urethane acrylate compound was blue in color.

### Example 9 - Blue-Colored Optical Fiber Outer Coating

A blue ultraviolet radiation-curable coating composition for providing a colored outer coating was made by combining 65 weight percent of EBECRYL™ 4827, which is a urethane acrylate oligomer (bulk oligomer), 30 weight percent tripropylene glycol diacrylate (TPGDA), which is a reactive diluent, 1 percent of the blue-colored urethane acrylate reaction product of the synthesis described in Example 8 and about 4 percent of DAROCUR™ 4268 which is a photoinitiator. The coating composition was applied to an inner coating layer and cured by exposing the composition to ultraviolet radiation at a suitable wavelength range to form a blue-colored outer protective polymeric coating.

### Example 10 - Blue-Colored Optical Fiber Inner Coating

A blue ultraviolet radiation-curable coating composition for providing a colored inner coating was made by combining 65 weight percent of EBECRYL™ 230, which is a urethane acrylate oligomer, 29 weight percent β-CEA monofunctional reactive diluent, 1 percent of the blue-colored urethane acrylate reaction product of the synthesis described in Example 8 and about 5 weight percent DAROCURT™ 4265, which is a photoinitiator. The coating composition was applied to the cladding of an optical fiber and cured by exposure to ultraviolet radiation in a suitable wavelength range to form a blue colored inner protective fiber coating.

### Colored Optical Fiber Ribbon

Referring to FIG. 2, there is shown a typical splittable optical fiber ribbon 22 containing two planar arrays 24a, 24b of optical fibers 21. Each of the arrays of optical fibers are enveloped by a primary matrix 26a, 26b that hold the fiber arrays together. Both primary matrices 26a, 26b are enveloped by a secondary matrix 28. The primary matrices 26a, 26b, the secondary matrix 28 or both may be colored in accordance with the present invention. An example of a colored matrix is described below.

### Example 11 - Blue Ribbon Matrix

A composition for forming a blue-colored optical fiber ribbon matrix was made by combining 6 weight percent of the blue oligomer reaction product described in Example 2, 60 weight percent EBECRYL™ 4866 trifunctional oligomer (bulk oligomer), 30 weight percent TMPTA (reactive diluent) and 4 weight percent DAROCUR™ 4268 photoinitiator. The resulting composition was applied over a planar array of optical fibers using ordinary application methods with a die or an applicator. The composition was cured by exposure to ultraviolet radiation in a suitable wavelength range to form a blue-colored matrix over the planar array of optical fibers.

### Example 12 - Yellow Reactive Dye Color Concentrate

A reactive dye color concentrate containing a functionalized yellow dye compound was prepared according to the procedure below:

2 equivalents of isophorone diisocyanate (IPDI), 0.01 mol dibutyl tin dilaurate, and tetrahydrofurfuryl acrylate (amount sufficient to ultimately give 15% by weight chromophore moiety concentration in the color concentrate) were charged to a reactor, stirred at 650 rpm and heated to 50 °C. One (1) equivalent of 2,2'-((9,10-dihydro-9,10-dioxo-1,5-anthracenediyl)bis(thio))bis-benzoic acid, 2-hydroxyethyl ester anthraquinone yellow dye was then added slowly to the reactor over a 1-hour period. The tetrahydrofurfuryl acrylate monomer served as a solvent, allowing the dye to be dissolved into solution and to react with the diisocyanate forming an isocyanate-containing, dye-containing compound. The dye was added slowly to the reactor so as not to saturate the solution, which would essentially stop the urethanization reaction.

After completion of the addition of the dye, the reaction was allowed to proceed for a 3-hour period while the temperature is maintained at 50C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was stirred for 2 hours. The reaction was monitored to completion by measuring the isocyanate peak at 2270 cm⁻¹ by FTIR. At the end of the two-hour reaction period, there was no free isocyanate present in the mixture as measured by FTIR.

The resulting yellow color concentrate, which contained 15% by weight of chromophore moiety based on the total weight of the color concentrate *(i.e.,* the amount of 15 wt% chromophore moiety does not include the weight of the urethane or acrylate), was filtered through a 1-micron absolute filter. There were no solids recovered from the filter.

### Example 13 - Orange Reactive Dye Color Concentrate

A reactive dye color concentrate containing a functionalized orange dye compound was prepared according to the procedure below:

2 equivalents of isophorone diisocyanate (IPDI), 0.01 mol dibutyl tin dilaurate, and tetrahydrofurfuryl acrylate (amount sufficient to ultimately give 15% by weight chromophore moiety concentration in the color concentrate) were charged to a reactor, stirred at 650 rpm and heated to 50 °C. 1 equivalent of 2,5-bis-(phenylamino)terephthalic acid bis-(2-hydroxyethyl) ester anthraquinone orange dye was then added slowly to the reactor over a 1-hour period. The tetrahydrofurfuryl acrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.

After completion of the addition of the dye, the reaction was allowed to proceed for a 3-hour period while the temperature was maintained at 50 °C. After the 3-hour reaction period, the temperature was reduced to 40 °C and 0.02 mol of 2.6-Di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270cm⁻¹, by FTIR. At the end of the two-hour reaction period, there was no free isocyanate present in the mixture as measured by FTIR.

The resulting orange color concentrate, which contained 15% by weight of chromophore moiety based on the total weight of the color concentrate (*i.e.,* the amount of 15 wt% chromophore moiety does not include the weight of the urethane or acrylate), was filtered through a 1-micron absolute filter. There were no solids recovered from the filter.

### Example 14 - Red Reactive Dye Color Concentrate

The reactive dye color concentrate containing a functionalized red dye compound was prepared according to the procedure below:

2 equivalents of isophorone diisocyanate (IPDI), 0.01 mol dibutyl tin dilaurate, and tetrahydrofurfuryl acrylate (amount sufficient to ultimately give 15% by weight chromophore moiety concentration in the color concentrate) were charged to a reactor, stirred at 650 rpm and heated to 50 °C. One (1) equivalent of 1,5-bis-{(3-hydroxypropyl)aminol-9,10-anthracenedione red anthraquinone dye was then added slowly to the reactor over a 1-hour period. The tetrahydrofurfuryl acrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.

After completion of the addition of the dye, the reaction was allowed to proceed for a 3-hour period while the temperature was maintained at 50 °C. After the 3-hour reaction period, the temperature was reduced to 40 °C and 0.02 mol of 2.6-Di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was stirred for 2 hours. The reaction was monitored to completion by measuring the isocyanate peak at 2270 cm⁻¹ by FTIR At the end of the two-hour reaction period, there was no free isocyanate present in the mixture as measured by FTIR.

The resulting red color concentrate, which contained 15% by weight of chromophore moiety based on the total weight of the color concentrate (*i.e.*, the amount of 15 wt% chromophore moiety does not include the weight of the urethane or acrylate), was filtered through a 1-micron absolute filter. There were no solids recovered from the filter.

### Comparative Example 1 - Yellow Reactive Dye Color Concentrate

A reactive dye color concentrate containing a functionalized yellow dye compound was prepared according to the procedure below:
Two (2) equivalents of isophorone diisocyanate (IPDI), 0.01 mol dibutyl tin dilaurate, and tripropylene glycol diacrylate (TPGDA) (amount sufficient to ultimately give 15% by weight chromophore moiety concentration in the color concentrate) were charged to a reactor, stirred at 650 rpm and heated to 50 °C. One (1) equivalent of 2,2'-((9,10-dihydro-9,10-dioxo-1,5-anthracenediyl)bis(thio))bis-benzoic acid, 2 hydroxyethyl ester anthraquinone yellow dye was then added slowly to the reactor over a 1-hour period. The tripropylene glycol diacrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-Di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270cm⁻¹ by FTIR. At the end of the two-hour reaction period, there were approximately 0.5 equivalents of free isocyanate present.
The resulting yellow color concentrate was filtered through a 1.2-micron absolute filter. Approximately 0.6 equivalents of solid diol dye (unreacted) was recovered from the filter. The reaction was unsuccessful due to lack of solubility of the yellow anthraquinone dye in the reaction mixture when using monomer TPGDA.

### Comparative Example 2 - Orange Reactive Dye Color Concentrate

A reactive dye color concentrate containing a functionalized orange dye compound was prepared according to the procedure below:

2 equivalents of isophorone diisocyanate (IPDI), 0.01 mol dibutyl tin dilaurate, and tripropylene glycol diacrylate (TPGDA) (amount sufficient to ultimately give 15% by weight chromophore moiety concentration in the color concentrate) were charged to a reactor, stirred at 650 rpm and heated to 50 °C. One (1) equivalent of 2,5-bis-(phenylamino)terephthalic acid bis-(2-hydmxyethyl) ester anthraquinone orange dye was then added slowly to the reactor over a 1-hour period. The tripropylene glycol diacrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.

After completion of the addition of the dye, the reaction was allowed to proceed for a 3-hour period while the temperature was maintained at 50°C. After the 3-hour reaction period, the temperature was reduced to 40°C and 0.02 mol of 2.6-Di-*tert*-butyl-4-methylphenol (inhibitor) is added to the reaction solution. One (1) equivalent of 2-hydroxyethyl acrylate was added slowly and reacted with the isocyanate of the isocyanate-containing, dye-containing compound. The temperature was maintained at 40°C and the mixture was allowed to stir for 2 hours. The reaction was monitored to completion by measuring the isocyanate peak at 2270 cm⁻¹ by FTIR. At the end of the two-hour reaction period, there were approximately 0.2 equivalents of free isocyanate present as measured by FTIR.

The resulting orange color concentrate was filtered through a 1.2-micron absolute filter. Approximately 0.2 equivalents of unreacted solid orange anthraquinone dye were recovered from the filter. The reaction was unsuccessful due to limited solubility of the orange diol dye in the reaction mixture when using monomer TPGDA.

### Comparative Example 3 - Red Reactive Dye Color Concentrate

A reactive dye color concentrate containing a functionalized red dye compound was prepared according to the procedure below:
Two (2) equivalents of isophorone diisocyanate (IPDI), 0.01 mol dibutyl tin dilaurate, and tripropylene glycol diacrylate (TPGDA) (amount sufficient to ultimately give 15% by weight chromophore moiety concentration in the color concentrate) were charged to a reactor, stirred at 650 rpm and heated to 50 °C. One (1) equivalent 1,5-bis-{(3-hydroxypropyl)amino}-9,10-anthracenedione red anthraquinone dye was then added slowly to the reactor over a 1-hour period. The tripropylene glycol diacrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.
After completion of the addition of the dye, the reaction was allowed to proceed for a 3-hour period while the temperature was maintained at 50°C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270 cm⁻¹ by FTIR. At the end of the two-hour reaction period, there were approximately 0.8 equivalents of free isocyanate present as measured by FTIR.
The resulting red color concentrate was filtered through a 1-micron absolute filter. Approximately 0.6 equivalents of unreacted solid red diol dye were recovered from the filter. The reaction was unsuccessful due to limited solubility of the red anthraquinone dye in the reaction mixture when using monomer TPGDA.

### Comparative Example 4 - Yellow Reactive Dye Color Concentrate

A reactive dye color concentrate containing a functionalized yellow dye compound was prepared according to the procedure below:
Two (2) equivalents of isophorone diisocyanate (IPDI), 0.01 mol dibutyl tin dilaurate, and 2-phenoxyethyl acrylate (2-PEA) (amount sufficient to ultimately give 15% by weight chromophore moiety concentration in the color concentrate) were charged to a reactor, stirred at 650 rpm and heated to 50 °C. One (1) equivalent of 2,2'-((9,10-dihydro-9,10-dioxo-1,5-anthracenediyl)bis(thio))bis-benzoic acid, 2 hydroxyethyl ester anthraquinone yellow dye was then added slowly to the reactor over a 1-hour period. The 2-phenoxyethyl acrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-Di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270 cm⁻¹ by FTIR. At the end of the two-hour reaction period, there were approximately 0.8 equivalents of free isocyanate present.
The resulting yellow color concentrate was filtered through a 1.2-micron absolute filter. Approximately 0.5 equivalents of solid diol dye (unreacted) was recovered from the filter. The reaction was unsuccessful due to lack of solubility of the yellow anthraquinone dye in the reaction mixture when using monomer 2-PEA.

### Comparative Example 5 - Orange Reactive Dye Color Concentrate

A reactive dye color concentrate containing a functionalized orange dye compound was prepared according to the procedure below:
Two (2) equivalents of isophorone diisocyanate (IPDI), 0.01 mol dibutyl tin dilaurate, and 2-phenoxyethyl acrylate (2-PEA) (amount sufficient to ultimately give 15% by weight chromophore moiety concentration in the color concentrate) were charged to a reactor, stirred at 650 rpm and heated to 50 °C. One (1) equivalent of 2,5 bis-(phenylamino)terephthalic acid bis-(2-hydroxyethyl) ester anthraquinone orange dye was then added slowly to the reactor over a 1-hour period. The 2-phenoxyethyl acrylate monomer served as a solvent allowing the dye to be dissolved into solution and to react with the diisocyanate forming an isocyanate-containing, dye-containing compound. The dye be added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270 cm⁻¹ by FTIR. At the end of the two-hour reaction period, there were approximately 0.8 equivalents of free isocyanate present as measured by FTIR.
The resulting orange color concentrate was filtered through a 1.2-micron absolute filter. Approximately 0.7 equivalents of unreacted solid orange anthraquinone dye were recovered from the filter. The reaction was unsuccessful due to limited solubility of the orange diol dye in the reaction mixture when using monomer 2-PEA.

### Comparative Example 6 - Red Reactive Dye Color Concentrate

A reactive dye color concentrate containing a functionalized red dye compound was prepared according to the procedure below:
Two (2) equivalents of isophorone diisocyanate (IPDI), 0.01 mol dibutyl tin dilaurate, and 2-phenoxyethyl acrylate (2-PEA) (amount sufficient to ultimately give 15% by weight chromophore moiety concentration in the color concentrate) were charged to a reactor, stirred at 650 rpm and heated to 50 °C. 1 equivalent 1,5-bis-{(3-hydroxypropyl)amino}-9,10-anthracenedione red anthraquinone dye was then added slowly to the reactor over a 1-hour period. The 2-phenoxyethyl acrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270 cm⁻¹ by FTIR. At the end of the two-hour reaction period, there were approximately 0.8 equivalents of free isocyanate present as measured by FTIR.
The resulting red color concentrate was filtered through a 1-micron absolute filter. Approximately 0.6 equivalents of unreacted solid red diol dye were recovered from the filter. The reaction was unsuccessful due to limited solubility of the red anthraquinone dye in the reaction mixture when using monomer 2-PEA.

### Comparative Example 7 - Yellow Reactive Dye Color Concentrate

A reactive dye color concentrate containing a functionalized yellow dye compound was prepared according to the procedure below:
Two (2) equivalents of isophorone diisocyanate (IPDI), 0.01 mol dibutyl tin dilaurate, and isobornyl acrylate (IBOA) (amount sufficient to ultimately give 15% by weight chromophore moiety concentration in the color concentrate) were charged to a reactor, stirred at 650 rpm and heated to 50 °C. One (1) equivalent of 2,2'-((9,10-dihydro-9,10-dioxo-1,5-anthracenediyl)bis(thio))bis-benzoic acid, 2 hydroxyethyl ester anthraquinone yellow dye was then added slowly to the reactor over a 1-hour period. The isobomyl acrylate monomer served as a solvent allowing the dye to be dissolved into solution and to react with the diisocyanate forming an isocyanate-containing, dye-containing compound. The dye was added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40 °C and the mixture was allowed to stir for 2 hours. The reaction was monitored to completion by measuring the isocyanate peak at 2270 cm⁻¹ by FTIR. At the end of the two-hour reaction period, there were approximately 0.6 equivalents of free isocyanate present.
The resulting yellow color concentrate was filtered through a 1.2-micron absolute filter. Approximately 0.6 equivalents of solid diol dye (unreacted) was recovered from the filter. The reaction was unsuccessful due to lack of solubility of the yellow anthraquinone dye in the reaction mixture when using monomer IBOA.

### Comparative Example 8 - Orange Reactive Dye Color Concentrate

A reactive dye color concentrate containing a functionalized orange dye compound was prepared according to the procedure below:
Two (2) equivalents of isophorone diisocyanate (IPDI), 0.01 mol dibutyl tin dilaurate, and isobornyl acrylate (IBOA) (amount sufficient to ultimately give 15% by weight chromophore moiety concentration in the color concentrate) were charged to a reactor, stirred at 650 rpm and heated to 50 °C. One (1) equivalent of 2,5-bis-(phenylamino)terephthalic acid bis-(2-hydroxyethyl) ester anthraquinone orange dye was then added slowly to the reactor over a 1-hour period. The isobornyl acrylate monomer served as a solvent allowing the dye to be dissolved into solution and to react with the diisocyanate forming an isocyanate-containing, dye-containing compound. The dye be added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40C and the mixture was allowed to stir for 2 hours. The reaction was monitored to completion by measuring the isocyanate peak at 2270 cm⁻¹ by FTIR. At the end of the two-hour reaction period, there were approximately 0.4 equivalents of free isocyanate present as measured by FTIR.
The resulting orange color concentrate was filtered through a 1.2-micron absolute filter. Approximately 0.4 equivalents of unreacted solid orange anthraquinone dye were recovered from the filter. The reaction was unsuccessful due to limited solubility of the orange diol dye in the reaction mixture when using monomer IBOA.

### Comparative Example 9 - Red Reactive Dye Color Concentrate

A reactive dye color concentrate containing a functionalized red dye compound was prepared according to the procedure below:
Two (2) equivalents of isophorone diisocyanate (IPDI), 0.01 mol dibutyl tin dilaurate, and isobornyl acrylate (IBOA) (amount sufficient to ultimately give 15% by weight chromophore moiety concentration in the color concentrate) were charged to a reactor, stirred at 650 rpm and heated to 50 °C. One (1) equivalent 1,5-bis-{(3-hydroxypropyl)amino}-9,10-anthracenedione red anthraquinone dye was then added slowly to the reactor over a 1-hour period. The isobornyl acrylate monomer served as a solvent allowing the dye to be dissolved into solution and to react with the diisocyanate forming an isocyanate-containing, dye-containing compound. The dye be added slowly to the reactor so as not to saturate the solution, which would essentially stop the urethanization reaction.
After completion of the addition of the dye, the reaction was allowed to proceed for a 3-hour period while the temperature was maintained at 50 °C. After the 3-hour reaction period, the temperature was reduced to 40 °C and 0.02 mol of 2.6-di-*tert*-butyl-4-methylphenol (inhibitor) was added to the reaction solution. One (1) equivalent of 2-hydroxyethyl acrylate was added slowly and reacted with the isocyanate of the isocyanate-containing, dye-containing compound. The temperature was maintained at 40C and the mixture was allowed to stir for 2 hours. The reaction was monitored to completion by measuring the isocyanate peak at 2270 cm⁻¹ by FTIR. At the end of the two-hour reaction period, there were approximately 0.8 equivalents of free isocyanate present as measured by FTIR.
The resulting red color concentrate was filtered through a 1-micron absolute filter. Approximately 0.7 equivalents of unreacted solid red diol dye were recovered from the filter. The reaction was unsuccessful due to limited solubility of the red anthraquinone dye in the reaction mixture when using monomer IBOA.

## Claims

1. A telecommunication element having a color identifying coating thereon, the telecommunication element comprising:
an elongated communication transmission medium; and
a coating having an identifying color applied on at least a portion of the transmission medium, wherein said coating comprises a radiation-cured, crosslinked, polymeric network, and wherein the identifying color in the coating is at least in part provided by at least one chromophore moiety covalently bonded by at least one covalent bond to said polymeric network.

2. The telecommunications element of claim 1, wherein:
(a) the elongated transmission medium is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon; and
(b) the identifying color is thermally stable and light fast.

3. The telecommunications element of claim 1, wherein the identifying color in the coating is at least in part provided by at least one anthraquinone moiety covalently bonded by at least one covalent bond to said polymeric network.

4. The telecommunications element of claim 1, wherein the identifying color in the coating is at least in part provided by at least one methine moiety covalently bonded by at least one covalent bond to said polymeric network.

5. The telecommunications element of claim 1, wherein the identifying color in the coating is at least in part provided by at least one azo moiety covalently bonded by at least one covalent bond to said polymeric network.

6. A radiation-curable, chromophore-containing compound comprising at least one radiation-curable group and at least one chromophore moiety, wherein the radiation-curable, chromophore-containing compound comprises the reaction product of :
(a) an isocyanate-containing compound comprising (i) at least one isocyanate group and (ii) the at least one chromophore moiety; and
(b) a radiation-curable compound comprising (i) at least one isocyanate-reactive functional group and (ii) the at least one radiation-curable group,
wherein the at least one radiation-curable group of said radiation-curable, chromophore-containing compound is covalently bonded to said radiation-curable, chromophore-containing compound by at least one covalent bond formed by reacting an isocyanate-reactive functional group (i) of said radiation-curable compound (b) with an isocyanate group (i) of said isocyanate-containing compound (a), and said isocyanate-containing compound (a) is the reaction product of:
(c) a chromophore-containing compound comprising (i) a chromophore moiety and (ii) at least one isocyanate-reactive functional group; and
(d) a polyisocyanate.

7. The radiation-curable, chromophore-containing compound of claim 6, wherein the at least one isocyanate-reactive functional group (i) of said radiation-curable compound (b) and the at least one isocyanate-reactive functional group (ii) of said chromophore-containing compound (c) are independently selected from the group consisting of -OH, -NH₂ and -SH.

8. The radiation-curable, chromophore-containing compound of claim 6, wherein the at least one radiation-curable group (ii) of said radiation-curable compound (b) comprises ethylenic unsaturation.

9. The radiation-curable, chromophore-containing compound of claim 8, wherein the ethylenically-unsaturated, radiation-curable group (ii) of said radiation-curable compound (b) comprises a (meth)acrylate.

10. The radiation-curable, cbromophore-containing compound of claim 6, wherein the at least one radiation-curable group (ii) of said radiation-curable compound (b) comprises an epoxy group.

11. The radiation-curable, chromophore-containing compound of claim 6, wherein the polyisocyanate (d) is a diisocyanate.

12. The radiation-curable, chromophore-containing compound of claim 6, wherein the at least one chromophore moiety (i) of said chromophore-containing compound (c) is a methine dye.

13. The radiation-curable, chromophore-containing compound of claim 6, wherein the at least one chromophore moiety (i) of said chromophore-containing compound (c) is an azo dye.

14. The radiation-curable, chromophore-containing compound of claim 6, wherein the at least one chromophore moiety (i) of said chromophore-containing compound (c) is an anthraquinone dye.

15. The radiation-curable, chromophore-containing compound of claim 14, wherein the anthraquinone dye has the following formula: 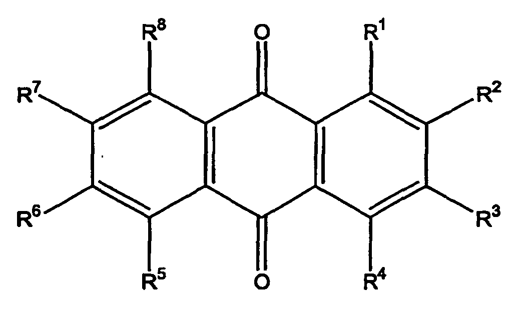 wherein R groups R¹, R², R³, R⁴, R⁵, R⁶, R⁷ and R⁸ are each independently selected from the group consisting of hydrogen, amino, hydroxy, halogen, nitro, carboxylated alkali metal, sulfated alkali metal and a hydrocarbyl group optionally containing one or more heteroatoms, provided that at least two of R groups R¹ through R⁸ have at least one isocyanate-reactive functional group selected from the group consisting of -OH, NH₂ and -SH, and further wherein adjacent R groups from among R¹ through R⁸ can form a ring.

16. The radiation-curable, chromophore-containing compound of claim 15, wherein from 1 to 3 of said R groups R¹ through R⁸ have the following formula: 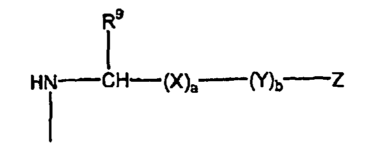 wherein R⁹ is hydrogen or an alkyl group having from 1 to 12 carbon atoms, X is -CH₂-, a is an integer from 1 to 6, Y represents polymeric units of hydroxy alkylenes or alkylene oxide monomers selected from the group consisting of ethylene oxide, propylene oxide, butylene oxide, cyclohexane oxide, and glycidol, b is either 0 or 1, and Z is -OH, -NH₂, or -SH group, and
further wherein the remainder of said R groups R¹ through R⁸ are selected from the group consisting of hydrogen, amino, hydroxy, halogen, nitro, carboxylated alkali metal and sulfated alkali metal.

17. The radiation-curable, chromophore-containing compound of claim 15, wherein the anthraquinone dye has the following formula: 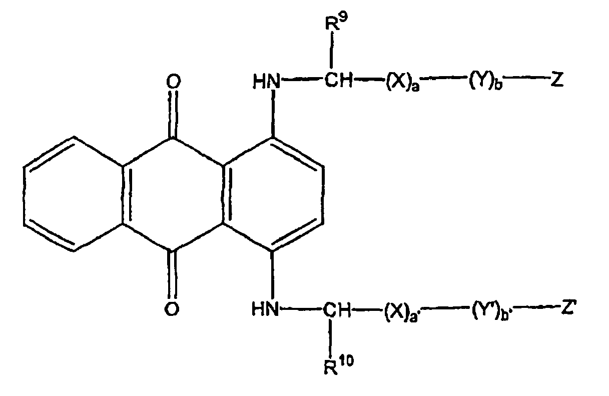 wherein R⁹ and R¹⁰ are independently selected from hydrogen or an alkyl group having from 1 to 12 carbon atoms, X is -CH₂-, a and a' independently are integers from 1 to 6, Y and Y' are independently represent polymeric units of hydroxy alkylenes or alkylene oxide monomers selected from the group consisting of ethylene oxide, propylene oxide, butylene oxide, cyclohexane oxide, and glycidol, b and b' are independently either 0 or 1, and Z and Z' independently are -OH, -NH₂, or -SH groups.

18. The radiation-curable, chromophore-containing compound of claim 17, wherein the anthraquinone dye has the formula: 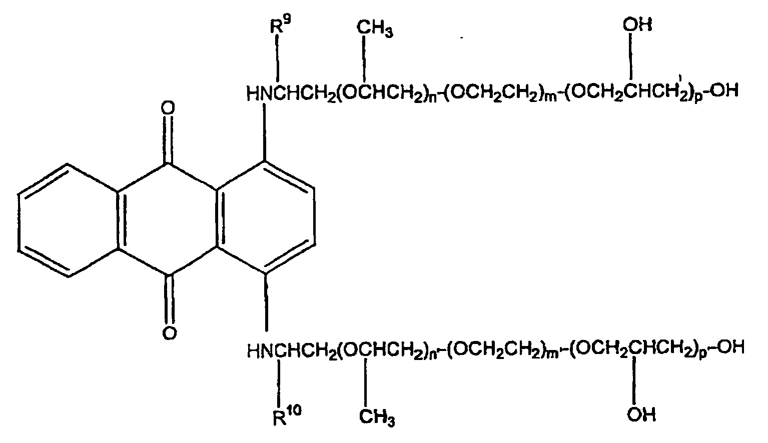 wherein n, n', m, m', p, and p' independently have a value of from 0 to 40.

19. The radiation-curable, chromophore-containing compound of claim 17, wherein the anthraquinone dye has the formula:

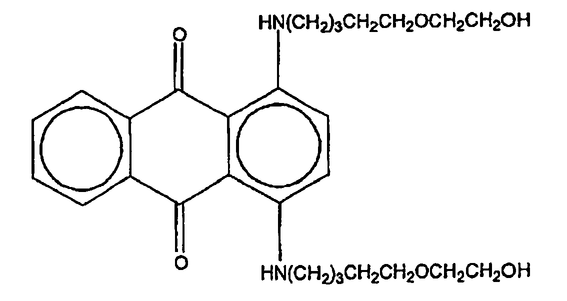

20. The radiation-curable, chromophore-containing compound of claim 14, wherein the anthraquinone dye is selected from the group consisting of 1,5-bis((3-hydroxy-2,2-dimethylpropyl)amino)-9,10-anthracenedione; 2,2'-((9,10-dihydro-9,10-dioxo-1,5-anthracenediyl)bis(thio))bis-benzoic acid, 2-hydroxyethyl ester; and 1,5-bis((2,2-dimethyl-3-hydroxypropyl)amino)-4,8-bis((4-methylphenyl)thio) anthraquinone.

21. The radiation-curable, chmmophore-containing compound of claim 14, wherein the anthraquinone dye is 1,5-bis((2,2-dimethyl-3-hydroxypropyl)amino)-4,8-bis((4-methylphenyl)thio) anthraquinone.

22. A radiation-curable composition, comprising:
(a) a non-chromophore-containing, radiation-curable oligomer; and
(b) a radiation-curable, chromophore-containing compound according to claim 6.

23. The radiation-curable composition of claim 22, wherein the composition further comprises TiO₂.

24. The radiation-curable composition of claim 22, wherein the composition further comprises one or more of a photoinitiator, a reactive diluent, a stabilizer, and a surfactant.

25. A substrate having the radiation-curable composition of claim 22 on at least a portion thereof.

26. The substrate of claim 25, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

27. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of:
providing a substrate;
providing a radiation-curable composition according to claim 22;
applying the radiation-curable composition of claim 22 to at least a portion of the substrate; and
subjecting the applied composition for a suitable period of time to radiation of a suitable wavelength and intensity to cause curing of the composition into the color-identifying, radiation-cured composition.

28. The method of claim 27, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

29. A dye concentrate comprising the radiation-curable, chromophore-containing compound of claim 6 and tetrahydrofurfuryl acrylate (THFA).

30. A radiation-curable composition, comprising:
(a) a non-chromophore-containing, radiation-curable oligomer; and
(b) a dye concentrate according to claim 29.

31. The radiation-curable composition of claim 30, wherein the composition further comprises TiO₂.

32. The radiation-curable composition of claim 30, wherein the composition further comprises one or more of a photoinitiator, a reactive diluent, a stabilizer, and a surfactant.

33. A substrate having the radiation-curable composition of claim 30 on at least a portion thereof.

34. The substrate of claim 33, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

35. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of:
providing a substrate;
providing a radiation-curable composition according to claim 30;
applying the radiation-curable composition of claim 30 to at least a portion of the substrate; and
subjecting the applied composition for a suitable period of time to radiation of a suitable wavelength and intensity to cause curing of the composition into the color-identifying, radiation-cured composition.

36. The method of claim 35, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

37. The dye concentrate of claim 29, wherein the dye concentrate comprises greater than 5 wt% chromophore moiety, based on the total weight of the dye concentrate.

38. A radiation-curable composition, comprising:
(a) a non-chromophore-containing, radiation-curable oligomer; and
(b) a dye concentrate according to claim 37.

39. The dye concentrate of claim 29, wherein the dye concentrate comprises from 10 wt% to 35 wt% of chromophore moiety, based on the total weight of the dye concentrate.

40. A radiation-curable composition, comprising:
(a) a non-chromophore-containing, radiation-curable oligomer; and
(b) a dye concentrate according to claim 39.

41. A dye concentrate comprising a blend of two or more radiation-curable, chromophore-containing compounds according to claim 6 and tetrahydrofurfuryl acrylate (THFA), wherein at least the chromophore moiety of a first radiation-curable, chromophore-containing compound according to claim 6 is different from the chromophore moiety of a second radiation-curable, chromophore-containing compound according to claim 6.

42. A radiation-curable composition, comprising:
(a) a non-chromophore-containing, radiation-curable oligomer, and
(b) a dye concentrate according to claim 41.

43. A radiation-curable, chromophore-containing compound comprising at least one radiation-curable group and at least one chromophore moiety, wherein the radiation-curable, chromophore-containing compound comprises the reaction product of:
(a) a chromophore-containing compound comprising (i) at least one isocyanate-reactive functional group and (ii) the at least one chromophore moiety; and
(b) a radiation-curable compound comprising (i) at least one isocyanate group and (ii) the at least one radiation-curable group,
wherein the at least one radiation-curable group of said radiation-curable, chromophore-containing compound is covalently bonded to said radiation-curable, chromophore-containing compound by at least one covalent bond formed by reacting an isocyanate group (i) of said radiation-curable compound (b) with an isocyanate-reactive functional group (i) of said chromophore-containing compound (a).

44. The radiation-curable, chromophore-containing compound of claim 43, wherein the at least one isocyanate-reactive functional group (i) of said chromophore-containing compound (a) is selected from the group consisting of -OH, -NH₂ and -SH.

45. The radiation-curable, chromophore-containing compound of claim 43, wherein the at least one radiation-curable group (ii) of said radiation-curable compound (b) comprises ethylenic unsaturation.

46. The radiation-curable, chromophore-containing compound of claim 45, wherein the ethylenically-unsaturated, radiation-curable group (ii) of said radiation-curable compound (b) comprises a meth(acrylate).

47. The radiation-curable, chromophore-containing compound of claim 43, wherein the at least one radiation-curable group (ii) of said radiation-curable compound (b) comprises an epoxy group.

48. The radiation-curable, chromophore-containing compound of claim 43, wherein the at least one chromophore moiety (ii) of said chromophore-containing compound (a) is a methine dye.

49. The radiation-curable, chromophore-containing compound of claim 43, wherein the at least one chromophore moiety (ii) of said chromophore-containing compound (a) is an azo dye.

50. The radiation-curable, chromophore-containing compound of claim 43, wherein the at least one chromophore moiety (ii) of said chromophore-containing compound (a) is an anthraquinone dye.

51. The radiation-curable, chromophore-containing compound of claim 43, wherein the chromophore-containing compound (a) is an anthraquinone dye having the formula: 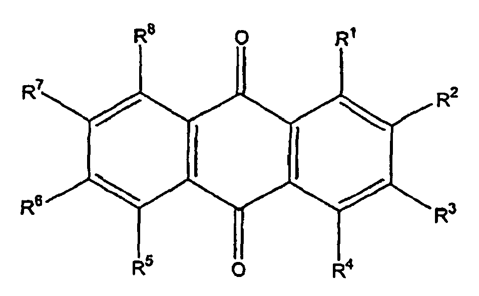 wherein R groups R¹, R², R³, R⁴, R⁵, R⁶, R⁷ and R⁸ are each independently selected from the group consisting of hydrogen, amino, hydroxy, halogen, nitro, carboxylated alkali metal, sulfated alkali metal and a hydrocarbyl group optionally containing one or more heteroatoms,
provided that at least two of R groups R¹ through R⁸ have at least one isocyanate-reactive functional group selected from the group consisting of -OH, -NH₂ and -SH, and further wherein adjacent R groups from among R¹ through R⁸ can form a ring.

52. The radiation-curable, chromophore-containing compound of claim 51, wherein from 1 to 3 of said R groups R¹ through R⁸ have the following formula: 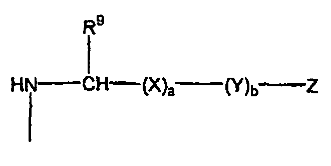 wherein R⁹ is hydrogen or an alkyl group having from 1 to 12 carbon atoms, X is -CH₂-, a is an integer from 1 to 6, Y represents polymeric units of hydroxy alkylenes or alkylene oxide monomers selected from the group consisting of ethylene oxide, propylene oxide, butylene oxide, cyclohexane oxide, and glycidol, b is either 0 or 1, and Z is -OH, -NH₂, or -SH group, and
further wherein the remainder of said R groups R¹ through R⁸ are selected from the group consisting of hydrogen, amino, hydroxy, halogen, nitro, carboxylated alkali metal and sulfated alkali metal.

53. The radiation-curable, chromophore-containing compound of claim 51, wherein the anthraquinone dye has the formula: 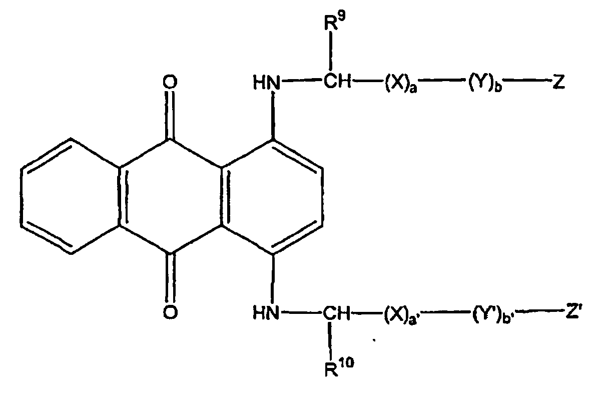 wherein R⁹ and R¹⁰ are independently selected from hydrogen or an alkyl group having from 1 to 12 carbon atoms, X is -CH₂-, a and a' independently are integers from 1 to 6, Y and Y' are independently represent polymeric units of hydroxy alkylenes or alkylene oxide monomers selected from the group consisting of ethylene oxide, propylene oxide, butylene oxide, cyclohexane oxide, and glycidol, b and b' are independently either 0 or 1, and Z and Z' independently are -OH, -NH₂, or -SH groups.

54. The radiation-curable, chromophore-containing compound of claim 53, wherein the anthraquinone dye has the formula: 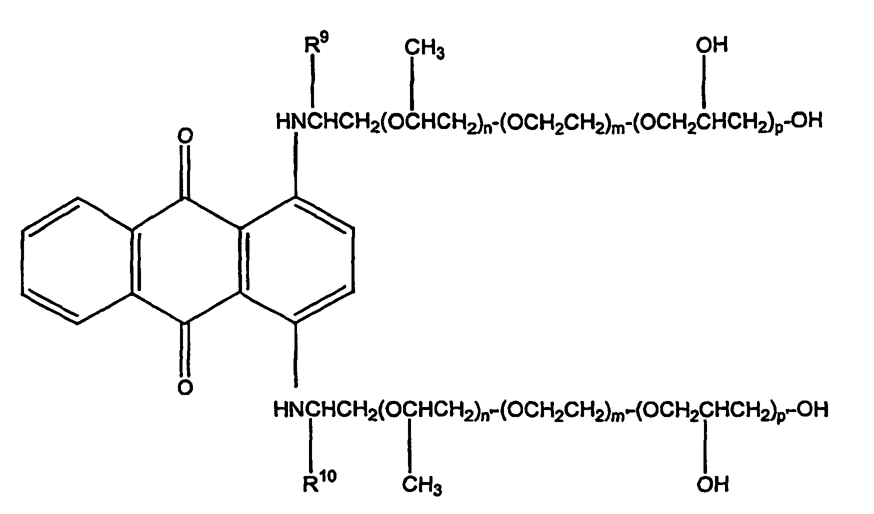 wherein n, n', m, m', p, and p' independently have a value of from 0 to about 40.

55. The radiation-curable, chromophore-containing compound of claim 53, wherein the anthraquinone dye has the formula:

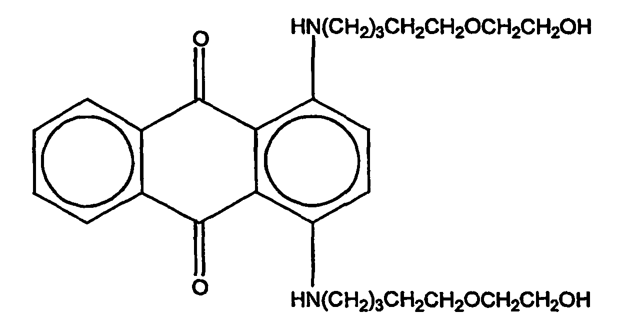

56. The radiation-curable, chromophore-containing compound of claim 43, wherein the chromophore-containing compound (a) is selected from the group consisting of 1,5-bis((3-hydroxy-2,2-dimethylpropyl)amino)-9,10-anthracenedione; 2,2'-((9,10-dihydro-9,10-dioxo-1,5-anthracenediyl)bis(thio))bis-benzoic acid, 2-hydroxyethyl ester; and 1,5-bis((2,2-dimethyl-3-hydroxypropyl)amino)-4,8-bis((4-methylphenyl)thio) anthraquinone.

57. The radiation-curable, chromophore-containing compound of claim 56, wherein the chromophore-containing compound (a) is 1,5-bis((2,2-dimethyl-3-hydroxypropyl)amino)-4,8-bis((4-methylphenyl)thio) anthraquinone.

58. A radiation-curable composition, comprising:
(a) a non-chromophore-containing, radiation-curable oligomer; and
(b) a radiation-curable, chromophore-containing compound according to claim 43.

59. The radiation-curable composition of claim 58, wherein the composition further comprises TiO₂.

60. The radiation-curable composition of claim 58, wherein the composition further comprises one or more of a photoinitiator, a reactive diluent, a stabilizer, and a surfactant.

61. A substrate having the radiation-curable composition of claim 58 on at least a portion thereof.

62. The substrate of claim 61, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

63. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of :
providing a substrate;
providing a radiation-curable composition according to claim 58;
applying the radiation-curable composition of claim 58 to at least a portion of the substrate; and
subjecting the applied composition for a suitable period of time to radiation of a suitable wavelength and intensity to cause curing of the composition into the color-identifying, radiation-cured composition.

64. The method of claim 63, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

65. A dye concentrate comprising the radiation-curable, chromophore-containing compound of claim 43 and tetrahydrofurfuryl acrylate (THFA).

66. A radiation-curable composition, comprising:
(a) a non-chromophore-containing, radiation-curable oligomer, and
(b) a dye concentrate according to claim 65.

67. The radiation-curable composition of claim 66, wherein the composition further comprises TiO₂

68. The radiation-curable composition of claim 66, wherein the composition further comprises one or more of a photoinitiator, a reactive diluent, a stabilizer, and a surfactant.

69. A substrate having the radiation-curable composition of claim 66 on at least a portion thereof.

70. The substrate of claim 69, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

71. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of
providing a substrate;
providing a radiation-curable composition according to claim 66;
applying the radiation-curable composition of claim 66 to at least a portion of the substrate; and
subjecting the applied composition for a suitable period of time to radiation of a suitable wavelength and intensity to cause curing of the composition into the color-identifying, radiation-cured composition.

72. The method of claim 71, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

73. The dye concentrate of claim 65, wherein the dye concentrate comprises greater than 5 wt% chromophore moiety, based on the total weight of the dye concentrate.

74. A radiation-curable composition, comprising:
(a) a non-chromophore-containing radiation-curable oligomer; and
(b) a dye concentrate according to claim 73.

75. The dye concentrate of claim 65, wherein the dye concentrate comprises from about 10 wt% to about 35 wt% of chromophore moiety, based on the total weight of the dye concentrate.

76. A radiation-curable composition, comprising:
(a) a non-chromophore-containing, radiation-curable oligomer; and
(b) a dye concentrate according to claim 75.

77. A dye concentrate comprising a blend of two or more radiation-curable, chromophore-containing compounds according to claim 43 and tetrahydrofurfuryl acrylate (THFA), wherein at least the chromophore moiety of a first radiation-curable, chromophore-containing compound according to claim 43 is different from the chromophore moiety of a second radiation-curable, chromophore-containing compound according to claim 43.

78. A radiation-curable composition, comprising:
(a) a non-chromophore-containing, radiation-curable oligomer; and
(b) a dye concentrate according to claim 77.

79. A radiation-curable, chromophore-containing compound comprising at least one radiation-curable group and at east one chromophore moiety, and wherein the chromophore moiety is selected from the group consisting of a methine dye, and the methine dye comprises a methine core group with at least one substituent comprising the at least one radiation-curable group, an azo dye, and the azo dye comprises an azo core group with at least one substituent comprising the at least one radiation-curable group and an anthraquinone dye, and me anthraquinone dye comprises an anthraquinone core group with at least one substituent comprising the at least one radiation-curable group.

80. The radiation-curable, chromophore-containing compound of claim 79, wherein the at least one radiation-curable group comprises ethylenic unsaturation.

81. The radiation-curable, chromophore-containing compound of claim 80, wherein the ethylenically-unsaturated, radiation-curable group comprises a meth(acrylate).

82. The radiation-curable, chromophore-containing compound of claim 79, wherein the at least one radiation-curable group comprises an epoxy group.

83. The radiation-curable, chromophore-contaltiing compound of claim 79, wherein the anthraquinone dye has the formula: 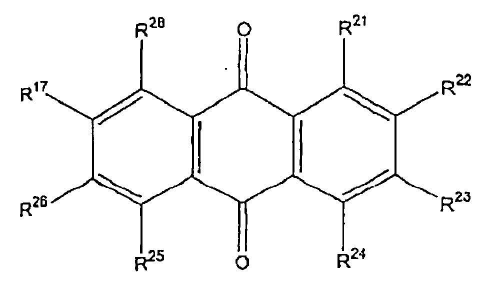 wherein R groups R¹, R², R³, R⁴, R⁵, R⁶, R⁷ and R⁸ are each independently selected from the group consisting of hydrogen, amino, hydroxy, halogen, nitro, carboxylated alkali metal sulfated alkali metal and a hydrocarbyl group optionally containing one or more heteroatoms,
provided that at least one of R groups R¹¹ through R¹⁸ comprises at least one ethylenically unsaturated radiation-curable group.

84. The radiation-curable, chromophore-containing compound of claim 83, wherein one or two of said R groups R¹¹ through R¹⁸ have a (meth)acrylic functionality and at least four of said R groups R¹¹ through R¹⁸ are hydrogen.

85. The radiation-curable, chromophore-containing compound of claim 79, wherein the anthraquinone dye has one of the following formulas: 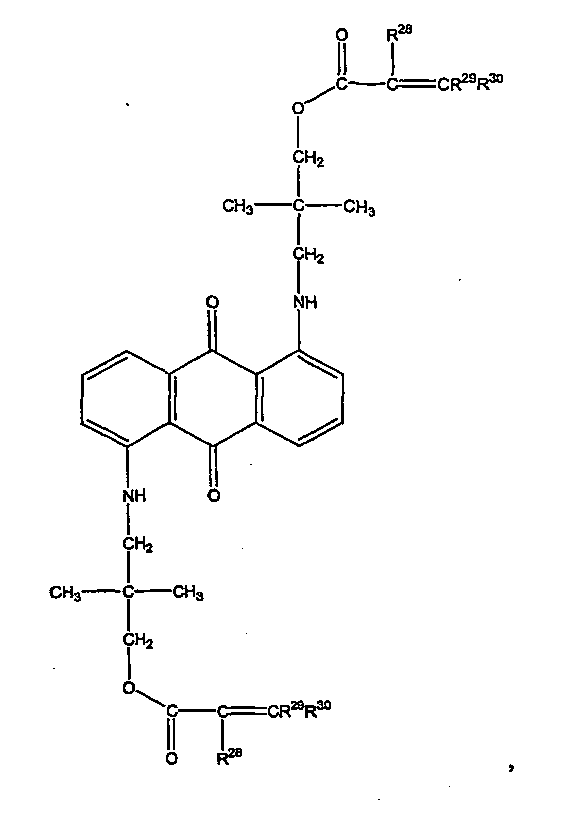 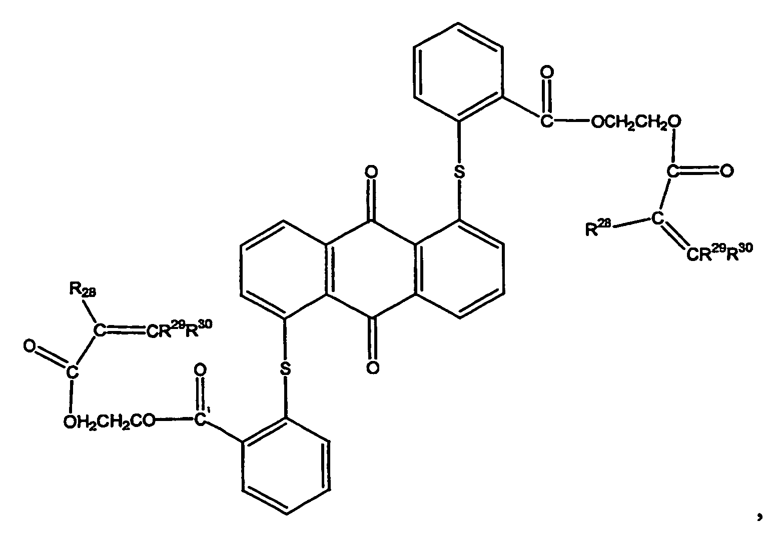 or 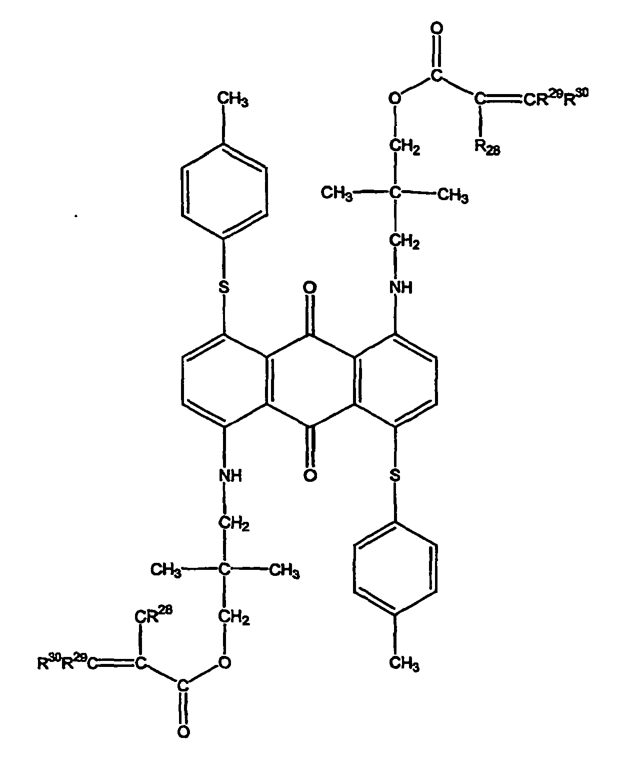 wherein R²⁹, R³⁰, R³¹, R³², R³³, and R³⁴ are the same or different and are independently hydrogen or a C₁ to C₆ alkyl optionally substituted with one or more substituents selected from the group consisting of -OH, -NH₂, -SH, -NO₂, -CN and halogen.

86. A radiation-curable composition, comprising:
(a) a non-chromophore-containing, radiation-curable oligomer; and
(b) a radiation-curable, chromophore-containing compound according to claim 79.

87. The radiation-curable composition of claim 86, wherein the composition further comprises TiO₂.

88. The radiation-curable composition of claim 86, wherein the composition further comprises one or more of a photoinitiator, a reactive diluent, a stabilizer, and a surfactant.

89. A substrate having the radiation-curable composition of claim 86 on at least a portion thereof

90. The substrate of claim 89, wherein the substrate is selected from the group consisting of (i) an optical fiber having a core and a cladding surrounding the core, (ii) an optical fiber having a core, a cladding surrounding the core, and one or more polymeric caatina,s on the cladding, (iii) a plurality of optical fibers arranged in an array, and (iv) an optical fiber ribbon.

91. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of:
providing a substrate;
providing a radiation-curable composition according to claim 86,
applying the radiation-curable composition of claim 96 to at least a portion of the
substrate; and
subjecting the applied composition for a suitable period of time to radiation of a suitable wavelength and intensity to cause curing of the composition into the color-identifying, radiation-cured composition..

92. The method of claim 91, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

93. A dye concentrate comprising the radiation-curable, chromophore-containing compound of claim 79 and tetrahydrofurfuryl acrylate (THFA).

94. A radiation-curable composition, comprising:
(a) a non-chromophore-containing, radiation-curable oligomer; and
(b) a dye concentrate according to claim 93.

95. The radiation-curable composition of claim 94, wherein the composition further comprises TiO₂.

96. The radiation-curable composition of claim 94, wherein the composition further comprises one or more of a photoinitiator, a reactive diluent, a stabilizer, and a surfactant.

97. A substrate having the radiation-curable composition of claim 94 on at least a portion thereof.

98. The substrate of claim 97, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

99. A method for producing a color-identifying, radiation-cured composition on at least a portion of a substrate, wherein the color-identifying, radiation-cured composition has at least one chromophore moiety covalently bonded to at least one other component of the color-identifying, radiation-cured composition, the method comprising the steps of:
providing a substrate;
providing a radiation-curable composition according to claim 94;
applying the radiation-curable composition of claim 94 to at least a portion of the substrate; and
subjecting the applied composition for a suitable period of time to radiation of a suitable wavelength and intensity to cause curing of the composition into the color-identifying, radiation-cured composition.

100. The method of claim 99, wherein the substrate is selected from the group consisting of (i) an optical fiber having a core and a cladding surrounding the core, (ii) an optical fiber having a core, a cladding surrounding the core, and one or more polymeric coatings on the cladding, (iii) a plurality of optical fibers arranged in an array, and (iv) an optical fiber ribbon.

101. The dye concentrate of claim 93, wherein the dye concentrate comprises greater than 5 wt% chromophore moiety, based on the total weight of the dye concentrate.

102. A radiation-curable composition, comprising:
(a) a non-chromophore-containing, radiation-curable oligomer; and
(b) a dye concentrate according to claim 101.

103. The dye concentrate of claim 93, wherein the dye concentrate comprises from 10 wt% to 35 wt% of chromophore moiety, based on the total weight of the dye concentrate.

104. A radiation-curable composition, comprising:
(a) a non-chromophore-containing, radiation-curable oligomer; and
(b) a dye concentrate according to claim 103.

105. A dye concentrate comprising a blend of two or more radiation-curable, chromophore-containing compounds according to claim 79 and tetrahydrofurfuryl acrylate (THFA), wherein at least the chromophore moiety of a first radiation-curable, chromophore-containing compound according to claim 79 is different from the chromophore moiety of a second radiation-curable, chromophore-containing compound according to claim 79.

106. A radiation-curable composition, comprising:
(a) a non-chromophore-containing, radiation-curable oligomer; and
(b) a dye concentrate according to claim 105.

107. A radiation-curable composition, comprising:
(a) a non-chromophore-containing, radiation-curable oligomer; and two or more of
(b) a radiation-curable, chromophore-containing compound according to claim 6;
(c) a radiation-curable, chromophore-containing compound according to claim 43; and
(d) a radiation-curable, chromophore-containing compound according to claim 79.

108. A dye concentrate comprising tetrahydrofurfuryl acrylate (THFA) and two or more of a radiation-curable, chromophore-containing compound according to claim 6, a radiation-curable, chromophore-containing compound according to claim 43, and a radiation-curable, chromophore-containing compound according to claim 79.

109. A radiation-curable composition, comprising:
(a) a non-chromophore-containing, radiation-curable oligomer; and
(b) a dye concentrate according to claim 108.

110. A colored oligomer for providing color to a coating on a communications element, said colored oligomer comprising the reaction product of
(a) an isocyanate end capped oligomer; and
(b) a radiation curable monomer having both (i) a reactive functionality which is reactive with isocyanate and (ii) ethylenic unsaturation, wherein said colored oligomer is end capped with radiation curable groups by covalent linkages formed by reacting said reactive functionality (i) of said radiation curable monomer (b) with an isocyanate moiety of said isocyanate end capped oligomer (a), and said isocyanate end capped oligomer (a) is the reaction product of:
(c) at least one polyfunctional compound having at least two isocyanate reactive groups; and
(d) at least one polyisocyanate,
said polyfunctional compound (c) comprising at least one dye having at least two isocyanate reactive functionalities.

111. The colored oligomer of claim 110, wherein said dye is an anthraquinone dye and said anthraquinone dye has the following formula: 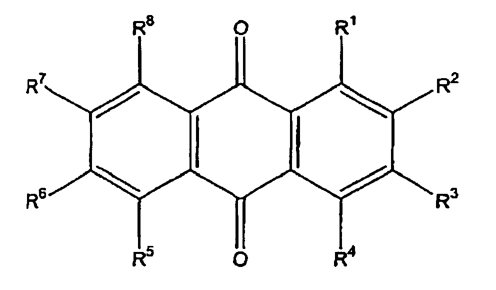 wherein R groups R¹, R², R³, R⁴, R⁵, R⁶, R⁷ and R⁸ are each independently selected from the group consisting of hydrogen, amino, hydroxy, halogen, nitro, carboxylated alkali metal, sulfated alkali metal and a hydrocarbyl group optionally containing one or more heteroatoms,
provided that at least two of R groups R¹ through R⁸ have at least one isocyanate reactive functionality selected from the group consisting of -OH, -NH₂ and -SH,
and further wherein adjacent R groups from among R¹ through R⁸ can form a ring.

112. The colored oligomer of claim 111, wherein from 1 to 3 of said R groups R¹ through R⁸ have the following formula: 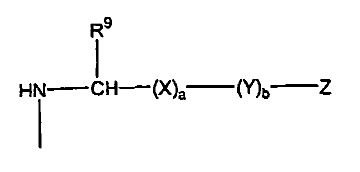 wherein R⁹ is hydrogen or an alkyl group having from 1 to 12 carbon atoms, X is -CH₂-, a is an integer from 1 to 6, Y represents polymeric units of hydroxy alkylenes or alkylene oxide monomers selected from the group consisting of ethylene oxide, propylene oxide, butylene oxide, cyclohexane oxide, and glycidol, b is either 0 or 1, and Z is a reactive -OH, -NH₂, or -SH group, and
further wherein the remainder of said R groups R¹ through R⁸ are selected from the group consisting of hydrogen, amino, hydroxy, halogen, nitro, carboxylated alkali metal and sulfated alkali metal.

113. The colored oligomer of claim 111, wherein said anthraquinone dye has the following formula: 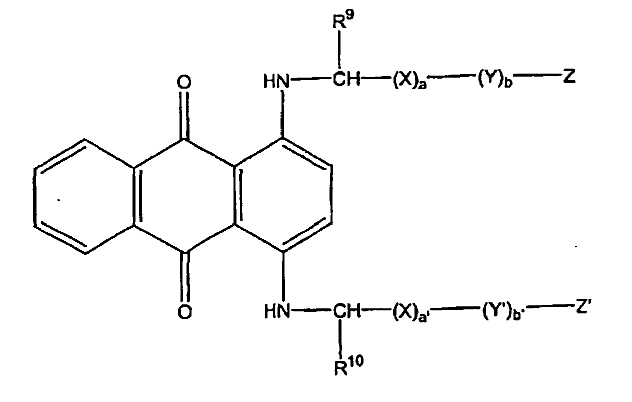 wherein R⁹ and R¹⁰ are independently selected from hydrogen or an alkyl group having from 1 to 12 carbon atoms, X is -CH₂-, a and a' independently are integers from 1 to 6, Y and Y' are independently represent polymeric units of hydroxy alkylenes or alkylene oxide monomers selected from the group consisting of ethylene oxide, propylene oxide, butylene oxide, cyclohexane oxide, and glycidol, b and b' are independently either 0 or 1, and Z and Z' independently are reactive -OH, - NH₂, or -SH groups.

114. The colored oligomer of claim 113, wherein said isocyanate end capped oligomer (a) is a urethane oligomer and said anthraquinone dye has the following formula: 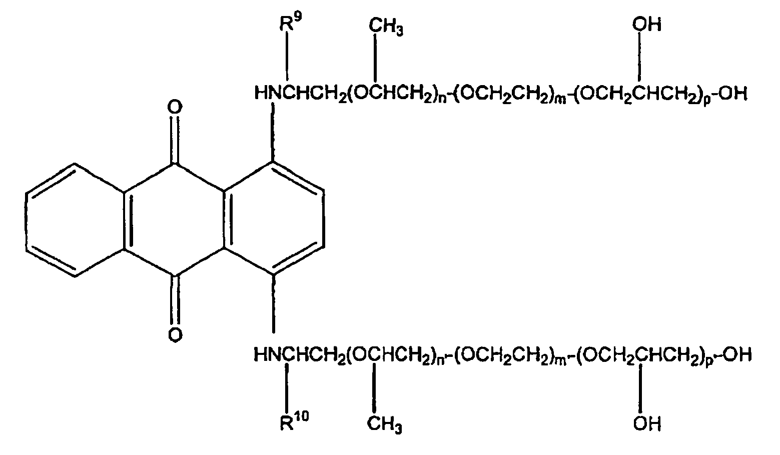 wherein n, n', m, m', p, and p' independently have a value of from 0 to 40.

115. The colored oligomer of claim 113, wherein said anthraquinone dye has the formula

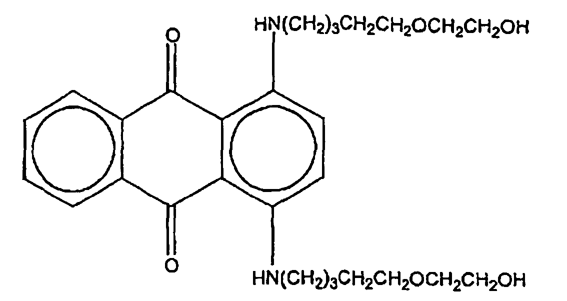

116. The colored oligomer of claim 111, wherein said anthraquinone dye is selected from the group consisting of 1,5-bis((3-hydroxy-2,2-dimethylpropyl)amino)-9,10-anthracenedione; 2,2'-((9,10-dihydro-9,10-dioxo-1,5-antbracenediyl)bis(thio))bis-benzoic acid, 2-hydroxyethyl ester; and 1,5-bis((2,2-dimethyl-3-hydroxypropyl)amino)-4,8 bis((4-methylphenyl)thio) anthraquinone.

117. The colored oligomer of claim 111, wherein said anthraquinone dye is 1,5-bis((2,2-dimethyl-3-hydzoxypropyl)amino)-4,8-bis((4-methylphenyl)thi.o) anthraquinone.

118. The colored oligomer of claim 110 wherein a (meth)acrylic group represents the ethylenic unsaturation (ii) in the radiation curable monomer (b).

119. A photocurable resin composition for forming a colored, cured coating on an optical fiber, said resin composition comprising:
(e) at least one (meth)acrylate end capped urethane oligomer;
(f) at least one photoinitiator;
(g) at least one reactive diluent; and
(h) at least one colored oligomer according to claim 110.

120. An optical fiber comprising a colored, cured coating, said colored, cured coating having been formed from the photocurable resin composition of claim 119.

121. A reactive anthraquinone dye for providing color to a coating on an optical fiber, said reactive anthraquinone dye comprising an anthraquinone core group with at least one substituent comprising a radiation curable group.

122. The reactive anthraquinone dye of claim 121, wherein said radiation curable group is an ethylenically unsaturated group or an epoxy group.

123. The reactive anthraquinone dye of claim 121, wherein said radiation curable group is a (meth)acrylic group.

124. The reactive anthraquinone dye of claim 121, wherein said reactive anthraquinone dye has the following formula: 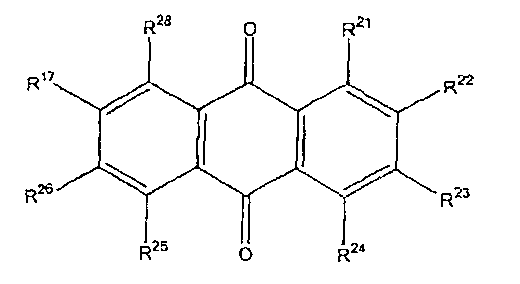 wherein R groups R¹, R², R³, R⁴, R⁵, , R⁶ R⁷ and R⁸ arc each independently selected from the group consisting of hydrogen, amino, hydroxy, halogen, nitro, carboxylated alkali metal, sulfated alkali metal and a hydrocarbyl group optionally containing one or mare-heteroatoms,
provided that at least one ofR groups R¹¹ through R¹⁸ have at least one ethylenically unsaturated radiation curable functionality.

125. The reactive anthraquinone dye of claim 124, wherein one or two of said R groups R¹¹ through R¹⁸ have a (meth)acrylic functionality and at least four of said R groups R¹¹ through R¹⁸ are hydrogen.

126. The reactive anthraquinone dye of claim 124, wherein the reactive anthraquinone dye has one of the following formulas: 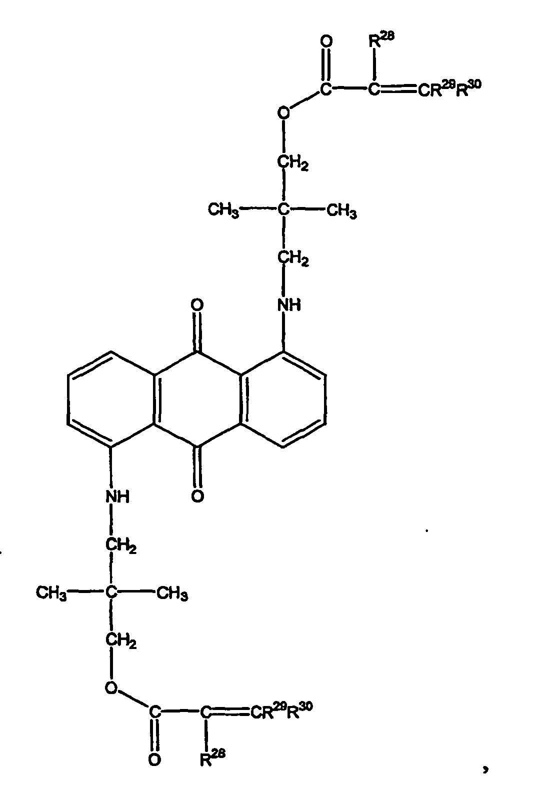 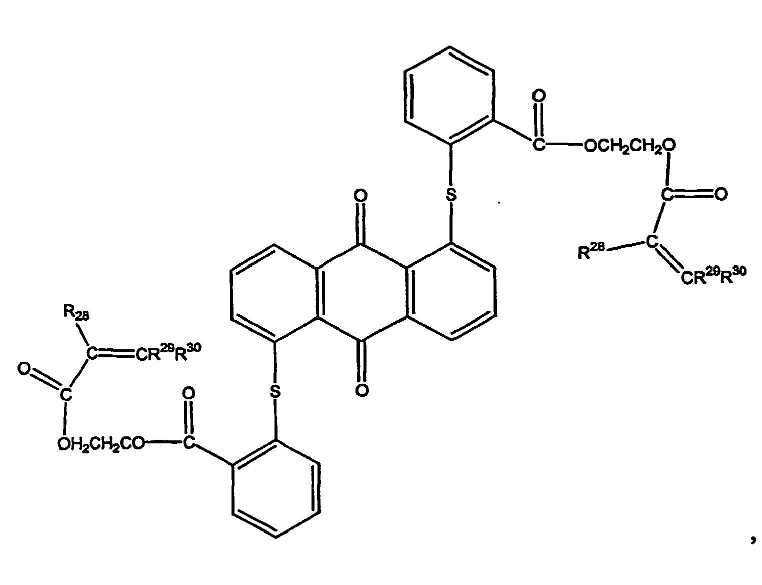 or 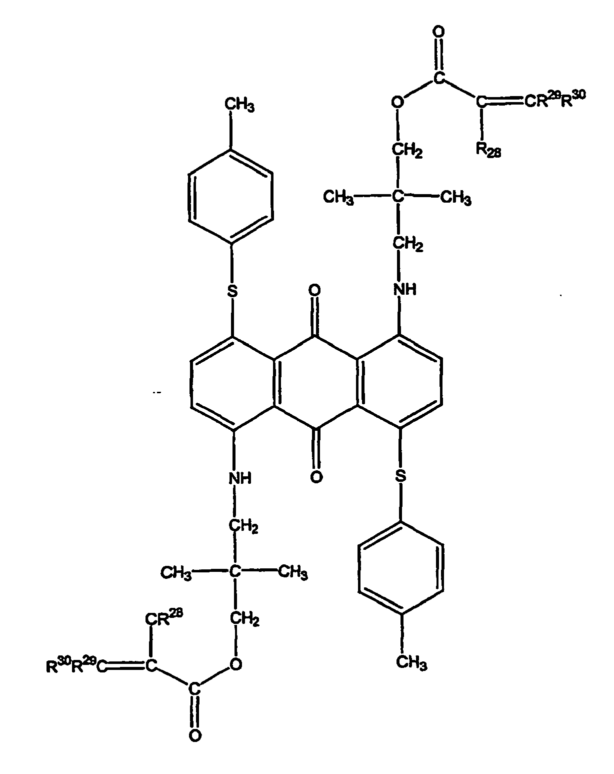 wherein R²⁹, R³⁰, R³¹, R³², R³³, and R³⁴ are the same or different and are independently hydrogen or a C₁ to C₆ alkyl optionally substituted with one or more substituents selected from the group consisting of-OH, -NH₂, -SH, -NO₂, -CN and halogen.

127. A photocurable resin composition for forming a colored, cured coating on an optical fiber, said resin composition comprising:
(a) at least one (meth) acrylate end capped urethane oligomer;
(b) at least one photoinitiator;
(c) at least one reactive diluent; and
(d) at least one reactive anthraquinone dye according to claim 124.

128. An optical fiber comprising a colored, cured coating, said colored, cured coating having been formed from the photocurable resin composition of claim 127.

## Patentansprüche

1. Telekommunikationselement mit einem darauf befindlichen farbigen Identifikationsüberzug, wobei das Telekommunikationselement Folgendes umfasst:
ein längliches Kommunikationsübertragungsmedium; und
einen Überzug, bei dem zumindest ein Teil des Übertragungsmediums mit einer Identifikationsfarbe überzogen ist, wobei der Überzug ein durch Strahlung gehärtetes, vernetztes Polymernetz umfasst und die Identifikationsfarbe in dem Überzug zumindest teilweise durch mindestens eine Chromophoreinheit bereitgestellt wird, die durch mindestens eine kovalente Bindung kovalent an das Polymernetz gebunden ist.

2. Telekommunikationselement nach Anspruch 1, bei dem
(a) das längliche Übertragungsmedium aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband ausgewählt ist; und
(b) die Identifikationsfarbe wärmebeständig und lichtecht ist.

3. Telekommunikationselement nach Anspruch 1, bei dem die Identifikationsfarbe in dem Überzug zumindest teilweise von mindestens einer Anthrachinoneinheit bereitgestellt wird, die durch mindestens eine kovalente Bindung kovalent an das Polymernetz gebunden ist.

4. Telekommunikationselement nach Anspruch 1, bei dem die Identifikationsfarbe in dem Überzug zumindest teilweise von mindestens einer Methineinheit bereitgestellt wird, die durch mindestens eine kovalente Bindung kovalent an das Polymernetz gebunden ist.

5. Telekommunikationselement nach Anspruch 1, bei dem die Identifikationsfarbe in dem Überzug zumindest teilweise von mindestens einer Azoeinheit bereitgestellt wird, die durch mindestens eine kovalente Bindung kovalent an das Polymernetz gebunden ist.

6. Durch Strahlung härtbare, chromophorhaltige Verbindung aus mindestens einer durch Strahlung härtbaren Gruppe und mindestens einer Chromophoreinheit, wobei die durch Strahlung härtbare, chromophorhaltige Verbindung das Reaktionsprodukt folgender Verbindungen umfasst:
(a) einer isocyanathaltigen Verbindung aus (i) mindestens einer Isocyanatgruppe und (ii) der mindestens einen Chromophoreinheit; und
(b) einer durch Strahlung härtbaren Verbindung aus (i) mindestens einer isocyanat-reaktiven funktionellen Gruppe und (ii) der mindestens einen durch Strahlung härtbaren Gruppe,
wobei die mindestens eine durch Strahlung härtbare Gruppe der durch Strahlung härtbaren, chromophorhaltigen Verbindung durch mindestens eine kovalente Bindung, die durch Umsetzung einer isocyanat-reaktiven funktionellen Gruppe (i) der durch Strahlung härtbaren Verbindung (b) mit einer Isocyanatgruppe (i) der isocyanathaltigen Verbindung (a) gebildet wird, kovalent an die durch Strahlung härtbare, chromophorhaltige Verbindung gebunden ist und die isocyanathaltige Verbindung (a) das Reaktionsprodukt folgender Substanzen ist:
(c) einer chromophorhaltigen Verbindung aus (i) einer Chromophoreinheit und (ii) mindestens einer isocyanat-reaktiven funktionellen Gruppe; und
(d) eines Polyisocyanats.

7. Durch Strahlung härtbare, chromophorhaltige Verbindung nach Anspruch 6, bei der die mindestens eine isocyanat-reaktive funktionelle Gruppe (i) der durch Strahlung härtbaren Verbindung (b) und die mindestens eine isocyanat-reaktive funktionelle Gruppe (ii) der chromophorhaltigen Verbindung (c) unabhängig ausgewählt sind aus der Gruppe bestehend aus -OH, -NH₂ und -SH.

8. Durch Strahlung härtbare, chromophorhaltige Verbindung nach Anspruch 6, bei der die mindestens eine durch Strahlung härtbare Gruppe (ii) der durch Strahlung härtbaren Verbindung (b) eine ethylenisch ungesättigte Gruppe umfasst.

9. Durch Strahlung härtbare, chromophorhaltige Verbindung nach Anspruch 8, bei der die ehtylenisch ungesättigte, durch Strahlung härtbare Gruppe (ii) der durch Strahlung härtbaren Verbindung (b) ein (Meth)acrylat umfasst.

10. Durch Strahlung härtbare, chromophorhaltige Verbindung nach Anspruch 6, bei der die mindestens eine durch Strahlung härtbare Gruppe (ii) der durch Strahlung härtbaren Verbindung (b) eine Epoxygruppe umfasst.

11. Durch Strahlung härtbare, chromophorhaltige Verbindung nach Anspruch 6, bei der das Polyisocyanat (d) ein Diisocyanat ist.

12. Durch Strahlung härtbare, chromophorhaltige Verbindung nach Anspruch 6, bei der die mindestens eine Chromophoreinheit (i) der chromophorhaltigen Verbindung (c) ein Methinfarbstoff ist.

13. Durch Strahlung härtbare, chromophorhaltige Verbindung nach Anspruch 6, bei der die mindestens eine Chromophoreinheit (i) der chromophorhaltigen Verbindung (c) ein Azofarbstoff ist.

14. Durch Strahlung härtbare, chromophorhaltige Verbindung nach Anspruch 6, bei der die mindestens eine Chromophoreinheit (i) der chromophorhaltigen Verbindung (c) ein Anthrachinonfarbstoff ist.

15. Durch Strahlung härtbare, chromophorhaltige Verbindung nach Anspruch 14, bei der der Anthrachinonfarbstoff folgende Formel besitzt: 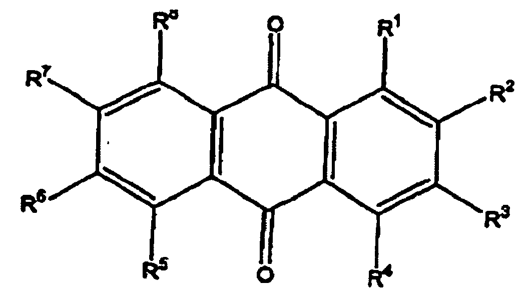 worin die R-Gruppen R¹, R², R³, R⁴, R⁵, R⁶, R⁷ und R⁸ jeweils unabhängig ausgewählt sind aus der Gruppe bestehend aus Wasserstoff, Amino, Hydroxy, Halogen, Nitro, carboxyliertem Alkalimetall, sulfatiertem Alkalimetall und einer Hydrocarbylgruppe mit wahlweise einem oder mehreren Heteroatomen, vorausgesetzt mindestens zwei der R-Gruppen R¹ bis R⁸ besitzen zumindest eine aus der Gruppe bestehend aus -OH, -NH₂ und -SH ausgewählte isocyanat-reaktive funktionelle Gruppe,
und worin angrenzende R-Gruppen von R¹ bis R⁸ einen Ring bilden können.

16. Durch Strahlung härtbare, chromophorhaltige Verbindung nach Anspruch 15, bei der 1 bis 3 der R-Gruppen R¹ bis R⁸ folgende Formel besitzen: 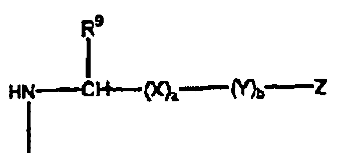 worin R⁹ Wasserstoff oder eine Alkylgruppe mit 1 bis 12 Kohlenstoffatomen ist, X -CH₂- ist, a eine ganze Zahl von 1 bis 6 ist, Y Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellt, b entweder 0 oder 1 ist und Z eine -OH-, -NH₂- oder -SH-Gruppe ist, und
die restlichen R-Gruppen R¹ bis R⁸ ausgewählt sind aus der Gruppen bestehend aus Wasserstoff, Amino, Hydroxy, Halogen, Nitro, carboxyliertem Alkalimetall und sulfatiertem Alkalimetall.

17. Durch Strahlung härtbare, chromophorhaltige Verbindung nach Anspruch 15, bei der der Anthrachinonfarbstoff folgende Formel besitzt: 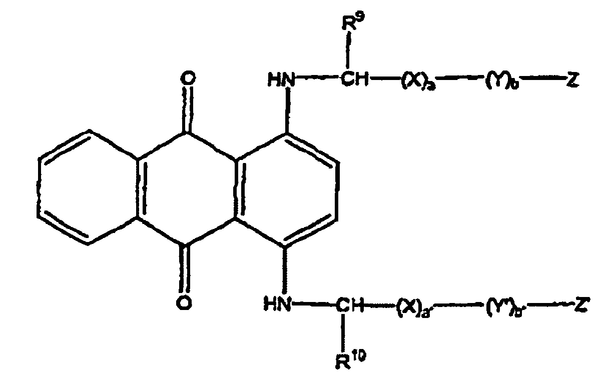 worin R⁹ und R¹⁰ unabhängig ausgewählt sind aus Wasserstoff oder einer Alkylgruppe mit 1 bis 12 Kohlenstoffatomen, X -CH₂- ist, a und a' unabhängig eine ganze Zahl von 1 bis 6 sind, Y und Y' unabhängig Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellen, b und b' unabhängig entweder 0 oder 1 sind und Z und Z' unabhängig eine -OH-, -NH₂- oder -SH-Gruppe sind.

18. Durch Strahlung härtbare, chromophorhaltige Verbindung nach Anspruch 17, bei der der Anthrachinonfarbstoff folgende Formel besitzt: 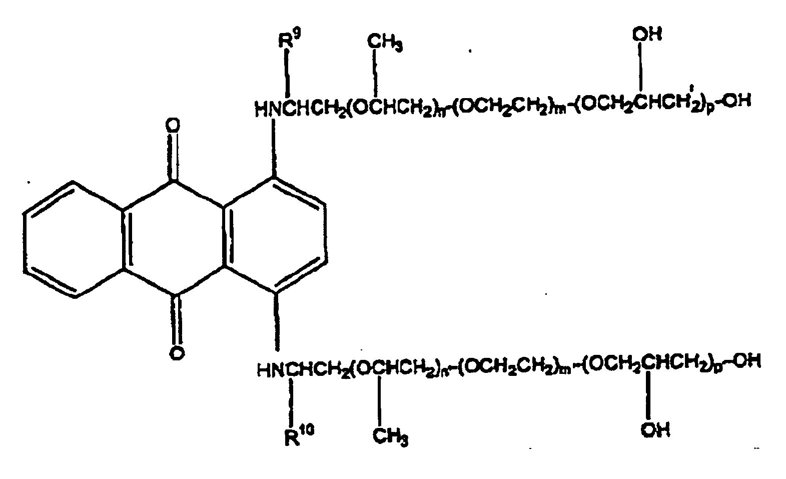 worin n, n', m, m', p und p' unabhängig einen Wert von 0 bis 40 besitzen.

19. Durch Strahlung härtbare, chromophorhaltige Verbindung nach Anspruch 17, bei der der Anthrachinonfarbstoff folgende Formel besitzt:

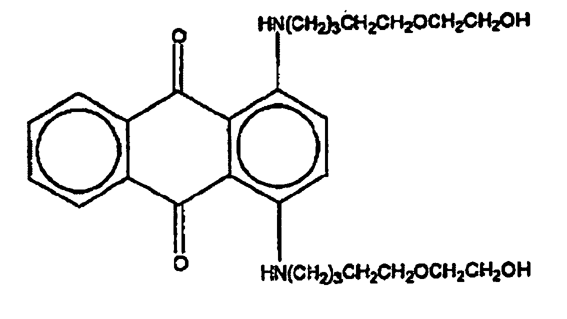

20. Durch Strahlung härtbare, chromophorhaltige Verbindung nach Anspruch 14, bei der der Anthrachinonfarbstoff ausgewählt ist aus der Gruppe bestehend aus 1,5-Bis((3-hydroxy-2,2-dimethylpropyl)amino)-9,10-Anthracendion, 2,2'-((9,10-Dihydro-9,10-dioxo-1,5-anthracendiyl)bis(thio))bis-benzoesäure, 2-Hydroxyethylester und 1,5-Bis((2,2-dimethyl-3-hydroxypropyl)amino)-4,8-bis((4-methylphenyl)thio)anthrachinon.

21. Durch Strahlung härtbare, chromophorhaltige Verbindung nach Anspruch 14, bei der der Anthrachinonfarbstoff 1,5-Bis((2,2-dimethyl-3-hydroxypropyl)-amino)-4,8-bis((4-methylphenyl)thio)anthrachinon ist.

22. Durch Strahlung härtbare Zusammensetzung, die Folgendes umfasst:
(a) ein nicht chromophorhaltiges, durch Strahlung härtbares Oligomer; und
(b) eine durch Strahlung härtbare, chromophorhaltige Verbindung nach Anspruch 6.

23. Durch Strahlung härtbare Zusammensetzung nach Anspruch 22, wobei die Zusammensetzung weiterhin TiO₂ umfasst.

24. Durch Strahlung härtbare Zusammensetzung nach Anspruch 22, wobei die Zusammensetzung weiterhin einen oder mehrere Photoinitiatoren, ein reaktives Verdünnungsmittel, einen Stabilisator und ein Tensid umfasst.

25. Substrat, das zumindest teilweise mit der durch Strahlung härtbaren Zusammensetzung nach Anspruch 22 beschichtet ist.

26. Substrat nach Anspruch 25, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

27. Verfahren zur Herstellung einer durch Strahlung gehärteten farbigen Identifikationszusammensetzung auf zumindest einem Teil eines Substrates, wobei die durch Strahlung gehärtete farbige Identifikationszusammensetzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach
Anspruch 22;
Auftragen der durch Strahlung härtbaren Zusammensetzung nach Anspruch 22 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

28. Verfahren nach Anspruch 27, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

29. Farbstoffkonzentrat aus der durch Strahlung härtbaren, chromophorhaltigen Verbindung nach Anspruch 6 und Tetrahydrofurfurylacrylat (THFA).

30. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 29.

31. Durch Strahlung härtbare Zusammensetzung nach Anspruch 30, wobei die Zusammensetzung weiterhin TiO₂ umfasst.

32. Durch Strahlung härtbare Zusammensetzung nach Anspruch 30, wobei die Zusammensetzung weiterhin einen oder mehrere Photoinitiatoren, ein reaktives Verdünnungsmittel, einen Stabilisator und ein Tensid umfasst.

33. Substrat, das zumindest teilweise mit der durch Strahlung härtbaren Zusammensetzung nach Anspruch 30 beschichtet ist.

34. Substrat nach Anspruch 33, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

35. Verfahren zur Herstellung einer durch Strahlung gehärteten farbigen Identifikationszusammensetzung auf zumindest einem Teil eines Substrates, wobei die durch Strahlung gehärtete farbige Identifikationszusammen-setzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach Anspruch 30;
Auftragen der durch Strahlung härtbaren Zusammensetzung nach Anspruch 30 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

36. Verfahren nach Anspruch 35, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

37. Farbstoffkonzentrat nach Anspruch 29, wobei, bezogen auf das Gesamtgewicht des Farbstoffkonzentrates, mehr als 5 Gew.-% des Farbstoffkonzentrates aus der Chromophoreinheit bestehen.

38. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 37.

39. Farbstoffkonzentrat nach Anspruch 29, wobei, bezogen auf das Gesamtgewicht des Farbstoffkonzentrates, 10 bis 35 Gew.-% des Farbstoffkonzentrates aus der Chromophoreinheit bestehen.

40. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 39.

41. Farbstoffkonzentrat aus einer Mischung aus zwei oder mehr durch Strahlung härtbaren, chromophorhaltigen Verbindungen nach Anspruch 6 und Tetrahydrofurfurylacrylat (THFA), wobei sich die mindestens eine Chromophoreinheit einer ersten durch Strahlung härtbaren, chromophorhaltigen Verbindung nach Anspruch 6 von der Chromophoreinheit einer zweiten durch Strahlung härtbaren, chromophorhaltigen Verbindung nach Anspruch 6 unterscheidet.

42. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 41.

43. Durch Strahlung härtbare, chromophorhaltige Verbindung aus mindestens einer durch Strahlung härtbaren Gruppe und mindestens einer Chromophoreinheit, wobei die durch Strahlung härtbare, chromophorhaltige Verbindung das Reaktionsprodukt folgender Verbindungen umfasst:
(a) einer chromophorhaltigen Verbindung aus (i) mindestens einer isocyanat-reaktiven funktionellen Gruppe und (ii) der mindestens einen Chromophoreinheit; und
(b) einer durch Strahlung härtbaren Verbindung aus (i) mindestens einer Isocyanatgruppe und (ii) der mindestens einen durch Strahlung härtbaren Gruppe,
wobei die mindestens eine durch Strahlung härtbare Gruppe der durch Strahlung härtbaren, chromophorhaltigen Verbindung durch mindestens eine kovalente Bindung, die durch Umsetzung einer Isocyanatgruppe (i) der durch Strahlung härtbaren Verbindung (b) mit einer isocyanat-reaktiven funktionellen Gruppe (i) der chromophorhaltigen Verbindung (a) gebildet wird, kovalent an die durch Strahlung härtbare, chromophorhaltige Verbindung gebunden ist.

44. Durch Strahlung härtbare, chromophorhaltige Verbindung nach Anspruch 43, bei der die mindestens eine isocyanat-reaktive funktionelle Gruppe (i) der chromophorhaltigen Verbindung (a) ausgewählt ist aus der Gruppe bestehend aus -OH, -NH₂ und -SH.

45. Durch Strahlung härtbare, chromophorhaltige Verbindung nach Anspruch 43, bei der die mindestens eine durch Strahlung härtbare Gruppe (ii) der durch Strahlung härtbaren Verbindung (b) eine ethylenisch ungesättigte Gruppe umfasst.

46. Durch Strahlung härtbare, chromophorhaltige Verbindung nach Anspruch 45, bei der die ehtylenisch ungesättigte, durch Strahlung härtbare Gruppe (ii) der durch Strahlung härtbaren Verbindung (b) ein (Meth)acrylat umfasst.

47. Durch Strahlung härtbare, chromophorhaltige Verbindung nach Anspruch 43, bei der die mindestens eine durch Strahlung härtbare Gruppe (ii) der durch Strahlung härtbaren Verbindung (b) eine Epoxygruppe umfasst.

48. Durch Strahlung härtbare, chromophorhaltige Verbindung nach Anspruch 43, bei der die mindestens eine Chromophoreinheit (ii) der chromophorhaltigen Verbindung (a) ein Methinfarbstoff ist.

49. Durch Strahlung härtbare, chromophorhaltige Verbindung nach Anspruch 43, bei der die mindestens eine Chromophoreinheit (ii) der chromophorhaltigen Verbindung (a) ein Azofarbstoff ist.

50. Durch Strahlung härtbare, chromophorhaltige Verbindung nach Anspruch 43, bei der die mindestens eine Chromophoreinheit (ii) der chromophorhaltigen Verbindung (a) ein Anthrachinonfarbstoff ist.

51. Durch Strahlung härtbare, chromophorhaltige Verbindung nach Anspruch 43,
wobei die chromophorhaltige Verbindung (a) ein Anthrachinonfarbstoff der folgenden Formel ist: 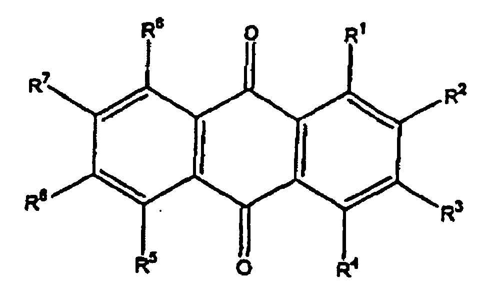 worin die R-Gruppen R¹, R², R³, R⁴, R⁵, R⁶, R⁷ und R⁸ jeweils unabhängig ausgewählt sind aus der Gruppe bestehend aus Wasserstoff, Amino, Hydroxy, Halogen, Nitro, carboxyliertem Alkalimetall, sulfatiertem Alkalimetall und einer Hydrocarbylgruppe mit wahlweise einem oder mehreren Heteroatomen, vorausgesetzt mindestens zwei der R-Gruppen R¹ bis R⁸ besitzen zumindest eine aus der Gruppe bestehend aus -OH, -NH₂ und -SH ausgewählte isocyanat-reaktive funktionelle Gruppe,
und worin angrenzende R-Gruppen von R¹ bis R⁸ einen Ring bilden können.

52. Durch Strahlung härtbare, chromophorhaltige Verbindung nach Anspruch 51, bei der 1 bis 3 der R-Gruppen R¹ bis R⁸ folgende Formel besitzen: 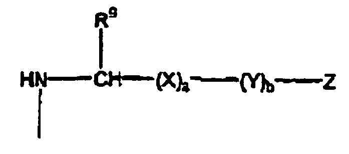 worin R⁹ Wasserstoff oder eine Alkylgruppe mit 1 bis 12 Kohlenstoffatomen ist, X -CH₂- ist, a eine ganze Zahl von 1 bis 6 ist, Y Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellt, b entweder 0 oder 1 ist und Z eine -OH-, -NH₂- oder -SH-Gruppe ist, und
die restlichen R-Gruppen R¹ bis R⁸ ausgewählt sind aus der Gruppen bestehend aus Wasserstoff, Amino, Hydroxy, Halogen, Nitro, carboxyliertem Alkalimetall und sulfatiertem Alkalimetall.

53. Durch Strahlung härtbare, chromophorhaltige Verbindung nach Anspruch 51, bei der der Anthrachinonfarbstoff folgende Formel besitzt: 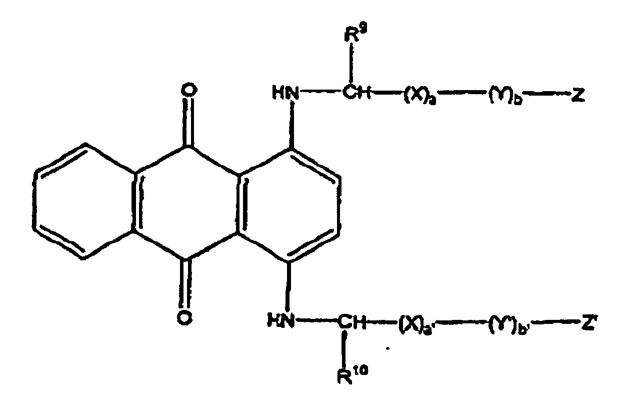 worin R⁹ und R¹⁰ unabhängig ausgewählt sind aus Wasserstoff oder einer Alkylgruppe mit 1 bis 12 Kohlenstoffatoment, X -CH₂- ist, a und a' unabhängig eine ganze Zahl von 1 bis 6 sind, Y und Y' unabhängig Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellen, b und b' unabhängig entweder 0 oder 1 sind und Z und Z' unabhängig eine -OH-, -NH₂- oder -SH-Gruppe sind.

54. Durch Strahlung härtbare, chromophorhaltige Verbindung nach Anspruch 53, bei der der Anthrachinonfarbstoff folgende Formel besitzt: 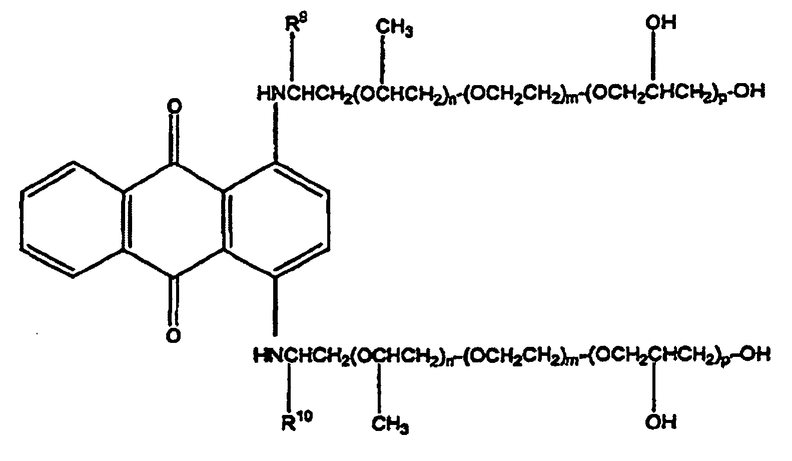 worin n, n', m, m', p und p' unabhängig einen Wert von 0 bis etwa 40 besitzen.

55. Durch Strahlung härtbare, chromophorhaltige Verbindung nach Anspruch 53, bei der der Anthrachinonfarbstoff folgende Formel besitzt:

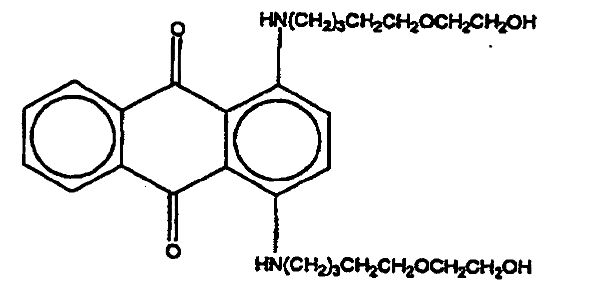

56. Durch Strahlung härtbare, chromophorhaltige Verbindung nach Anspruch 43, wobei die chromophorhaltige Verbindung (a) ausgewählt ist aus der Gruppe bestehend aus 1,5-Bis((3-hydroxy-2,2-dimethylpropyl)amino)-9,10-Anthracendion, 2,2'-((9,10-Dihydro-9,10-dioxo-1,5-anthracendiyl)bis(thio))-bis-benzoesäure, 2-Hydroxyethylester und 1,5-Bis((2,2-dimethyl-3-hydroxypropyl)amino)-4,8-bis((4-methylphenyl)thio)anthrachinon.

57. Durch Strahlung härtbare, chromophorhaltige Verbindung nach Anspruch 56, wobei die chromophorhaltige Verbindung (a) 1,5-Bis((2,2-dimethyl-3-hydroxypropyl)amino)-4,8-bis((4-methylphenyl)thio)anthrachinon ist.

58. Durch Strahlung härtbare Zusammensetzung, die Folgendes umfasst:
(a) ein nicht chromophorhaltiges, durch Strahlung härtbares Oligomer; und
(b) eine durch Strahlung härtbare, chromophorhaltige Verbindung nach Anspruch 43.

59. Durch Strahlung härtbare Zusammensetzung nach Anspruch 58, wobei die Zusammensetzung weiterhin TiO₂ umfasst.

60. Durch Strahlung härtbare Zusammensetzung nach Anspruch 58, wobei die Zusammensetzung weiterhin einen oder mehrere Photoinitiatoren, ein reaktives Verdünnungsmittel, einen Stabilisator und ein Tensid umfasst.

61. Substrat, das zumindest teilweise mit der durch Strahlung härtbaren Zusammensetzung nach Anspruch 58 beschichtet ist.

62. Substrat nach Anspruch 61, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

63. Verfahren zur Herstellung einer durch Strahlung gehärteten farbigen Identifikationszusammensetzung auf zumindest einem Teil eines Substrates, wobei die durch Strahlung gehärtete farbige Identifikationszusammensetzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach Anspruch 58;
Auftragen der durch Strahlung härtbaren Zusammensetzung nach Anspruch 58 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

64. Verfahren nach Anspruch 63, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

65. Farbstoffkonzentrat aus der durch Strahlung härtbaren, chromophorhaltigen Verbindung nach Anspruch 43 und Tetrahydrofurfurylacrylat (THFA).

66. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 65.

67. Durch Strahlung härtbare Zusammensetzung nach Anspruch 66, wobei die Zusammensetzung weiterhin TiO₂ umfasst.

68. Durch Strahlung härtbare Zusammensetzung nach Anspruch 66, wobei die Zusammensetzung weiterhin einen oder mehrere Photoinitiatoren, ein reaktives Verdünnungsmittel, einen Stabilisator und ein Tensid umfasst.

69. Substrat, das zumindest teilweise mit der durch Strahlung härtbaren Zusammensetzung nach Anspruch 66 beschichtet ist.

70. Substrat nach Anspruch 69, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

71. Verfahren zur Herstellung einer durch Strahlung gehärteten farbigen Identifikationszusammensetzung auf zumindest einem Teil eines Substrates, wobei die durch Strahlung gehärtete farbige Identifikationszusammensetzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach Anspruch 66;
Auftragen der durch Strahlung härtbaren Zusammensetzung nach Anspruch 66 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

72. Verfahren nach Anspruch 71, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

73. Farbstoffkonzentrat nach Anspruch 65, wobei, bezogen auf das Gesamtgewicht des Farbstoffkonzentrates, mehr als 5 Gew.-% des Farbstoffkonzentrates aus der Chromophoreinheit bestehen.

74. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 73.

75. Farbstoffkonzentrat nach Anspruch 65, wobei, bezogen auf das Gesamtgewicht des Farbstoffkonzentrates, 10 bis 35 Gew.-% des Farbstoffkonzentrates aus der Chromophoreinheit bestehen.

76. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 75.

77. Farbstoffkonzentrat aus einer Mischung aus zwei oder mehr durch Strahlung härtbaren, chromophorhaltigen Verbindungen nach Anspruch 43 und Tetrahydrofurfurylacrylat (THFA), wobei sich die mindestens eine Chromophoreinheit einer ersten durch Strahlung härtbaren, chromophorhaltigen Verbindung nach Anspruch 43 von der Chromophoreinheit einer zweiten durch Strahlung härtbaren, chromophorhaltigen Verbindung nach Anspruch 43 unterscheidet.

78. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 77.

79. Durch Strahlung härtbare, chromophorhaltige Verbindung mit mindestens einer durch Strahlung härtbaren Gruppe und mindestens einer Chromophoreinheit, wobei die Chromophoreinheit ausgewählt ist aus der Gruppe bestehend aus einem Methinfarbstoff, wobei der Methinfarbstoff eine Methin-Kemgruppe mit mindestens einem Substituenten aus mindestens einer durch Strahlung härtbaren Gruppe umfasst, einem Azofarbstoff, wobei der Azofarbstoff eine Azo-Kerngruppe mit mindestens einem Substituenten aus mindestens einer durch Strahlung härtbaren Gruppe umfasst, und einem Anthrachinonfarbstoff, wobei der Anthrachinonfarbstoff eine Anthrachinon-Kemgruppe mit mindestens einem Substituenten aus mindestens einer durch Strahlung härtbaren Gruppe umfasst.

80. Durch Strahlung härtbare, chromophorhaltige Verbindung nach Anspruch 79, bei der die mindestens eine durch Strahlung härtbare Gruppe eine ethylenisch ungesättigte Gruppe umfasst.

81. Durch Strahlung härtbare, chromophorhaltige Verbindung nach Anspruch 80, bei der die ethylenisch ungesättigte, durch Strahlung härtbare Gruppe ein (Meth)acrylat umfasst.

82. Durch Strahlung härtbare, chromophorhaltige Verbindung nach Anspruch 79, bei der die mindestens eine durch Strahlung härtbare Gruppe eine Epoxygruppe umfasst.

83. Durch Strahlung härtbare, chromophorhaltige Verbindung nach Anspruch 79, bei der der Anthrachinonfarbstoff folgende Formel besitzt: 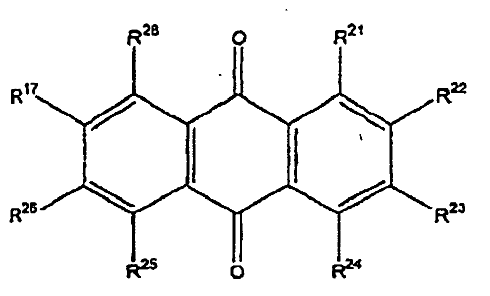 worin die R-Gruppen R¹, R², R³, R⁴, R⁵, R⁶, R⁷ und R⁸ jeweils unabhängig ausgewählt sind aus der Gruppe bestehend aus Wasserstoff, Amino, Hydroxy, Halogen, Nitro, carboxyliertem Alkalimetall, sulfatiertem Alkalimetall und einer Hydrocarbylgruppe mit wahlweise einem oder mehreren Heteroatomen, vorausgesetzt mindestens eine der R-Gruppen R¹¹ bis R¹⁸ besitzt zumindest eine ethylenisch ungesättigte, durch Strahlung härtbare Gruppe.

84. Durch Strahlung härtbare, chromophorhaltige Verbindung nach Anspruch 83, bei der eine oder zwei der R-Gruppen R¹¹ bis R¹⁸ eine (Meth)acrylsäure-Funktionalität besitzen und mindestens vier der R-Gruppen R¹¹ bis R¹⁸ Wasserstoff sind.

85. Durch Strahlung härtbare, chromophorhaltige Verbindung nach Anspruch 79, bei der der Anthrachinonfarbstoff eine der folgenden Formeln besitzt: 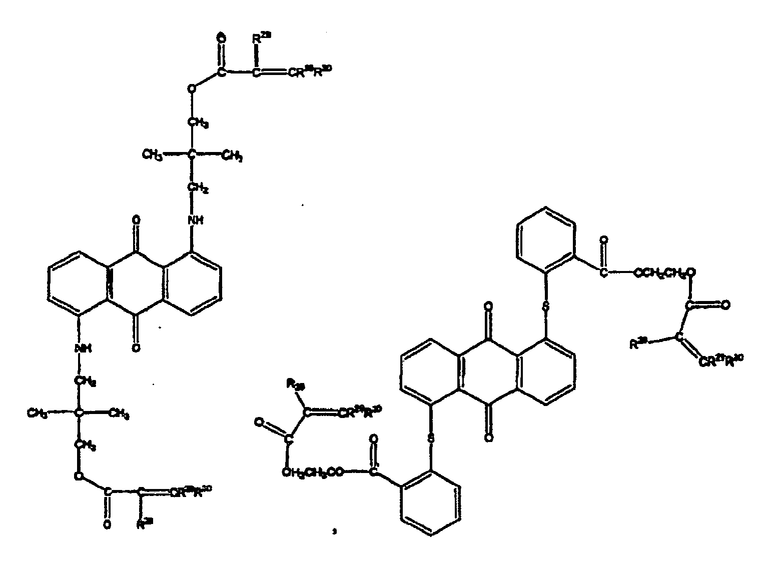 oder 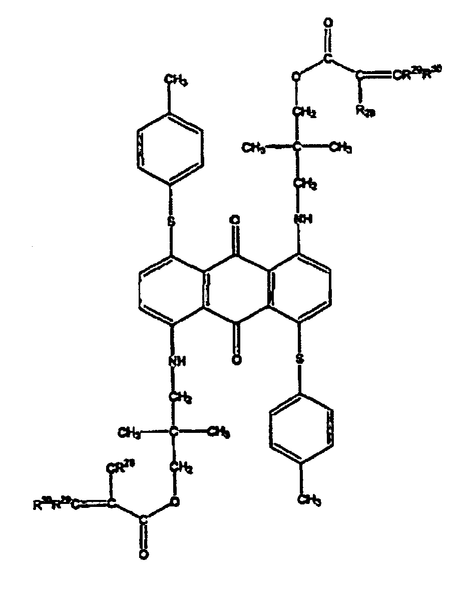 worin R²⁹ , R³⁰ ,R³¹, R³², R³³ und R³⁴ gleich oder verschieden und unabhängig Wasserstoff oder ein wahlweise mit einem oder mehreren Substituenten ausgewählt aus der Gruppe bestehend aus -OH, -NH₂, -SH, -NO₂, -CN und Halogen substituiertes C₁- bis C₆-Alkyl sind.

86. Durch Strahlung härtbare Zusammensetzung, die Folgendes umfasst:
(a) ein nicht chromophorhaltiges, durch Strahlung härtbares Oligomer; und
(b) eine durch Strahlung härtbare, chromophorhaltige Verbindung nach Anspruch 79.

87. Durch Strahlung härtbare Zusammensetzung nach Anspruch 86, wobei die Zusammensetzung weiterhin TiO₂ umfasst.

88. Durch Strahlung härtbare Zusammensetzung nach Anspruch 86, wobei die Zusammensetzung weiterhin einen oder mehrere Photoinitiatoren, ein reaktives Verdünnungsmittel, einen Stabilisator und ein Tensid umfasst.

89. Substrat, das zumindest teilweise mit der durch Strahlung härtbaren Zusammensetzung nach Anspruch 86 beschichtet ist.

90. Substrat nach Anspruch 89, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

91. Verfahren zur Herstellung einer durch Strahlung gehärteten farbigen Identifikationszusammensetzung auf zumindest einem Teil eines Substrates, wobei die durch Strahlung gehärtete farbige Identifikationszusammensetzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach Anspruch 86;
Auftragen der durch Strahlung härtbaren Zusammensetzung nach Anspruch 86 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

92. Verfahren nach Anspruch 91, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

93. Farbstoffkonzentrat aus der durch Strahlung härtbaren, chromophorhaltigen Verbindung nach Anspruch 79 und Tetrahydrofurfurylacrylat (THFA).

94. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 93.

95. Durch Strahlung härtbare Zusammensetzung nach Anspruch 94, wobei die Zusammensetzung weiterhin TiO₂ umfasst.

96. Durch Strahlung härtbare Zusammensetzung nach Anspruch 94, wobei die Zusammensetzung weiterhin einen oder mehrere Photoinitiatoren, ein reaktives Verdünnungsmittel, einen Stabilisator und ein Tensid umfasst.

97. Substrat, das zumindest teilweise mit der durch Strahlung härtbaren Zusammensetzung nach Anspruch 94 beschichtet ist.

98. Substrat nach Anspruch 97, wobei das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

99. Verfahren zur Herstellung einer durch Strahlung gehärteten farbigen Identifikationszusammensetzung auf zumindest einem Teil eines Substrates, wobei die durch Strahlung gehärtete farbige Identifikationszusammensetzung mindestens eine Chromophoreinheit besitzt, die an mindestens eine andere Komponente der durch Strahlung gehärteten farbigen Identifikationszusammensetzung kovalent gebunden ist, wobei das Verfahren folgende Schritte umfasst:
Bereitstellen eines Substrates;
Bereitstellen einer durch Strahlung härtbaren Zusammensetzung nach Anspruch 94;
Auftragen der durch Strahlung härtbaren Zusammensetzung nach Anspruch 94 auf zumindest einen Teil des Substrates; und
Bestrahlen der aufgetragenen Zusammensetzung über einen geeigneten Zeitraum mit einer geeigneten Wellenlänge und Intensität zur Härtung der Zusammensetzung zu einer durch Strahlung gehärteten farbigen Identifikationszusammensetzung.

100. Verfahren nach Anspruch 99, bei dem das Substrat ausgewählt ist aus der Gruppe bestehend aus (i) einem Lichtleiter mit einem Kern und einer den Kern umgebenden Hülle, (ii) einem Lichtleiter mit einem Kern, einer den Kern umgebenden Hülle sowie einem oder mehreren Polymerüberzügen auf der Hülle, (iii) einer Vielzahl in Gruppen angeordneter Lichtleiter und (iv) einem Lichtleiterband.

101. Farbstoffkonzentrat nach Anspruch 93, wobei, bezogen auf das Gesamtgewicht des Farbstoffkonzentrates, mehr als 5 Gew.-% des Farbstoffkonzentrates aus der Chromophoreinheit bestehen.

102. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 101.

103. Farbstoffkonzentrat nach Anspruch 93, wobei, bezogen auf das Gesamtgewicht des Farbstoffkonzentrates, 10 bis 35 Gew.-% des Farbstoffkonzentrates aus der Chromophoreinheit bestehen.

104. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 103.

105. Farbstoffkonzentrat aus einer Mischung aus zwei oder mehr durch Strahlung härtbaren, chromophorhaltigen Verbindungen nach Anspruch 79 und Tetrahydrofurfurylacrylat (THFA), wobei sich die mindestens eine Chromophoreinheit einer ersten durch Strahlung härtbaren, chromophorhaltigen Verbindung nach Anspruch 79 von der Chromophoreinheit einer zweiten durch Strahlung härtbaren, chromophorhaltigen Verbindung nach Anspruch 79 unterscheidet.

106. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 105.

107. Durch Strahlung härtbare Verbindung, die Folgendes umfasst:
(a) ein nicht chromophorhaltiges, durch Strahlung härtbares Oligomer; und zwei oder mehr
(b) einer durch Strahlung härtbaren, chromophorhaltigen Verbindung nach Anspruch 6;
(c) einer durch Strahlung härtbaren, chromophorhaltigen Verbindung nach Anspruch 43; und
(d) einer durch Strahlung härtbaren, chromophorhaltigen Verbindung nach Anspruch 79.

108. Farbstoffkonzentratat aus Tetrahydrofurfurylacrylat (THFA) und zwei oder mehr einer durch Strahlung härtbaren, chromophorhaltigen Verbindung nach Anspruch 6, einer durch Strahlung härtbaren, chromophorhaltigen Verbindung nach Anspruch 43 und einer durch Strahlung härtbaren, chromophorhaltigen Verbindung nach Anspruch 79.

109. Durch Strahlung härtbare Zusammensetzung, die Folgendes umfasst:
(a) ein nicht chromophorhaltiges, durch Strahlung härtbares Oligomer; und
(b) ein Farbstoffkonzentrat nach Anspruch 108.

110. Farbiges Oligomer zur Bereitstellung von Farbe für einen Überzug auf einem Kommunikationselement, wobei das farbige Oligomer das Reaktionsprodukt folgender Substanzen umfasst:
(a) eines Oligomers mit Isocyanatenden; und
(b) eines durch Strahlung härtbaren Monomers mit (i) einer isocyanat-reaktiven Funktionalität und (ii) einer ethylenisch ungesättigten Gruppe,
wobei das farbige Oligomer mittels kovalenter Bindungen, die durch Umsetzung der reaktiven Funktionalität (i) des durch Strahlung härtbaren Monomers (b) mit einer Isocyanateinheit des Oligomers mit Isocyanatenden (a) gebildet wird, an seinen Enden mit durch Strahlung härtbaren Gruppen versehen ist und das Oligomer mit Isocyanatenden (a) das Reaktionsprodukt folgender Substanzen ist:
(c) mindestens einer polyfunktionellen Verbindung mit mindestens zwei isocyanat-reaktiven Gruppen; und
(d) mindestens eines Polyisocyanats,
wobei die polyfunktionelle Verbindung (c) mindestens einen Farbstoff mit mindestens zwei isocyanat-reaktiven Funktionalitäten umfasst.

111. Farbiges Oligomer nach Anspruch 110, bei dem der Farbstoff ein Anthrachinonfarbstoff ist und der Anthrachinonfarbstoff folgende Formel besitzt: 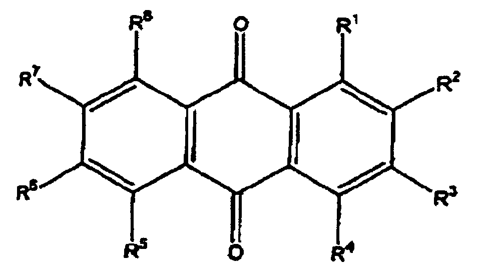 worin die R-Gruppen R¹, R², R³, R⁴, R⁵, R⁶, R⁷ und R⁸ jeweils unabhängig ausgewählt sind aus der Gruppe bestehend aus Wasserstoff, Amino, Hydroxy, Halogen, Nitro, carboxyliertem Alkalimetall, sulfatiertem Alkalimetall und einer Hydrocarbylgruppe mit wahlweise einem oder mehreren Heteroatomen, vorausgesetzt mindestens zwei der R-Gruppen R¹ bis R⁸ besitzen zumindest eine aus der Gruppe bestehend aus -OH, -NH₂ und -SH ausgewählte isocyanat-reaktive Funktionalität,
und worin angrenzende R-Gruppen von R¹ bis R⁸ einen Ring bilden können.

112. Farbiges Oligomer nach Anspruch 111, bei dem 1 bis 3 der R-Gruppen R¹ bis R⁸ folgende Formel besitzen: 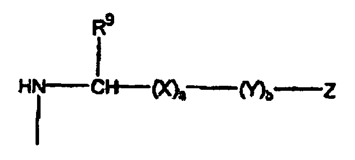 worin R⁹ Wasserstoff oder eine Alkylgruppe mit 1 bis 12 Kohlenstoffatomen ist, X -CH₂- ist, a eine ganze Zahl von 1 bis 6 ist, Y Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellt, b entweder 0 oder 1 ist und Z eine -OH-, -NH₂- oder -SH-Gruppe ist, und
die restlichen R-Gruppen R¹ bis R⁸ ausgewählt sind aus der Gruppen bestehend aus Wasserstoff, Amino, Hydroxy, Halogen, Nitro, carboxyliertem Alkalimetall und sulfatiertem Alkalimetall.

113. Farbiges Oligomer nach Anspruch 111, bei dem der Anthrachinonfarbstoff Folgende Formel besitzt: 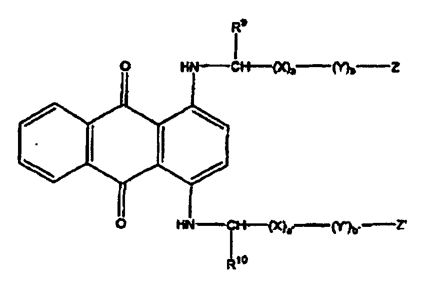 worin R⁹ und R¹⁰ unabhängig ausgewählt sind aus Wasserstoff oder einer Alkylgruppe mit 1 bis 12 Kohlenstoffatomen, X -CH₂- ist, a und a' unabhängig eine ganze Zahl von 1 bis 6 sind, Y und Y' unabhängig Polymereinheiten von Hydroxyalkylenen oder Alkylenoxidmonomere ausgewählt aus der Gruppe bestehend aus Ethylenoxid, Propylenoxid, Butylenoxid, Cyclohexanoxid und Glycidol darstellen, b und b' unabhängig entweder 0 oder 1 sind und Z und Z' unabhängig eine reaktive -OH-, -NH₂- oder -SH-Gruppe sind.

114. Farbiges Oligomer nach Anspruch 113, bei dem das Oligomer mit Isocyanatenden (a) ein Urethanoligomer ist und der Anthrachinonfarbstoff folgende Formel besitzt: 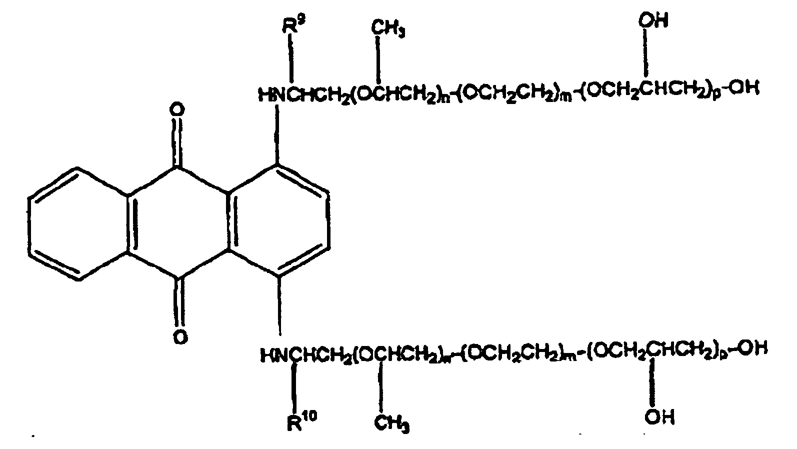 worin n, n', m, m', p und p' unabhängig einen Wert von 0 bis 40 besitzen.

115. Farbiges Oligomer nach Anspruch 113, bei dem der Anthrachinonfarbstoff folgende Formel besitzt:

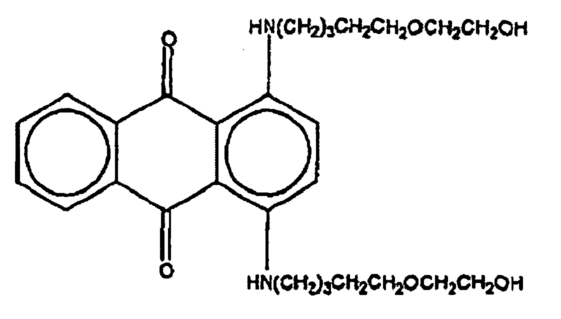

116. Farbiges Oligomer nach Anspruch 111, bei dem der Anthrachinonfarbstoff ausgewählt ist aus der Gruppe bestehend aus 1,5-Bis((3-hydroxy-2,2-dimethylpropyl)amino)-9,10-Anthracendion, 2,2'-((9,10-Dihydro-9,10-dioxo-1,5-anthracendiyl)bis(thio))bis-benzoesäure, 2-Hydroxyethylester und 1,5-Bis((2,2-dimethyl-3-hydroxypropyl)amino)-4,8-bis((4-methylphenyl)thio)-anthrachinon.

117. Farbiges Oligomer nach Anspruch 111, bei dem der Anthrachinonfarbstoff 1,5-Bis((2,2-dimethyl-3-hydroxypropyl)amino)-4,8-bis((4-methylphenyl)thio)-anthrachinon ist.

118. Farbiges Oligomer nach Anspruch 110, bei dem eine (Meth)acrylsäuregruppe die ethylenisch ungesättigte Gruppe (ii) in dem durch Strahlung härtbaren Monomer (b) darstellt.

119. Durch Lichteinwirkung härtbare Harzzusammensetzung zur Bildung eines farbigen, gehärteten Überzugs auf einem Lichtleiter, wobei die Harzzusammensetzung Folgendes umfasst:
(e) mindestens ein Urethanoligomer mit (Meth)acrylatenden;
(f) mindestens einen Photoinitiator;
(g) mindestens ein reaktives Verdünnungsmittel; und
(h) mindestens ein farbiges Oligomer nach Anspruch 110.

120. Lichtleiter aus einem farbigen, gehärteten Überzug, wobei der farbige, gehärtete Überzug aus der durch Lichteinwirkung härtbaren Harzzusammensetzung nach Anspruch 119 gebildet ist.

121. Reaktiver Anthrachinonfarbstoff zur Bereitstellung von Farbe für einen Überzug auf einem Lichtleiter, wobei der reaktive Anthrachinonfarbstoff eine Anthrachinon-Kemgruppe mit mindestens einem Substituenten aus einer durch Strahlung härtbaren Gruppe umfasst.

122. Reaktiver Anthrachinonfarbstoff nach Anspruch 121, bei dem die durch Strahlung härtbare Gruppe eine ethylenisch ungesättigte Gruppe oder eine Epoxygruppe ist.

123. Reaktiver Anthrachinonfarbstoff nach Anspruch 121, bei dem die durch Strahlung härtbare Gruppe eine (Meth)acrylsäuregruppe ist.

124. Reaktiver Anthrachinonfarbstoff nach Anspruch 121, wobei der reaktive Anthrachinonfarbstoff folgende Formel besitzt: 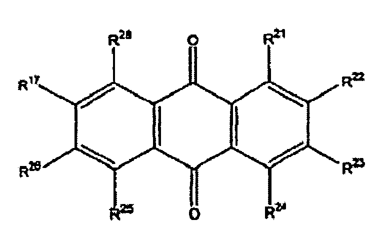 worin die R-Gruppen R¹, R², R³, R⁴, R⁵, R⁶, R⁷ und R⁸ jeweils unabhängig ausgewählt sind aus der Gruppe bestehend aus Wasserstoff, Amino, Hydroxy, Halogen, Nitro, carboxyliertem Alkalimetall, sulfatiertem Alkalimetall und einer Hydrocarbylgruppe mit wahlweise einem oder mehreren Heteroatomen, vorausgesetzt mindestens eine der R-Gruppen R¹¹ bis R¹⁸ besitzt zumindest eine ethylenisch ungesättigte, durch Strahlung härtbare Funktionalität.

125. Reaktiver Anthrachinonfarbstoff nach Anspruch 124, bei dem eine oder zwei der R-Gruppen R¹¹ bis R¹⁸ eine (Meth)acrylsäure-Funktionalität besitzen und mindestens vier der R-Gruppen R¹¹ bis R¹⁸ Wasserstoff sind.

126. Reaktiver Anthrachinonfarbstoff nach Anspruch 124, wobei der reaktive Anthrachinonfarbstoff eine der folgenden Formeln besitzt: 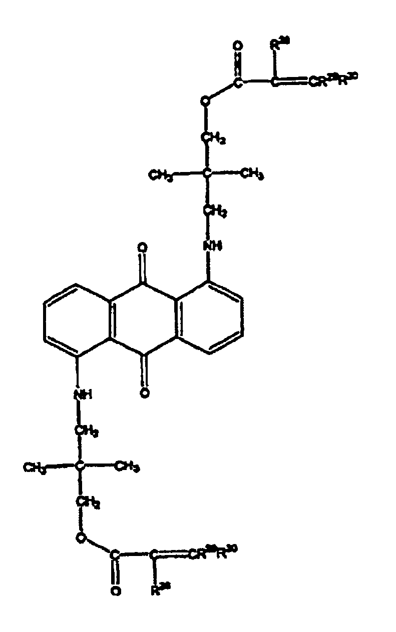 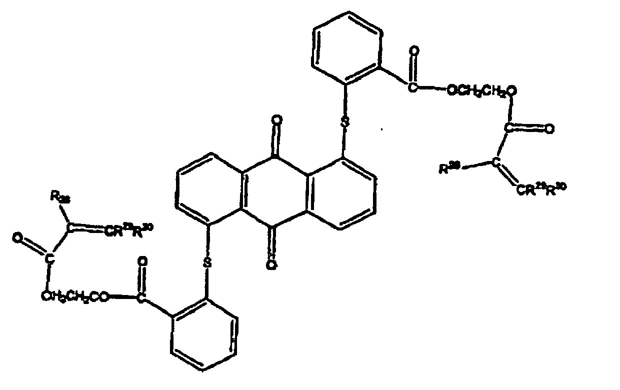 oder 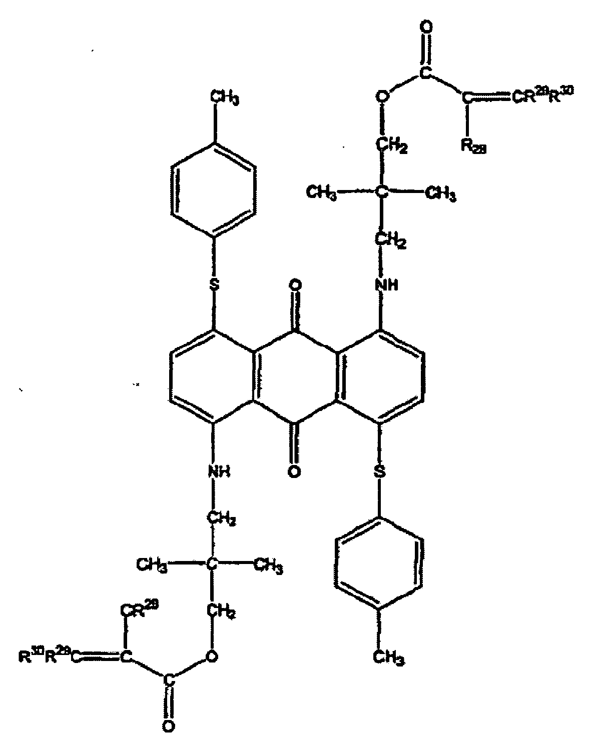 worin R²⁹, R³⁰, R³¹, R³² , R³³ und R³⁴ gleich oder verschieden und unabhängig Wasserstoff oder ein wahlweise mit einem oder mehreren Substituenten ausgewählt aus der Gruppe bestehend aus -OH, -NH₂, -SH, -NO₂, -CN und Halogen substituiertes C₁- bis C₆-Alkyl sind.

127. Durch Lichteinwirkung härtbare Harzzusammensetzung zur Bildung eines farbigen, gehärteten Überzugs auf einem Lichtleiter, wobei die Harzzusammensetzung Folgendes umfasst:
(a) mindestens ein Urethanoligomer mit (Meth)acrylatenden;
(b) mindestens einen Photoinitiator;
(c) mindestens ein reaktives Verdünnungsmittel; und
(d) mindestens einen reaktiven Anthrachinonfarbstoff nach Anspruch 124.

128. Lichtleiter aus einem farbigen, gehärteten Überzug, wobei der farbige, gehärtete Überzug aus der durch Lichteinwirkung härtbaren Harzzusammensetzung nach Anspruch 127 gebildet ist.

## Revendications

1. Élément de télécommunication ayant à sa surface un revêtement d'identification de couleur, ledit élément de télécommunication comprenant :
un support allongé ,de transmission pour communication ; et
un revêtement ayant une couleur d'identification appliquée sur au moins une partie du support de transmission, dans lequel ledit revêtement comprend un réseau polymère réticulé durci par rayonnement et dans lequel la couleur d'identification dans le revêtement est au moins en partie fournie par au moins un fragment chromophore lié par covalence audit réseau polymère au moyen d'au moins une liaison covalente.

2. Élément de télécommunication selon la revendication 1, dans lequel :
(a) le support allongé de transmission est choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques ; et
(b) la couleur d'identification est thermiquement stable et résistante à la lumière.

3. Élément de télécommunication selon la revendication 1, dans lequel la couleur d'identification dans le revêtement est fournie au moins en partie par au moins un fragment anthraquinone lié par covalence audit réseau polymère au moyen d'au moins une liaison covalente.

4. Élément de télécommunication selon la revendication 1, dans lequel la couleur d'identification dans le revêtement est fournie au moins en partie par au moins un fragment méthine lié par covalence audit réseau polymère au moyen d'au moins une liaison covalente.

5. Élément de télécommunication selon la revendication 1, dans lequel la couleur d'identification dans le revêtement est fournie au moins en partie par au moins un fragment azoïque lié par covalence audit réseau polymère au moyen d'au moins une liaison covalente.

6. Composé durcissable par rayonnement, contenant un chromophore, comprenant au moins un groupe durcissable par rayonnement et au moins un fragment chromophore, ledit composé durcissable par rayonnement, contenant un chromophore, comprenant le produit de réaction de :
(a) un composé contenant un isocyanate et comprenant (i) au moins un groupe isocyanate et (ii) le fragment chromophore au nombre d'au moins un ; et
(b) un composé durcissable par rayonnement comprenant (i) au moins un groupe fonctionnel apte à réagir avec un isocyanate et (ii) le groupe durcissable par rayonnement au nombre d'au moins un, dans lequel le groupe durcissable par rayonnement, au nombre d'au moins un, dudit composé durcissable par rayonnement contenant un chromophore est lié par covalence audit composé durcissable par rayonnement contenant un chromophore au moyen d'une liaison covalente formée par mise en réaction d'un groupe fonctionnel (i) apte à réagir avec un isocyanate dudit composé (b) durcissable par rayonnement avec un groupe isocyanate (i) dudit composé (a) contenant un isocyanate, et ledit composé (a) contenant un isocyanate est le produit de réaction de :
(c) un composé contenant un chromophore comprenant (i) un fragment chromophore et (ii) au moins un groupe fonctionnel apte à réagir avec un isocyanate ; et
(d) un polyisocyanate.

7. Composé durcissable par rayonnement contenant un chromophore selon la revendication 6, dans lequel le groupe fonctionnel (i) réactif avec un isocyanate, au nombre d'au moins un, dudit composé (b) durcissable par rayonnement et le groupe fonctionnel (ii) apte à réagir avec un isocyanate, au nombre d'au moins un, dudit composé (c) contenant un chromophore sont choisis indépendamment dans l'ensemble constitué de -OH, -NH₂ et -SH.

8. Composé durcissable par rayonnement contenant un chromophore selon la revendication 6, dans lequel le groupe (ii) durcissable par rayonnement, au nombre d'au moins un, dudit composé (b) durcissable par rayonnement comprend une insaturation éthylénique.

9. Composé durcissable par rayonnement contenant un chromophore selon la revendication 8, dans lequel le groupe (ii) durcissable par rayonnement et éthyléniquement insaturé dudit composé (b) durcissable par rayonnement comprend un (méth)acrylate.

10. Composé durcissable par rayonnement contenant un chromophore selon la revendication 6, dans lequel le groupe (ii) durcissable par rayonnement, au nombre d'au moins un, dudit composé (b) durcissable par rayonnement comprend un groupe époxy.

11. Composé durcissable par rayonnement contenant un chromophore selon la revendication 6, dans lequel le polyisocyanate (d) est un diisocyanate.

12. Composé durcissable par rayonnement contenant un chromophore selon la revendication 6, dans lequel le fragment chromophore (i), au nombre d'au moins un, dudit composé (c) contenant un chromophore est un colorant de type méthine.

13. Composé durcissable par rayonnement contenant un chromophore selon la revendication 6, dans lequel le fragment chromophore (i), au nombre d'au moins un, dudit composé (c) contenant un chromophore est un colorant azoïque.

14. Composé durcissable par rayonnement contenant un chromophore selon la revendication 6, dans lequel le fragment chromophore (i), au nombre d'au moins un, dudit composé (c) contenant un chromophore est un colorant de type anthraquinone.

15. Composé durcissable par rayonnement contenant un chromophore selon la revendication 14, dans lequel le colorant de type anthraquinone a la formule suivante : 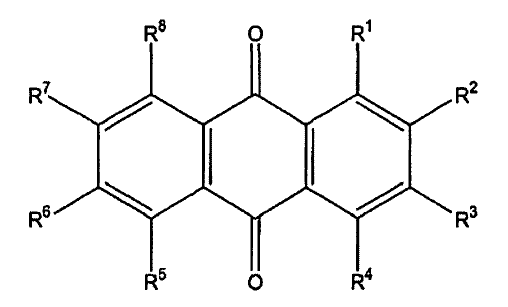 dans laquelle les groupes R, R¹, R², R³ R⁴ R⁵, R⁶ R ⁷ et R⁸, sont choisis chacun indépendamment dans l'ensemble constitué de l'hydrogène, un groupe amino, hydroxy, halogéno, nitro, un métal alcalin carboxylé, un métal alcalin sulfaté et un groupe hydrocarbyle contenant éventuellement un ou plusieurs hétéroatomes,
à condition qu'au moins deux groupes R, R¹ à R⁸, aient au moins un groupe fonctionnel apte à réagir avec un isocyanate, choisi dans l'ensemble constitué de -OH, -NH₂ et -SH, et dans lequel, en outre, des groupes R contigus parmi R¹ à R⁸ peuvent former un noyau.

16. Composé durcissable par rayonnement contenant un chromophore selon la revendication 15, dans lequel de 1 à 3 desdits groupes R, R¹ à R⁸, ont la formule suivante : 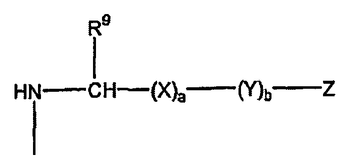 dans laquelle R⁹ est l'hydrogène ou un groupe alkyle ayant de 1 à 12 atomes de carbone, X est -CH₂-, a est un nombre entier de 1 à 6, Y représente des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b vaut 0 ou 1, et Z est un groupe -OH, -NH₂ ou -SH, et
dans lequel en outre le reste desdits groupes R, R¹ à R⁸, est choisi dans l'ensemble constitué de l'hydrogène, un groupe amino, hydroxy, halogéno, nitro, un métal alcalin carboxylé et un métal alcalin sulfaté.

17. Composé durcissable par rayonnement contenant un chromophore selon la revendication 15, dans lequel le colorant de type anthraquinone a la formule suivante : 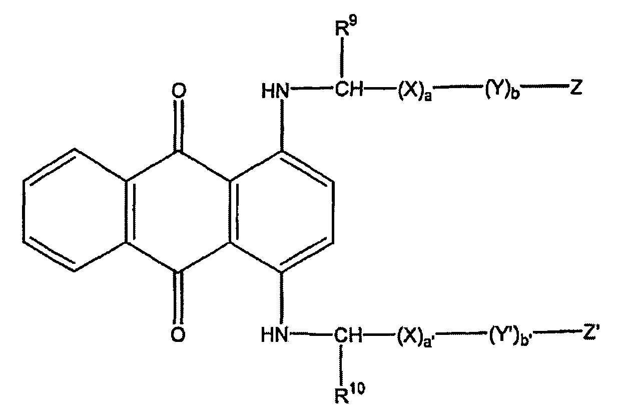 dans laquelle R⁹ et R¹⁰ sont choisis indépendamment parmi l'hydrogène ou un groupe alkyle ayant de 1 à 12 atomes de carbone, X est -CH₂-, a et a' sont indépendamment des nombres entiers de 1 à 6, Y et Y' représentent indépendamment des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b et b' valent indépendamment 0 ou 1, et Z et Z' sont indépendamment des groupes -OH, -NH₂ ou -SH.

18. Composé durcissable par rayonnement contenant un chromophore selon la revendication 17, dans lequel le colorant de type anthraquinone a la formule : 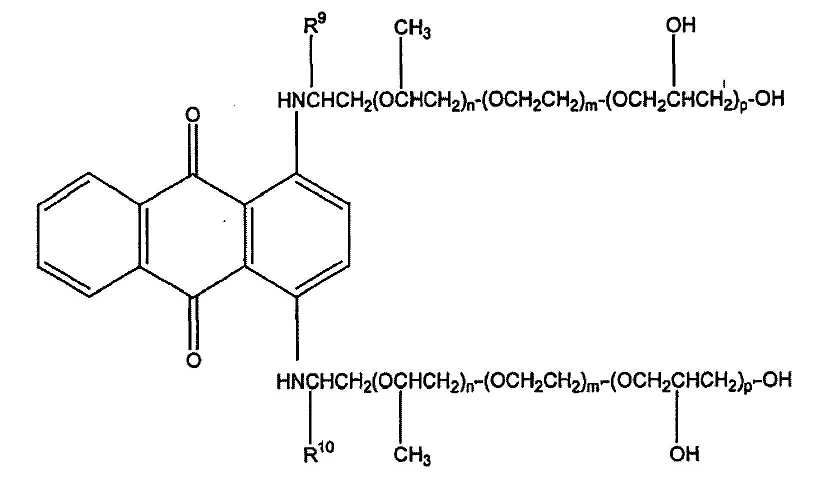 dans laquelle n, n', m, m', p et p' ont indépendamment une valeur de 0 à 40.

19. Composé durcissable par rayonnement contenant un chromophore selon la revendication 17, dans lequel le colorant de type anthraquinone a la formule :

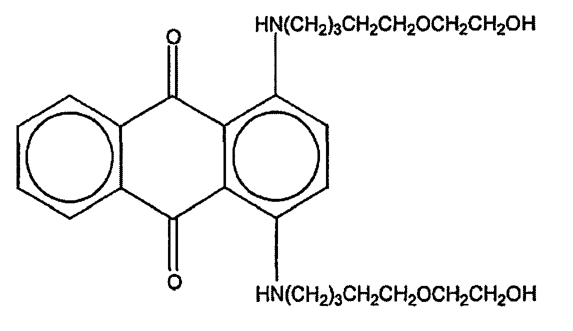

20. Composé durcissable par rayonnement contenant un chromophore selon la revendication 14, dans lequel le colorant de type anthraquinone est choisi dans l'ensemble constitué de 1,5-bis((3-hydroxy-2,2-diméthylpropyl)-amino)-9,10-anthracènedione ; acide 2,2'-((9,10-dihydro-9,10-dioxo-1,5-anthracènediyl)bis(thio))bis-benzoïque, ester de 2-hydroxyéthyle ; et 1,5-bis((2,2-diméthyl-3-hydroxypropyl)amino)-4,8-bis((4-méthylphényl)thio)-anthraquinone.

21. Composé durcissable par rayonnement contenant un chromophore selon la revendication 14, dans lequel le colorant de type anthraquinone est de la 1,5-bis((2,2-diméthyl-3-hydroxypropyl)amino)-4,8-bis((4-méthylphényl)-thio)anthraquinone.

22. Composition durcissable par rayonnement, comprenant :
(a) un oligomère durcissable par rayonnement ne contenant pas de chromophore ; et
(b) un composé durcissable par rayonnement contenant un chromophore selon la revendication 6.

23. Composition durcissable par rayonnement selon la revendication 22, ladite composition comprenant en outre du TiO₂.

24. Composition durcissable par rayonnement selon la revendication 22, ladite composition comprenant en outre un ou plusieurs éléments choisis parmi un photo-initiateur, un diluant réactif, un stabilisant et un agent tensioactif.

25. Substrat ayant la composition durcissable par rayonnement selon la revendication 22 sur au moins une partie de celui-ci.

26. Substrat selon la revendication 25, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

27. Procédé de préparation d'une composition durcie par rayonnement, identifiant une couleur, sur au moins une partie d'un substrat, ladite composition durcie par rayonnement identifiant une couleur ayant au moins un fragment chromophore lié par covalence à au moins un autre composant de la composition durcie par rayonnement identifiant une couleur, ledit procédé comprenant les étapes consistant à :
fournir un substrat ;
fournir une composition durcissable par rayonnement selon la revendication 22 ;
appliquer la composition durcissable par rayonnement selon la revendication 22 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement identifiant une couleur.

28. Procédé selon la revendication 27, dans lequel le substrat est choisi dans l'ensemble constitué de
(i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

29. Concentré de colorant comprenant le composé durcissable par rayonnement contenant un chromophore selon la revendication 6 et de l'acrylate de tétrahydrofurfuryle (THFA).

30. Composition durcissable par rayonnement, comprenant :
(a) un oligomère durcissable par rayonnement ne contenant pas de chromophore ; et
(b) un concentré de colorant selon la revendication 29.

31. Composition durcissable par rayonnement selon la revendication 30, ladite composition comprenant en outre du TiO₂.

32. Composition durcissable par rayonnement selon la revendication 30, ladite composition comprenant en outre un ou plusieurs éléments choisis parmi un photo-initiateur, un diluant réactif, un stabilisant et un agent tensioactif.

33. Substrat ayant la composition durcissable par rayonnement selon la revendication 30 sur au moins une partie de celui-ci.

34. Substrat selon la revendication 33, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

35. Procédé de préparation d'une composition durcie par rayonnement, identifiant une couleur, sur au moins une partie d'un substrat, dans lequel la composition durcie par rayonnement identifiant une couleur a au moins un fragment chromophore lié par covalence à au moins un autre composant de la composition durcie par rayonnement identifiant une couleur, ledit procédé comprenant les étapes consistant à :
fournir un substrat ;
fournir une composition durcissable par rayonnement selon la revendication 30 ;
appliquer la composition durcissable par rayonnement selon la revendication 30 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement identifiant une couleur.

36. Procédé selon la revendication 35, dans lequel le substrat est choisi dans l'ensemble constitué de
(i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

37. Concentré de colorant selon la revendication 29, ledit concentré de colorant comprenant plus de 5 % en poids de fragment chromophore par rapport au poids total du concentré de colorant.

38. Composition durcissable par rayonnement, comprenant :
(a) un oligomère durcissable par rayonnement ne contenant pas de chromophore ; et
(b) un concentré de colorant selon la revendication 37.

39. Concentré de colorant selon la revendication 29, ledit concentré de colorant comprenant de 10 % en poids à 35 % en poids de fragment chromophore par rapport au poids total du concentré de colorant.

40. Composition durcissable par rayonnement, comprenant :
(a) un oligomère durcissable par rayonnement ne contenant pas de chromophore ; et
(b) un concentré de colorant selon la revendication 39.

41. Concentré de colorant comprenant un mélange de deux ou plus de deux composés durcissables par rayonnement contenant un chromophore selon la revendication 6 et de l'acrylate de tétrahydrofurfuryle (THFA), dans lequel au moins le fragment chromophore d'un premier composé durcissable par rayonnement contenant un chromophore selon la revendication 6 est différent du fragment chromophore d'un second composé durcissable par rayonnement contenant un chromophore selon la revendication 6.

42. Composition durcissable par rayonnement, comprenant :
(a) un oligomère durcissable par rayonnement ne contenant pas de chromophore ; et
(b) un concentré de colorant selon la revendication 41.

43. Composé durcissable par rayonnement contenant un chromophore, comprenant au moins un groupe durcissable par rayonnement et au moins un fragment chromophore, ledit composé durcissable par rayonnement contenant un chromophore comprenant le produit de réaction de :
(a) un composé contenant un chromophore, comprenant (i) au moins un groupe fonctionnel apte à réagir avec un isocyanate et (ii) le fragment chromophore au nombre d'au moins un ; et
(b) un composé durcissable par rayonnement, comprenant (i) au moins un groupe isocyanate et (ii) le groupe durcissable par rayonnement au nombre d'au moins un,dans lequel le groupe durcissable par rayonnement, au nombre d'au moins un, dudit composé durcissable par rayonnement contenant un chromophore est lié par covalence audit composé durcissable par rayonnement contenant un chromophore au moyen d'au moins une liaison covalente formée par mise en réaction d'un groupe isocyanate (i) dudit composé (b) durcissable par rayonnement avec un groupe fonctionnel (i) apte à réagir avec un isocyanate dudit composé (a) contenant un chromophore.

44. Composé durcissable par rayonnement contenant un chromophore selon la revendication 43, dans lequel le groupe fonctionnel (i) apte à réagir avec un isocyanate, au nombre d'au moins un, dudit composé (a) contenant un chromophore est choisi dans l'ensemble constitué de -OH, -NH₂ et -SH.

45. Composé durcissable par rayonnement contenant un chromophore selon la revendication 43, dans lequel le groupe (ii) durcissable par rayonnement, au nombre d'au moins un, dudit composé (b) durcissable par rayonnement comprend une insaturation éthylénique.

46. Composé durcissable par rayonnement contenant un chromophore selon la revendication 45, dans lequel le groupe (ii) durcissable par rayonnement, éthyléniquement insaturé, dudit composé (b) durcissable par rayonnement comprend un méth(acrylate).

47. Composé durcissable par rayonnement contenant un chromophore selon la revendication 43, dans lequel le groupe (ii) durcissable par rayonnement, au nombre d'au moins un, dudit composé (b) durcissable par rayonnement comprend un groupe époxy.

48. Composé durcissable par rayonnement contenant un chromophore selon la revendication 43, dans lequel le fragment chromophore (ii), au nombre d'au moins un, dudit composé (a) contenant un chromophore est un colorant de type méthine.

49. Composé durcissable par rayonnement contenant un chromophore selon la revendication 43, dans lequel le fragment chromophore (ii), au nombre d'au moins un, dudit composé (a) contenant un chromophore est un colorant azoïque.

50. Composé durcissable par rayonnement contenant un chromophore selon la revendication 43, dans lequel le fragment chromophore (ii), au nombre d'au moins un, dudit composé (a) contenant un chromophore est un colorant de type anthraquinone.

51. Composé durcissable par rayonnement contenant un chromophore selon la revendication 43, dans lequel le composé (a) contenant un chromophore est un colorant de type anthraquinone ayant la formule : 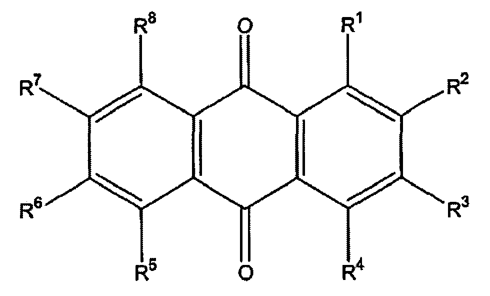 dans laquelle les groupes R, R¹, R², R³, R⁴, R⁵ , R⁶, R⁷ et R⁸, sont choisis chacun indépendamment dans l'ensemble constitué de l'hydrogène, un groupe amino, hydroxy, halogéno, nitro, un métal alcalin carboxylé, un métal alcalin sulfaté et un groupe hydrocarbyle contenant éventuellement un ou plusieurs hétéroatomes,
à condition qu'au moins deux groupes R, R¹ à R⁸, aient au moins un groupe fonctionnel apte à réagir avec un isocyanate, choisi dans l'ensemble constitué de -OH, -NH₂ et -SH,
et en outre, dans laquelle des groupes R contigus parmi R¹ à R⁸ peuvent former un noyau.

52. Composé durcissable par rayonnement contenant un chromophore selon la revendication 51, dans lequel de 1 à 3 desdits groupes R, R¹ à R⁸, ont la formule suivante : 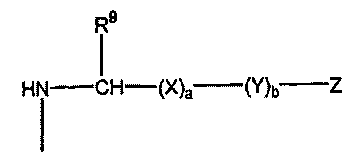 dans laquelle R⁹ est l'hydrogène ou un groupe alkyle ayant de 1 à 12 atomes de carbone, X est -CH₂-, a est un nombre entier de 1 à 6, Y représente des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b vaut 0 ou 1, et Z est un groupe -OH, -NH₂ ou -SH, et dans lequel en outre le reste desdits groupes R, R¹ à R⁸, est choisi dans l'ensemble constitué de l'hydrogène, un groupe amino, hydroxy, halogéno, nitro, un métal alcalin carboxylé et un métal alcalin sulfaté.

53. Composé durcissable par rayonnement contenant un chromophore selon la revendication 51, dans lequel le colorant de type anthraquinone a la formule : 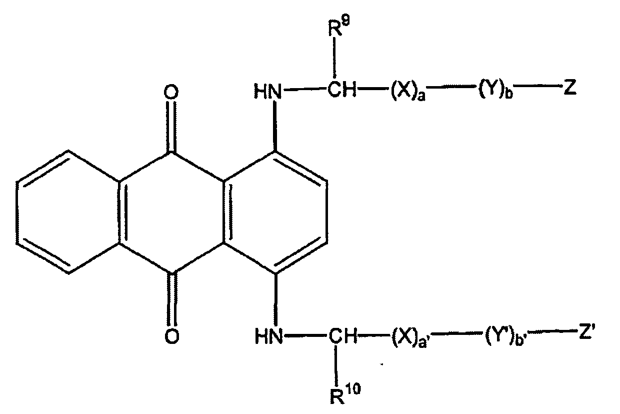 dans laquelle R⁹ et R¹⁰ sont choisis indépendamment parmi l'hydrogène ou un groupe alkyle ayant de 1 à 12 atomes de carbone, X est - CH₂-, a et a' sont indépendamment des nombres entiers de 1 à 6, Y et Y' représentent indépendamment des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b et b' valent indépendamment 0 ou 1, et Z et Z' sont indépendamment des groupes -OH, -NH₂ ou -SH.

54. Composé durcissable par rayonnement contenant un chromophore selon la revendication 53, dans lequel le colorant de type anthraquinone a la formule : 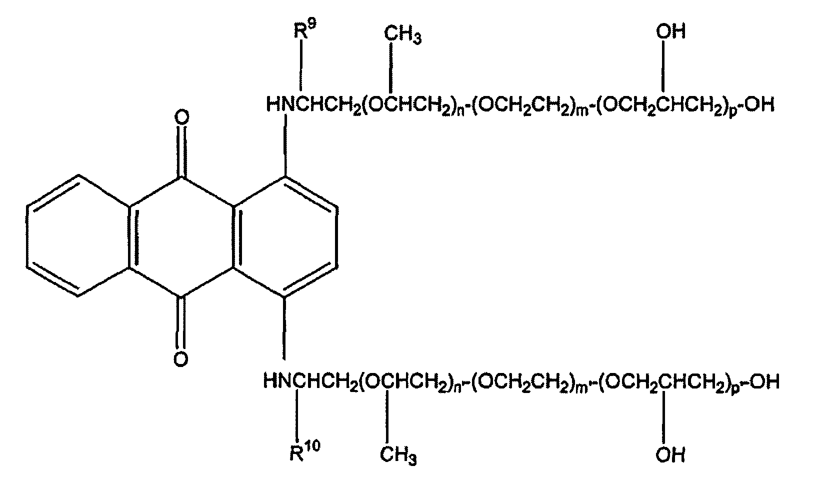 dans laquelle n, n', m, m', p et p' ont indépendamment une valeur de 0 à environ 40.

55. Composé durcissable par rayonnement contenant un chromophore selon la revendication 53, dans lequel le colorant de type anthraquinone a la formule .

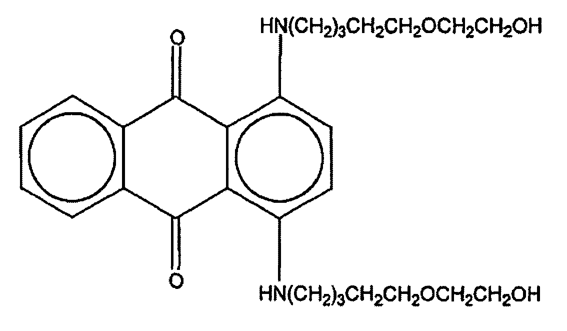

56. Composé durcissable par rayonnement contenant un chromophore selon la revendication 43, dans lequel le composé (a) contenant un chromophore est choisi dans l'ensemble constitué de 1,5-bis ((3-hydroxy-2,2-diméthylpropyl)amino)-9,10-anthracènedione ; acide 2,2'-((9,10-dihydro-9,10-dioxo-1,5-anthracènediyl)bis(thio))bis-benzoïque, ester de 2-hydroxyéthyle ; et 1,5-bis ((2,2-diméthyl-3-hydroxypropyl)amino)-4,8-bis ((4-méthylphényl)-thio)anthraquinone.

57. Composé durcissable par rayonnement contenant un chromophore selon la revendication 56, dans lequel le composé (a) contenant un chromophore est de la 1,5-bis((2,2-diméthyl-3-hydroxypropyl)amino)-4,8-bis((4-méthyl-phényl)thio)anthraquinone.

58. Composition durcissable par rayonnement, comprenant :
(a) un oligomère durcissable par rayonnement ne contenant pas de chromophore ; et
(b) un composé durcissable par rayonnement contenant un chromophore selon la revendication 43.

59. Composition durcissable par rayonnement selon la revendication 58, ladite composition comprenant en outre du TiO₂

60. Composition durcissable par rayonnement selon la revendication 58, ladite composition comprenant en outre un ou plusieurs éléments choisis parmi un photo-initiateur, un diluant réactif, un stabilisant et un agent tensioactif.

61. Substrat ayant la composition durcissable par rayonnement selon la revendication 58 sur au moins une partie de celui-ci.

62. Substrat selon la revendication 61, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

63. Procédé de préparation d'une composition durcie par rayonnement, identifiant une couleur, sur au moins une partie d'un substrat, ladite composition durcie par rayonnement identifiant une couleur ayant au moins un fragment chromophore lié par covalence à au moins un autre composant de la composition durcie par rayonnement identifiant une couleur, ledit procédé comprenant les étapes consistant à :
fournir un substrat ;
fournir une composition durcissable par rayonnement selon la revendication 58 ;
appliquer la composition durcissable par rayonnement selon la revendication 58 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement identifiant une couleur.

64. Procédé selon la revendication 63, dans lequel le substrat est choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

65. Concentré de colorant comprenant le composé durcissable par rayonnement contenant un chromophore selon la revendication 43 et de l'acrylate de tétrahydrofurfuryle (THFA).

66. Composition durcissable par rayonnement, comprenant :
(a) un oligomère durcissable par rayonnement ne contenant pas de chromophore ; et
(b) un concentré de colorant selon la revendication 65.

67. Composition durcissable par rayonnement selon la revendication 66, ladite composition comprenant en outre du TiO₂

68. Composition durcissable par rayonnement selon la revendication 66, ladite composition comprenant en outre un ou plusieurs éléments choisis parmi un photo-initiateur, un diluant réactif, un stabilisant et un agent tensioactif.

69. Substrat ayant la composition durcissable par rayonnement selon la revendication 66 sur au moins une partie de celui-ci.

70. Substrat selon la revendication 69, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

71. Procédé de préparation d'une composition durcie par rayonnement, identifiant une couleur, sur au moins une partie d'un substrat, ladite composition durcie par rayonnement identifiant une couleur ayant au moins un fragment chromophore lié par covalence à au moins un autre composant de la composition durcie par rayonnement identifiant une couleur, ledit procédé comprenant les étapes consistant à :
fournir un substrat ;
fournir une composition durcissable par rayonnement selon la revendication 66 ;
appliquer la composition durcissable par rayonnement selon la revendication 66 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement identifiant une couleur.

72. Procédé selon la revendication 71, dans lequel le substrat est choisi dans l'ensemble constitué de
(i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

73. Concentré de colorant selon la revendication 65, ledit concentré de colorant comprenant plus de 5 % en poids de fragment chromophore par rapport au poids total du concentré de colorant.

74. Composition durcissable par rayonnement, comprenant :
(a) un oligomère durcissable par rayonnement ne contenant pas de chromophore ; et
(b) un concentré de colorant selon la revendication 73.

75. Concentré de colorant selon la revendication 65, ledit concentré de colorant comprenant environ 10 % en poids à environ 35 % en poids de fragment chromophore par rapport au poids total du concentré de colorant.

76. Composition durcissable par rayonnement, comprenant :
(a) un oligomère durcissable par rayonnement ne contenant pas de chromophore ; et
(b) un concentré de colorant selon la revendication 75.

77. Concentré de colorant comprenant un mélange de deux ou plus de deux composés durcissables par rayonnement contenant un chromophore selon la revendication 43 et de l'acrylate de tétrahydrofurfuryle (THFA), dans lequel au moins le fragment chromophore d'un premier composé durcissable par rayonnement contenant un chromophore selon la revendication 43 est différent du fragment chromophore d'un second composé durcissable par rayonnement contenant un chromophore selon la revendication 43.

78. Composition durcissable par rayonnement, comprenant :
(a) un oligomère durcissable par rayonnement ne contenant pas de chromophore ; et
(b) un concentré de colorant selon la revendication 77.

79. Composé durcissable par rayonnement contenant un chromophore, comprenant au moins un groupe durcissable par rayonnement et au moins un fragment chromophore, et dans lequel le fragment chromophore est choisi dans l'ensemble constitué d'un colorant de type méthine, et le colorant de type méthine comprend un groupe central méthine avec au moins un substituant comprenant le groupe durcissable par rayonnement, au nombre d'au moins un, un colorant azoïque et le colorant azoïque comprend un groupe central azoïque avec au moins un substituant comprenant le groupe durcissable par rayonnement, au nombre d'au moins, et un colorant de type anthraquinone, et le colorant de type anthraquinone comprend un groupe central anthraquinone avec au moins un substituant comprenant le groupe durcissable par rayonnement, au nombre d'au moins un.

80. Composé durcissable par rayonnement contenant un chromophore selon la revendication 79, dans lequel le groupe durcissable par rayonnement, au nombre d'au moins un, comprend une insaturation éthylénique.

81. Composé durcissable par rayonnement contenant un chromophore selon la revendication 80, dans lequel le groupe durcissable par rayonnement éthyléniquement insaturé comprend un méth(acrylate).

82. Composé durcissable par rayonnement contenant un chromophore selon la revendication 79, dans lequel le groupe durcissable par rayonnement, au nombre d'au moins un, comprend un groupe époxy.

83. Composé durcissable par rayonnement contenant un chromophore selon la revendication 79, dans lequel le colorant de type anthraquinone a la formule : 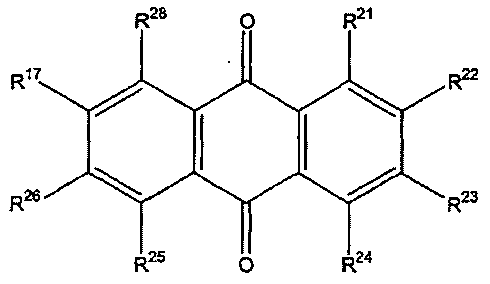 dans laquelle les groupes R, R¹, R², R³, R⁴, R⁵, R⁶, R⁷ et R⁸, sont choisis chacun indépendamment dans l'ensemble constitué de l'hydrogène, un groupe amino, hydroxy, halogéno, nitro, un métal alcalin carboxylé, un métal alcalin sulfaté et un groupe hydrocarbyle contenant éventuellement un ou plusieurs hétéroatomes,
à condition qu'au moins l'un des groupes R, R¹¹ à R¹⁸, comprenne au moins un groupe durcissable par rayonnement éthyléniquement insaturé.

84. Composé durcissable par rayonnement contenant un chromophore selon la revendication 83, dans lequel un ou deux desdits groupes R, R¹¹ à R¹⁸, ont une fonctionnalité (méth)acrylique et au moins quatre desdits groupes R, R¹¹ à R¹⁸, sont l'hydrogène.

85. Composé durcissable par rayonnement contenant un chromophore selon la revendication 79, dans lequel le colorant de type anthraquinone a l'une des formules suivantes : 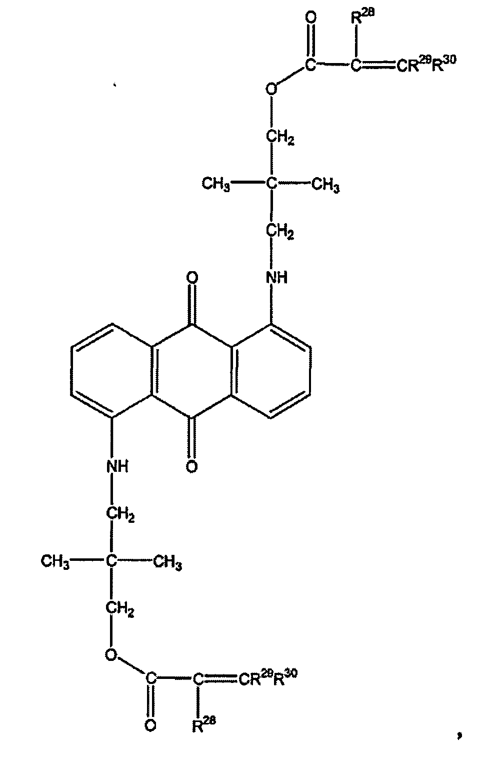 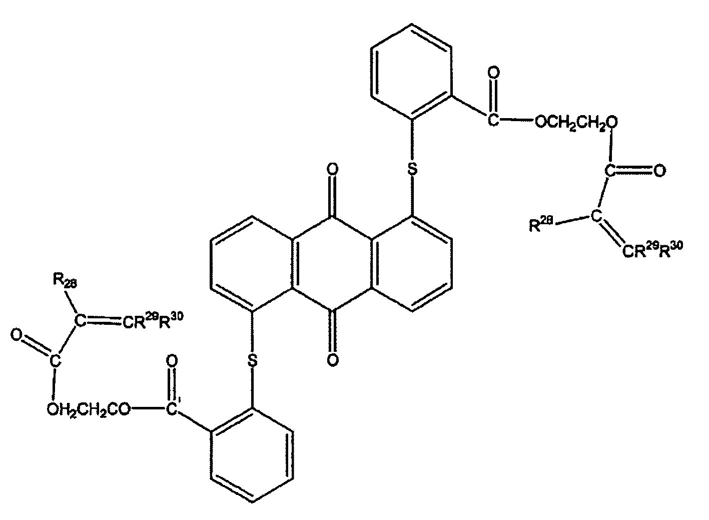 , ou 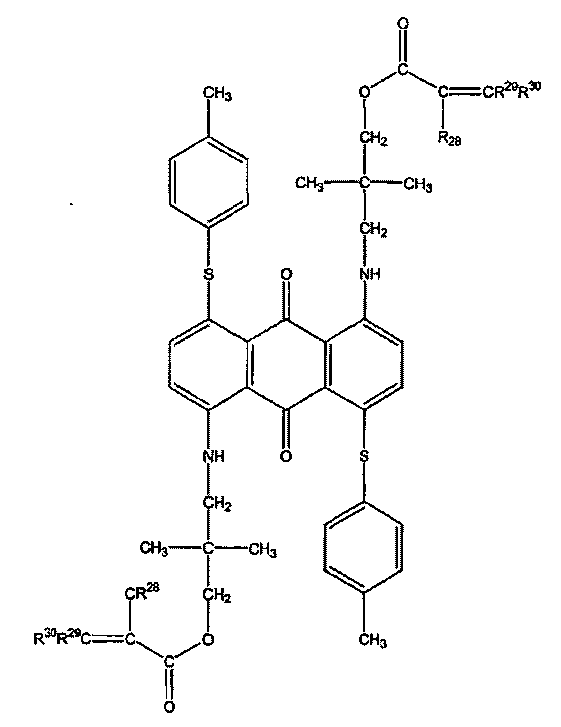 dans lesquelles R²⁹,R³⁰, R³¹, R³², R³³ et R³⁴ sont identiques ou différents et sont indépendamment l'hydrogène ou un groupe alkyle en C₁ à C₆ éventuellement substitué par un ou plusieurs substituants choisis dans l'ensemble constitué de
- OH, -NH₂, -SH, -NO₂, -CN et un halogène.

86. Composition durcissable par rayonnement, comprenant :
(a) un oligomère durcissable par rayonnement ne contenant pas de chromophore ; et
(b) un composé durcissable par rayonnement contenant un chromophore selon la revendication 79.

87. Composition durcissable par rayonnement selon la revendication 86, ladite composition comprenant en outre du TiO₂.

88. Composition durcissable par rayonnement selon la revendication 86, ladite composition comprenant en outre un ou plusieurs éléments choisis parmi un photo-initiateur, un diluant réactif, un stabilisant et un agent tensioactif.

89. Substrat ayant la composition durcissable par rayonnement selon la revendication 86 sur au moins une partie de celui-ci.

90. Substrat selon la revendication 89, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

91. Procédé de préparation d'une composition durcie par rayonnement, identifiant une couleur, sur au moins une partie d'un substrat, dans lequel la composition durcie par rayonnement et identifiant une couleur a au moins un fragment chromophore lié par covalence à au moins un autre composant de la composition durcie par rayonnement et identifiant une couleur, ledit procédé comprenant les étapes consistant à :
fournir un substrat ;
fournir une composition durcissable par rayonnement selon la revendication 86 ;
appliquer la composition durcissable par rayonnement selon la revendication 86 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement et identifiant une couleur.

92. Procédé selon la revendication 91, dans lequel le substrat est choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

93. Concentré de colorant comprenant le composé durcissable par rayonnement contenant un chromophore selon la revendication 79 et de l'acrylate de tétrahydrofurfuryle (THFA).

94. Composition durcissable par rayonnement comprenant :
(a) un oligomère durcissable par rayonnement ne contenant pas de chromophore ; et
(b) un concentré de colorant selon la revendication 93.

95. Composition durcissable par rayonnement selon la revendication 94, ladite composition comprenant en outre du TiO₂

96. Composition durcissable par rayonnement selon la revendication 94, ladite composition comprenant en outre un ou plusieurs éléments choisis parmi un photo-initiateur, un diluant réactif, un stabilisant et un agent tensioactif.

97. Substrat ayant la composition durcissable par rayonnement selon la revendication 94 sur au moins une partie de celui-ci.

98. Substrat selon la revendication 97, ledit substrat étant choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

99. Procédé de préparation d'une composition durcie par rayonnement et identifiant une couleur, sur au moins une partie d'un substrat, dans lequel la composition durcie par rayonnement et identifiant une couleur a au moins un fragment chromophore lié par covalence à au moins un autre composant de la composition durcie par rayonnement et identifiant une couleur, ledit procédé comprenant les étapes consistant à :
fournir un substrat ;
fournir une composition durcissable par rayonnement selon la revendication 94 ;
appliquer la composition durcissable par rayonnement selon la revendication 94 sur au moins une partie du substrat ; et
soumettre la composition appliquée, pendant un laps de temps approprié, à un rayonnement ayant une longueur d'onde et une intensité appropriées pour provoquer le durcissement de la composition en la composition durcie par rayonnement identifiant une couleur.

100. Procédé selon la revendication 99, dans lequel le substrat est choisi dans l'ensemble constitué de (i) une fibre optique ayant un coeur et une gaine entourant le coeur, (ii) une fibre optique ayant un coeur, une gaine entourant le coeur et un ou plusieurs revêtements polymères sur la gaine, (iii) une pluralité de fibres optiques disposées en série et (iv) un ruban de fibres optiques.

101. Concentré de colorant selon la revendication 93, ledit concentré de colorant comprenant plus de 5 % en poids de fragment chromophore par rapport au poids total du concentré de colorant.

102. Composition durcissable par rayonnement, comprenant :
(a) un oligomère durcissable par rayonnement ne contenant pas de chromophore ; et
(b) un concentré de colorant selon la revendication 101.

103. Concentré de colorant selon la revendication 93, ledit concentré de colorant comprenant de 10 % en poids à 35 % en poids de fragment chromophore par rapport au poids total du concentré de colorant.

104. Composition durcissable par rayonnement, comprenant :
(a) un oligomère durcissable par rayonnement ne contenant pas de chromophore ; et
(b) un concentré de colorant selon la revendication 103.

105. Concentré de colorant comprenant un mélange de deux ou plus de deux composés durcissables par rayonnement contenant un chromophore selon la revendication 79 et de l'acrylate de tétrahydrofurfuryle (THFA), dans lequel au moins le fragment chromophore d'un premier composé durcissable par rayonnement contenant un chromophore selon la revendication 79 est différent du fragment chromophore d'un second composé durcissable par rayonnement contenant un chromophore selon la revendication 79.

106. Composition durcissable par rayonnement, comprenant :
(a) un oligomère durcissable par rayonnement ne contenant pas de chromophore ; et
(b) un concentré de colorant selon la revendication 105.

107. Composition durcissable par rayonnement, comprenant :
(a) un oligomère durcissable par rayonnement ne contenant pas de chromophore ; et deux ou plus de deux de
(b) un composé durcissable par rayonnement contenant un chromophore selon la revendication 6 ;
(c) un composé durcissable par rayonnement contenant un chromophore selon la revendication 43 ; et
(d) un composé durcissable par rayonnement contenant un chromophore selon la revendication 79.

108. Concentré de colorant comprenant de l'acrylate de tétrahydrofurfuryle (THFA) et deux ou plus de deux d'un composé durcissable par rayonnement contenant un chromophore selon la revendication 6, un composé durcissable par rayonnement contenant un chromophore selon la revendication 43 et un composé durcissable par rayonnement contenant un chromophore selon la revendication 79.

109. Composition durcissable par rayonnement, comprenant :
(a) un oligomère durcissable par rayonnement ne contenant pas de chromophore ; et
(b) un concentré de colorant selon la revendication 108.

110. Oligomère coloré pour fournir une couleur à un revêtement sur un élément de communication, ledit oligomère coloré comprenant le produit de réaction de :
(a) un oligomère à coiffe terminale isocyanate ; et
(b) un monomère durcissable par rayonnement ayant à la fois (i) une fonctionnalité réactive qui est apte à réagir avec un isocyanate et (ii) une insaturation éthylénique,
ledit oligomère coloré étant pourvu d'une coiffe terminale avec des groupes durcissables par rayonnement au moyen de liaisons covalentes formées par mise en réaction de ladite fonctionnalité réactive (i) dudit monomère (b) durcissable par rayonnement avec un fragment isocyanate dudit oligomère (a) à coiffe terminale isocyanate, et ledit oligomère (a) à coiffe terminale isocyanate est le produit de réaction de :
(c) au moins un composé polyfonctionnel ayant au moins deux groupes aptes à réagir avec un isocyanate ; et
(d) au moins un polyisocyanate, ledit composé polyfonctionnel (c) comprenant au moins un colorant ayant au moins deux fonctionnalités aptes à réagir avec un isocyanate.

111. Oligomère coloré selon la revendication 110, dans lequel ledit colorant est un colorant de type anthraquinone et ledit colorant de type anthraquinone a la formule suivante : 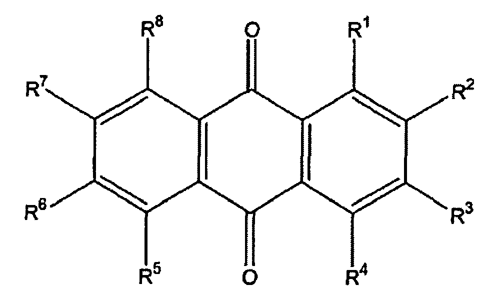 dans laquelle les groupes R, R¹, R², R³, R⁴, R⁵, R⁶, R⁷ et R⁸, sont choisis chacun indépendamment dans l'ensemble constitué de l'hydrogène, un groupe amino, hydroxy, halogéno, nitro, un métal alcalin carboxylé, un métal alcalin sulfaté et un groupe hydrocarbyle contenant éventuellement un ou plusieurs hétéroatomes,
à condition qu'au moins deux groupes R, R¹ à R⁸, aient au moins une fonctionnalité apte à réagir avec un isocyanate, choisie dans l'ensemble constitué de -OH, -NH₂ et -SH, et dans laquelle, en outre, des groupes R contigus parmi R¹ à R⁸ peuvent former un noyau.

112. Oligomère coloré selon la revendication 111, dans lequel de 1 à 3 desdits groupes R, R¹ à R⁸, ont la formule suivante : 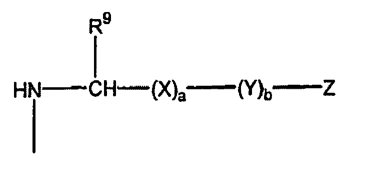 dans laquelle R⁹ est l'hydrogène ou un groupe alkyle ayant de 1 à 12 atomes de carbone, X est -CH₂-, a est un nombre entier de 1 à 6, Y représente des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b vaut 0 ou 1, et Z est un groupe réactif -OH, -NH₂ ou -SH, et dans lequel, en outre, le reste desdits groupes R, R¹ à R⁸, est choisi dans l'ensemble constitué de l'hydrogène, un groupe amino, hydroxy, halogéno, nitro, un métal alcalin carboxylé et un métal alcalin sulfaté.

113. Oligomère coloré selon la revendication 111, dans lequel ledit colorant de type anthraquinone a la formule suivante : 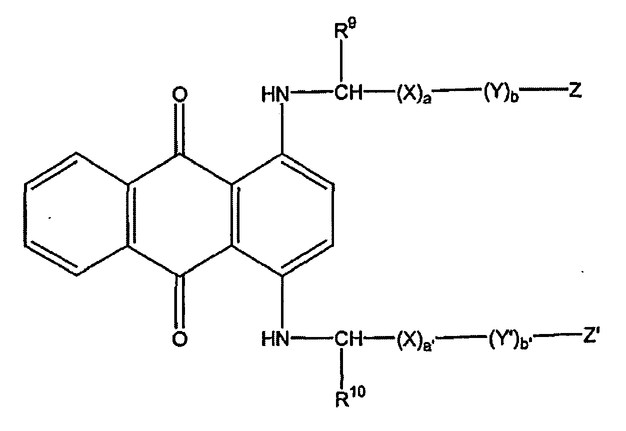 dans laquelle R⁹ et R¹⁰ sont choisis indépendamment parmi l'hydrogène ou un groupe alkyle ayant de 1 à 12 atomes de carbone, X est -CH₂-, a et a' sont indépendamment des nombres entiers de 1 à 6, Y et Y' représentent indépendamment des unités polymères de monomères hydroxyalkylène ou oxyde d'alkylène choisis dans l'ensemble constitué de l'oxyde d'éthylène, l'oxyde de propylène, l'oxyde de butylène, l'oxyde de cyclohexane et le glycidol, b et b' valent indépendamment 0 ou 1, et Z et Z' sont indépendamment des groupes réactifs -OH, -NH₂ ou -SH.

114. Oligomère coloré selon la revendication 113, dans lequel ledit oligomère (a) à coiffe terminale isocyanate est un oligomère d'uréthanne, et ledit colorant de type anthraquinone a la formule suivante : 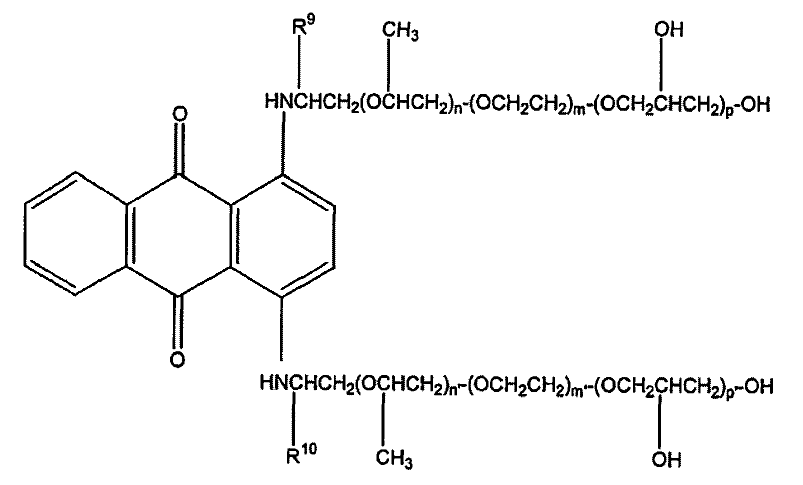 dans laquelle n, n', m, m' , p et p' ont indépendamment une valeur de 0 à 40.

115. Oligomère coloré selon la revendication 113, dans lequel ledit colorant de type anthraquinone a la formule

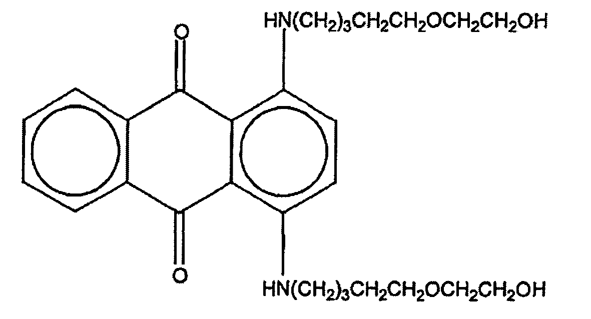

116. Oligomère coloré selon la revendication 111, dans lequel ledit colorant de type anthraquinone est choisi dans l'ensemble constitué de 1,5-bis((3-hydroxy-2,2-diméthylpropyl)amino)-9,10-anthracènedione ; acide 2,2'-((9,10-dihydro-9,10-dioxo-1,5-anthracènediyl)-bis (thio)) bis-benzoïque, ester de 2-hydroxyéthyle ; et 1,5-bis ((2,2-diméthyl-3-hydroxypropyl)amino)-4,8-bis ((4-méthylphényl)thio)anthraquinone.

117. Oligomère coloré selon la revendication 111, dans lequel ledit colorant de type anthraquinone est de la 1,5-bis((2,2-diméthyl-3-hydroxypropyl)amino)-4,8-bis((4-méthyl-phényl)thio)anthraquinone.

118. Oligomère coloré selon la revendication 110, dans lequel un groupe (méth)acrylique représente l'insaturation éthylénique (ii) dans le monomère (b) durcissable par rayonnement.

119. Composition de résine photodurcissable pour former un revêtement durci coloré sur une fibre optique, ladite composition de résine comprenant :
(e) au moins un oligomère d'uréthanne à coiffe terminale (méth)acrylate ;
(f) au moins un photo-initiateur ;
(g) au moins un diluant réactif ; et
(h) au moins un oligomère coloré selon la revendication 110.

120. Fibre optique comprenant un revêtement durci coloré, ledit revêtement durci coloré ayant été formé à partir de la composition de résine photodurcissable selon la revendication 119.

121. Colorant réactif de type anthraquinone pour fournir une couleur à un revêtement sur une fibre optique, ledit colorant réactif de type anthraquinone comprenant un groupe central anthraquinone avec au moins un substituant comprenant un groupe durcissable par rayonnement.

122. Colorant réactif de type anthraquinone selon la revendication 121, dans lequel ledit groupe durcissable par rayonnement est un groupe éthyléniquement insaturé ou un groupe époxy.

123. Colorant réactif de type anthraquinone selon la revendication 121, dans lequel ledit groupe durcissable par rayonnement est un groupe (méth)acrylique.

124. Colorant réactif de type anthraquinone selon la revendication 121, ledit colorant réactif de type anthraquinone ayant la formule suivante : 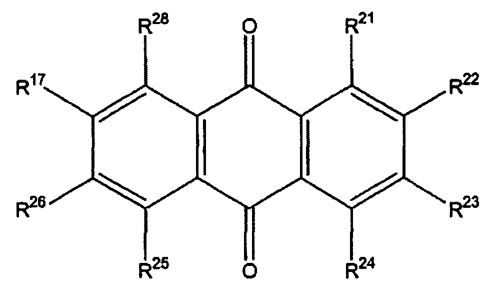 dans laquelle les groupes R, R¹, R², R³, R⁴, R⁵, R⁶, R⁷ et R⁸, sont choisis chacun indépendamment dans l'ensemble constitué de l'hydrogène, un groupe amino, hydroxy, halogéno, nitro, un métal alcalin carboxylé, un métal alcalin sulfaté et un groupe hydrocarbyle contenant éventuellement un ou plusieurs hétéroatomes,
à condition qu'au moins l'un des groupes R, R¹¹ à R¹⁸, ait au moins une fonctionnalité éthyléniquement insaturée durcissable par rayonnement.

125. Colorant réactif de type anthraquinone selon la revendication 124, dans lequel un ou deux desdits groupes R, R¹¹ à R¹⁸, ont une fonctionnalité (méth)acrylique et au moins quatre desdits groupes R, R¹¹ à R¹⁸, sont l'hydrogène.

126. Colorant réactif de type anthraquinone selon la revendication 124, ledit colorant réactif de type anthraquinone ayant l'une des formules suivantes : 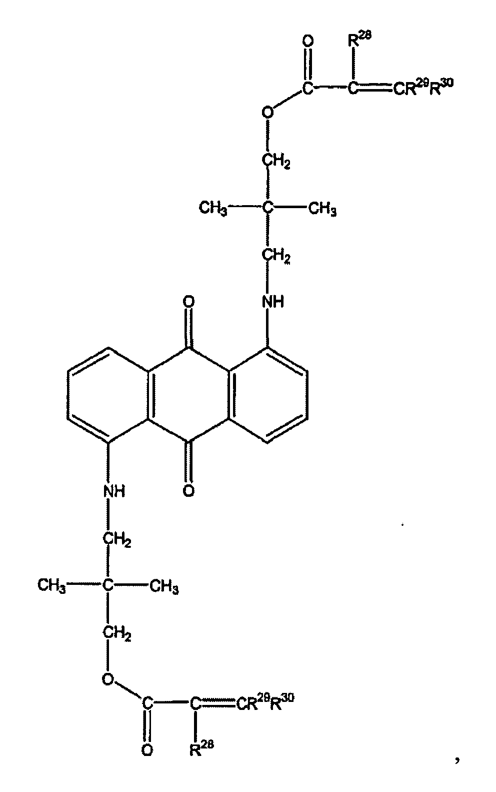 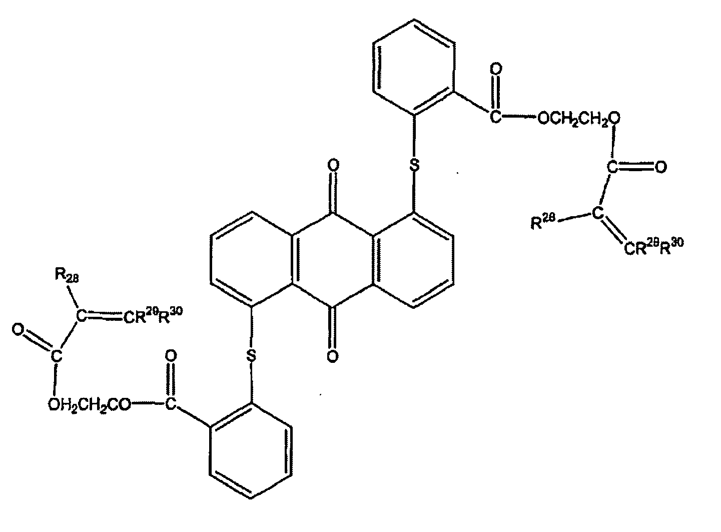 , ou 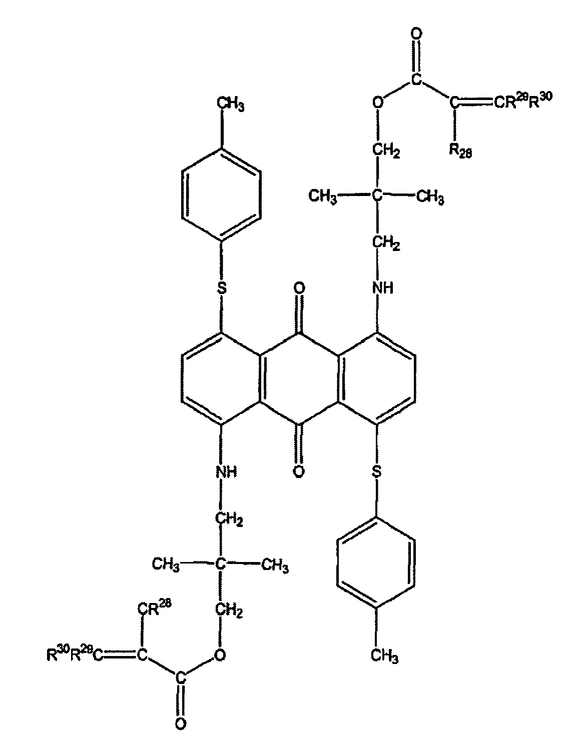 dans lesquelles R²⁹, R³⁰, R³¹, R³², R³³ et R³⁴ sont identiques ou différents et sont indépendamment l'hydrogène ou un groupe alkyle en C₁ à C₆ éventuellement substitué par un ou plusieurs substituants choisis dans l'ensemble constitué de -OH, -NH₂, -SH, -NO₂, -CN et un halogène.

127. Composition de résine photodurcissable pour former un revêtement durci coloré sur une fibre optique, ladite composition de résine comprenant :
(a) au moins un oligomère d'uréthanne à coiffe terminale (méth)acrylate ;
(b) au moins un photo-initiateur ;
(c) au moins un diluant réactif ; et
(d) au moins un colorant réactif de type anthraquinone selon la revendication 124.

128. Fibre optique comprenant un revêtement durci coloré, ledit revêtement durci coloré ayant été formé à partir de la composition de résine photodurcissable selon la revendication 127.
